# EUROPEAN PATENT APPLICATION

(11) **EP 4 276 133 A1**
(43) Date of publication of application: **15.11.2023**
(21) Application number: 23152301.0
(22) Date of filing: 18.01.2023
(51) Int. Cl.: C08G 63/64, C08L 67/00, H01M 4/62, C08G 63/08, C08G 64/02

(54) **POLYMER, ELECTROLYTE AND BATTERY**

(30) Priority: 25.01.2022 US 202263302587 P
(71) Applicant: Largan Medical Co., Ltd., Taichung City 408 (TW)
(72) Inventor: CHEN, Wei-Yuan, Taichung City (TW); CHEN, Po-Tsun, Taichung City (TW); CHEN, Rih-Sian, Taichung City (TW); LU, Yi-Rou, Taichung City (TW); TSAI, Cheng-Yu, Taichung City (TW); TENG, Chun-Hung, Taichung City (TW)
(74) Representative: Lang, Christian

(57) **Abstract**

A polymer, which is a composition of a battery, is polymerized by a polymeric precursor, and the polymeric precursor includes at least two or at least three monomers. Each of the monomers is a lactone, a lactone cyclic ester or a carbonate ester. The polymer includes a polyester, and the polyester is a straight chain.

## Description

### BACKGROUND

### Technical Field

The present disclosure relates to a polymer, an electrolyte and a battery. More particularly, the present disclosure relates to a polymer with high molecular weight, which is polymerized by a polymeric precursor and is colloidal, as well as an electrolyte and a battery including the aforementioned polymer.

### Description of Related Art

The current goals of research and development of batteries are to achieve the demands of high energy density, high working voltage, fast charging speed, and long cycle life. Thus, the performance under high-temperature conditions and the safety of the battery have become the primary issues to be achieved.

The electrolytes used in the current market are mainly liquid electrolytes. However, the liquid electrolyte using organic solvents is easy to volatilize, resulting in the internal volume of the battery expanding, and the electrolyte is also prone to leak. Further, the electrolyte that is not resistant to high temperature is very easy to catch fire and burns under the situation of excessive charging and discharging or in the environment of high temperature and high pressure. Furthermore, when the battery is charged or discharged, due to the influence of the lattice arrangement of material and surface defects thereof, the lithium metal generated therefrom is easy to form lithium dendrites because of the uneven deposition on the electrode surfaces. Accordingly, the separator may be damaged, resulting in a short circuit of the battery, or even worse, catching fire. Moreover, organic solvents will chemically react with the lithium metal to generate irreversible by-products, so that the interface impedance of the battery is increased, and then the ion conduction efficiency will be affected. Accordingly, the capacity, the performance and the life of the battery will be reduced.

Therefore, using the solid electrolytes to replace the conventional liquid electrolytes has become the mainstream trend of future research.

### SUMMARY

According to one aspect of the present disclosure, a polymer is provided. The polymer is a composition of a battery, wherein the polymer is polymerized by a polymeric precursor, and the polymeric precursor includes at least three monomers. Each of the monomers is a lactone, a lactone cyclic ester or a carbonate ester. The polymer includes a polyester, the polyester is a straight chain, an end of the polymer has an inert group, and the polymer is represented by the following structure: B-C, wherein B is the polyester, and C is the inert group.

According to the polymer of the aforementioned aspect, the polymer can be represented by the following structure: A1-B-C, wherein a polymeric precursor of A1 is a monohydric alcohol or a monobasic acid, a carbon number of the monohydric alcohol or a carbon number of the monobasic acid is at least larger than or equal to two, B is the polyester, and C is the inert group.

According to the polymer of the aforementioned aspect, the polymer can be represented by the following structure: C-A2-B-C, wherein a polymeric precursor of A2 is a polyol or a polyacid, a carbon number of the polyol or a carbon number of the polyacid is at least larger than or equal to two, B is the polyester, and C is the inert group.

According to the polymer of the aforementioned aspect, when a total mole number of the lactone and the lactone cyclic ester in the polymeric precursor is Mlc, and a total mole number of the carbonate ester in the polymeric precursor is Me, the following condition can be satisfied: 0 < Mlc/Me ≤ 1.

According to the polymer of the aforementioned aspect, when the total mole number of the lactone and the lactone cyclic ester in the polymeric precursor is Mlc, and the total mole number of the carbonate ester in the polymeric precursor is Me, the following condition can be satisfied: 2 ≤ Mlc/Me < 50.

According to the polymer of the aforementioned aspect, when a number-average molecular weight of the polymer is Mn, the following condition can be satisfied: 100 Dalton ≤ Mn ≤ 3000 Dalton.

According to the polymer of the aforementioned aspect, when a weight-average molecular weight of the polymer is Mw, and the following condition can be satisfied: 100 Dalton ≤ Mw ≤ 3000 Dalton.

According to the polymer of the aforementioned aspect, when the weight-average molecular weight of the polymer is Mw, and the number-average molecular weight of the polymer is Mn, the following condition can be satisfied: 1 < Mw/Mn ≤ 2.0.

According to the polymer of the aforementioned aspect, when a viscosity of the polymer is VC, the following condition can be satisfied: 5 cP < VC < 5500 cP.

According to the polymer of the aforementioned aspect, when a glass transition temperature of the polymer is Tg, the following condition can be satisfied: -80°C < Tg < 0°C.

According to the polymer of the aforementioned aspect, the polymer is without a melting point in a temperature range, and when the temperature range is Tr, the following condition can be satisfied: -80°C < Tr < 20°C.

According to another aspect of the present disclosure, an electrolyte, which is a composition of a battery, includes a polymer and a metal salt. The polymer is polymerized by a polymeric precursor. The polymer is uniformly mixed with the metal salt. The polymeric precursor includes at least three monomers, each of the monomers is a lactone, a lactone cyclic ester or a carbonate ester, and the polymer includes a polyester.

According to the electrolyte of the aforementioned aspect, when an electrical conductivity of the electrolyte is Ci, the following condition can be satisfied: 1×10⁻⁶ S·cm⁻¹ ≤ Ci.

According to the electrolyte of the aforementioned aspect, the electrolyte can further include an additive, wherein the additive is a crown ether.

According to another aspect of the present disclosure, a battery includes the electrolyte of the aforementioned aspect, a positive pole, a negative pole and a separator. The separator is disposed between the positive pole and the negative pole.

According to another aspect of the present disclosure, a polymer is provided. The polymer is a composition of a battery, wherein the polymer is polymerized by a polymeric precursor, and the polymeric precursor includes at least two monomers. Each of the monomers is a lactone, a lactone cyclic ester or a carbonate ester. The polymer includes a polyester, the polyester is a straight chain, and when a number-average molecular weight of the polymer is Mn, the following condition is satisfied: 100 Dalton ≤ Mn ≤ 3000 Dalton.

According to the polymer of the aforementioned aspect, an end of the polymer can have an inert group.

According to the polymer of the aforementioned aspect, the polymer can be represented by the following structure: A1-B-C, wherein a polymeric precursor of A1 is a monohydric alcohol or a monobasic acid, a carbon number of the monohydric alcohol or a carbon number of the monobasic acid is at least larger than or equal to two, B is the polyester, and C is the inert group.

According to the polymer of the aforementioned aspect, the polymer can be represented by the following structure: C-A2-B-C, wherein a polymeric precursor of A2 is a polyol or a polyacid, a carbon number of the polyol or a carbon number of the polyacid is at least larger than or equal to two, B is the polyester, and C is the inert group.

According to the polymer of the aforementioned aspect, when a total mole number of the lactone and the lactone cyclic ester in the polymeric precursor is Mlc, and a total mole number of the carbonate ester in the polymeric precursor is Me, the following condition can be satisfied: 0 < Mlc/Me ≤ 1.

According to the polymer of the aforementioned aspect, when the total mole number of the lactone and the lactone cyclic ester in the polymeric precursor is Mlc, and the total mole number of the carbonate ester in the polymeric precursor is Me, and the following condition can be satisfied: 2 ≤ Mlc/Me < 50.

According to the polymer of the aforementioned aspect, when a weight-average molecular weight of the polymer is Mw, the following condition can be satisfied: 100 Dalton ≤ Mw ≤ 3000 Dalton.

According to the polymer of the aforementioned aspect, when the weight-average molecular weight of the polymer is Mw, and the number-average molecular weight of the polymer is Mn, the following condition can be satisfied: 1 < Mw/Mn ≤ 2.0.

According to the polymer of the aforementioned aspect, when a viscosity of the polymer is VC, the following condition can be satisfied: 5 cP < VC < 5500 cP.

According to the polymer of the aforementioned aspect, when a glass transition temperature of the polymer is Tg, the following condition can be satisfied: -80°C < Tg < 0°C.

According to the polymer of the aforementioned aspect, the polymer is without a melting point in a temperature range, and when the temperature range is Tr, the following condition can be satisfied: -80°C < Tr < 20°C.

According to another aspect of the present disclosure, an electrolyte, which is a composition of a battery, includes a polymer and a metal salt. The polymer is polymerized by a polymeric precursor. The polymer is uniformly mixed with the metal salt. The polymeric precursor includes at least two monomers, each of the monomers is a lactone, a lactone cyclic ester or a carbonate ester, and the polymer includes a polyester.

According to the electrolyte of the aforementioned aspect, when an electrical conductivity of the electrolyte is Ci, the following condition can be satisfied: 1×10⁻⁶ S·cm⁻¹ ≤ Ci.

According to the electrolyte of the aforementioned aspect, the electrolyte can further include an additive, wherein the additive is a crown ether.

According to another aspect of the present disclosure, a battery includes the electrolyte of the aforementioned aspect, a positive pole, a negative pole and a separator. The separator is disposed between the positive pole and the negative pole.

### DETAILED DESCRIPTION

According to one embodiment of one aspect of the present application, a polymer is provided. The polymer is a composition of a battery, the polymer is polymerized by a polymeric precursor, and the polymeric precursor includes at least three monomers. Each of the monomers is a lactone, a lactone cyclic ester or a carbonate ester. The polymer includes a polyester, and the polyester is a straight chain. Therefore, by the arrangements that the polymer is polymerized by at least three monomers, and the polymer being colloidal is served as the electrolyte with high molecular weight, it is favorable for solving the safety problems of volatilizing and leaking of the electrolyte, and a safe working environment for charging and discharging the battery can be ensured. Further, the electrolyte can fully contact the electrode interfaces so as to avoid the interface separation thereof, and then the conductivity and the stability of ions can be effectively improved.

According to another embodiment of one aspect of the present application, a polymer is provided. The polymer is a composition of a battery, the polymer is polymerized by a polymeric precursor, and the polymeric precursor includes at least two monomers. Each of the monomers is a lactone, a lactone cyclic ester or a carbonate ester. The polymer includes a polyester, and the polyester is a straight chain. Therefore, by the arrangement that the electrolyte with high molecular weight is polymerized by the lactone, the lactone cyclic ester or the carbonate ester, it is favorable for solving the safety problems of volatilizing and leaking of the electrolyte, and a safer working environment for charging and discharging the battery can be ensured. Further, the electrolyte can sufficiently contact the electrodes so as to avoid the interface separation thereof, and then the conductivity and the stability of ions can be effectively improved.

In the polymer of the present disclosure, an end of the polymer can have an inert group, and the polymer is represented by the following structure: B-C, wherein B is the polyester, and C is the inert group. Therefore, the end of the polymer of the present disclosure is capped by alkyl groups, alkoxy groups, ester groups, aromatic groups, or other inert groups, so that it is favorable for avoiding the chemical reactions between the electrolyte and the electrode surfaces as well as between the electrolyte and the lithium metal. Thus, the consumption of lithium metal by the by-products such as oxides or sulfides can be reduced, and the formation of metal dendrites can be inhibited, so that the high chemical stability of the electrolyte in the battery can be achieved, and the safety and the cycle life of the battery can be enhanced.

In the polymer of the present disclosure, when a number-average molecular weight of the polymer is Mn, the following condition can be satisfied: 100 Dalton ≤ Mn ≤ 3000 Dalton. Therefore, by controlling the molecular weight thereof, the polymer being colloidal and with high molecular weight can be formed. In the aspect of physical properties, the polymer of the present disclosure can have excellent mechanical properties and high fluidity, and in the aspect of chemical properties, it is favorable for effectively preventing the internal volume of the battery from expanding and the leakage of the electrolyte caused by the volatilization of the electrolyte. Furthermore, the following condition can be satisfied: 100 Dalton ≤ Mn ≤ 2800 Dalton. Furthermore, the following condition can be satisfied: 150 Dalton ≤ Mn ≤ 2600 Dalton. Furthermore, the following condition can be satisfied: 200 Dalton ≤ Mn ≤ 2500 Dalton. Furthermore, the following condition can be satisfied: 250 Dalton ≤ Mn ≤ 2200 Dalton. Furthermore, the following condition can be satisfied: 300 Dalton ≤ Mn ≤ 1800 Dalton.

In the polymer of the present disclosure, the polymer can be represented by the following structure: A1-B-C, wherein a polymeric precursor of A1 is a monohydric alcohol or a monobasic acid. A carbon number of the monohydric alcohol or a carbon number of the monobasic acid can be at least larger than or equal to two, B is the polyester, and C is the inert group. Therefore, by adding the compounds such as monohydric alcohol or the monobasic acid that have a higher carbon number as the initiator of polymerization, the uneven polymerization caused by the difference between the reaction conditions induced by different monomers can be prevented, so that the polymerization can be effectively increased, and a better polymerization reaction temperature can be provided.

In the polymer of the present disclosure, the polymer can be represented by the following structure: C-A2-B-C, wherein a polymeric precursor of A2 is a polyol or a polyacid. A carbon number of the polyol or a carbon number of the polyacid can be at least larger than or equal to two, B is the polyester, and C is the inert group. Therefore, by adding the compounds such as the polyol or the polyacid that have a higher carbon number as the initiator of polymerization, the remaining active functional groups can be capped by the inert group. Thus, it is favorable for avoiding the reaction between the polymer with high molecular weight and the metal salt, so that the production of the by-products that damage the internal structure of the battery can be avoided, and the worsened battery efficiency caused therefrom can be also avoided.

In the polymer of the present disclosure, when a total mole number of the lactone and the lactone cyclic ester in the polymeric precursor is Mlc, and a total mole number of the carbonate ester in the polymeric precursor is Me, the following condition can be satisfied: 0 < Mlc/Me ≤ 1. Therefore, by controlling the composition mass ratio of the polymer so as to facilitate the mixing with the metal salt uniformly, the transmission efficiency of ions can be enhanced. Furthermore, the following condition can be satisfied: 0.05 ≤ Mlc/Me ≤ 1. Furthermore, the following condition can be satisfied: 0.1 ≤ Mlc/Me ≤ 1. Furthermore, the following condition can be satisfied: 0.15 ≤ Mlc/Me ≤ 1. Furthermore, the following condition can be satisfied: 0.1 ≤ Mlc/Me ≤ 0.95. Furthermore, the following condition can be satisfied: 0.1 ≤ Mlc/Me ≤ 0.90. Furthermore, the following condition can be satisfied: 2 ≤ Mlc/Me < 50. Furthermore, the following condition can be satisfied: 2 ≤ Mlc/Me ≤ 45. Furthermore, the following condition can be satisfied: 2 ≤ Mlc/Me ≤ 40. Furthermore, the following condition can be satisfied: 2 ≤ Mlc/Me ≤ 35. Furthermore, the following condition can be satisfied: 2 ≤ Mlc/Me ≤ 30. Furthermore, the following condition can be satisfied: 2 ≤ Mlc/Me ≤ 25.

In the polymer of the present disclosure, when a weight-average molecular weight of the polymer is Mw, the following condition can be satisfied: 100 Dalton ≤ Mw ≤ 3000 Dalton. Therefore, by controlling the molecular weight thereof, the polymer being colloidal and with high molecular weight can be formed. In the aspect of physical properties, the polymer of the present disclosure can have excellent mechanical properties and high fluidity, and in the aspect of chemical properties, it is favorable for effectively preventing the internal volume of the battery from expanding and the leakage of the electrolyte caused by the volatilization of the electrolyte. Furthermore, the following condition can be satisfied: 100 Dalton ≤ Mw ≤ 2800 Dalton. Furthermore, the following condition can be satisfied: 150 Dalton ≤ Mw ≤ 2600 Dalton. Furthermore, the following condition can be satisfied: 200 Dalton ≤ Mw ≤ 2500 Dalton. Furthermore, the following condition can be satisfied: 300 Dalton ≤ Mw ≤ 2200 Dalton. Furthermore, the following condition can be satisfied: 350 Dalton ≤ Mw ≤ 1800 Dalton.

In the polymer of the present disclosure, when the weight-average molecular weight of the polymer is Mw, and the number-average molecular weight of the polymer is Mn, the following condition can be satisfied: 1 < Mw/Mn ≤ 2.0. Therefore, due to the polydispersity of the molecular weight thereof, it is favorable for the polymer to have good mechanical properties of high molecular weight and high fluidity of low molecular weight simultaneously, so that the supporting properties and the adequate wetting properties of the electrolyte can be provided. Furthermore, the following condition can be satisfied: 1 < Mw/Mn ≤ 1.9. Furthermore, the following condition can be satisfied: 1 < Mw/Mn ≤ 1.8. Furthermore, the following condition can be satisfied: 1 < Mw/Mn ≤ 1.7. Furthermore, the following condition can be satisfied: 1 < Mw/Mn ≤ 1.6. Furthermore, the following condition can be satisfied: 1.03 ≤ Mw/Mn ≤ 1.6.

In the polymer of the present disclosure, when a viscosity of the polymer is VC, the following condition can be satisfied: 5 cP < VC < 5500 cP. Therefore, by the low viscosity of the polymer, it is favorable for increasing the transmission rate of the ions, so that the mechanical behavior of the polymer with high molecular weight can be maintained, and the safety of the battery can be enhanced. Furthermore, the following condition can be satisfied: 5 cP ≤ VC ≤ 3500 cP. Furthermore, the following condition can be satisfied: 5 cP ≤ VC ≤ 2000 cP. Furthermore, the following condition can be satisfied: 5 cP ≤ VC ≤ 1000 cP. Furthermore, the following condition can be satisfied: 10 cP ≤ VC ≤ 1000 cP. Furthermore, the following condition can be satisfied: 10 cP ≤ VC ≤ 600 cP.

In the polymer of the present disclosure, when a glass transition temperature of the polymer is Tg, the following condition can be satisfied: -80°C < Tg < 0°C. Therefore, by the lower glass transition temperature of the polymer, it is favorable for reducing the crystallization of the polymer at the room temperature, so that the movement efficiency of ions can be enhanced, and the electrical conductivity of the electrolyte can be increased. Furthermore, the following condition can be satisfied: -80°C ≤ Tg ≤ -5°C. Furthermore, the following condition can be satisfied: -80°C ≤ Tg ≤ -10°C. Furthermore, the following condition can be satisfied: -75°C ≤ Tg ≤ -10°C. Furthermore, the following condition can be satisfied: -75°C ≤ Tg ≤ -15°C. Furthermore, the following condition can be satisfied: -60°C ≤ Tg ≤ -20°C.

In the polymer of the present disclosure, the polymer is without a melting point in a temperature range, and when the temperature range is Tr, the following condition can be satisfied: -80°C < Tr < 20°C. Therefore, because the melting point of the polymer is at a higher temperature, it is favorable for reducing the degree of crystallinity of the polymer and then increasing the movement ability of ions in the interior of the polymer, so that the charge and discharge performance of the battery can be enhanced.

Each of the aforementioned features of the polymer of the present disclosure can be utilized in numerous combinations, so as to achieve the corresponding functionality.

According to one embodiment of another aspect of the present application, an electrolyte is provided. The electrolyte is a composition of a battery, and the electrolyte includes a polymer and a metal salt. The polymer is polymerized by a polymeric precursor. The polymer is uniformly mixed with the metal salt. The polymeric precursor includes at least three monomers, each of the monomers is a lactone, a lactone cyclic ester or a carbonate ester, and the polymer includes a polyester.

According to another embodiment of another aspect of the present application, an electrolyte is provided. The electrolyte is a composition of a battery, and the electrolyte includes a polymer and a metal salt. The polymer is polymerized by a polymeric precursor. The polymer is uniformly mixed with the metal salt. The polymeric precursor includes at least two monomers, each of the monomers is a lactone, a lactone cyclic ester or a carbonate ester, and the polymer includes a polyester.

Therefore, by the arrangements that the major component of the electrolyte is the polymer with high molecular weight, the electrolyte is colloidal at the room temperature and can be uniformly mixed with the metal salt. Thus, the electrolyte of the present disclosure can have good mechanical properties of the solid electrolyte and high ionic conductivity of the liquid electrolyte.

According to the electrolyte of the present disclosure, when an electrical conductivity of the electrolyte is Ci, the following condition can be satisfied: 1×10⁻⁶ S·cm⁻¹ ≤ Ci. Therefore, during the cycles of charging and discharging, it is favorable for providing a rapid ionic conductivity between the electrolyte and the electrolyte interface by high electrical conductivity of ions, so that the battery capacity and the performance thereof can be effectively enhanced. Furthermore, the following condition can be satisfied: 2×10⁻⁶ S·cm⁻¹ ≤ Ci. Furthermore, the following condition can be satisfied: 5×10⁻⁶ S·cm⁻¹ ≤ Ci. Furthermore, the following condition can be satisfied: 8×10⁻⁶ S·cm⁻¹ ≤ Ci. Furthermore, the following condition can be satisfied: 1×10⁻⁵ S·cm⁻¹ ≤ Ci. Furthermore, the following condition can be satisfied: 1.05×10⁻⁵ S·cm⁻¹ ≤ Ci.

According to the electrolyte of the present disclosure, the electrolyte can further include an additive, and the additive can be a crown ether. Therefore, the additive is used as an additive to improve the electrochemical characteristics, so that the stability of the battery during charging and discharging can be enhanced.

According to one embodiment of further another aspect of the present application, a battery is provided. The battery includes the electrolyte according to the aforementioned aspect, a positive pole, a negative pole and a separator. The separator is disposed between the positive pole and the negative pole.

The inert group of the present disclosure can be a low reactive group including an alkyl group (CH₃-), an ether group (-O-), a thioether (-S-O-), a ketone group (-CO-), an ester group (-COO-), an alkanoyl group (-CO), a hydroperoxy group (-OO-), a phenyl group (-Ph), etc. Further, the phenyl group can be the unit such as the phenylalkyl group, the phenylether group, the phenylketo group, the phenylacyl group, the phenylester group, the phenylperoxy group, or the low reactive group including a polycyclic aromatic group. Furthermore, the non-inert groups of the present disclosure are functional groups with higher activity, such as a hydroxy group (-OH), an amine group (-NH₂), a carboxyl group (-COOH), etc.

The monohydric alcohol of the present disclosure is an alcohol including one hydroxyl group, wherein the carbon number of the monohydric alcohol is at least larger than or equal to two, and the hydroxyl group can be the substituent at any position. According to the IUPAC nomenclature, the longest carbon chain including the main functional group is the main chain, and the carbon atom closest to the main functional group is Carbon 1, wherein a number is used to represent the position of one substituent on which of the carbons, and the number can be 1, 2, 3, 4, 5, 6, 7, 8, 9, 10, or other numbers based on the length of the carbon chain. Further, the monohydric alcohol can have any stereochemical structure, such as atropisomers, *cis-trans* isomers, conformational isomers, diastereomers or enantiomers. The monohydric alcohol can include hexan-1-ol and the isomers thereof, such as hexan-2-ol, hexan-3-ol, 2-methylpentan-1-ol, 3-methylpentan-1-ol, 4-methylpentan-1-ol, 2-methylpentan-2-ol, 3-methylpentan-2-ol, 4-methylpentan-2-ol, 2-methylpentan-3-ol, 3-methylpentan-3-ol, 2,2-dimethylbutan-1-ol, 2,3-dimethylbutan-1-ol, 3,3-dimethylbutan-1-ol, 2,3-dimethylbutan-2-ol, 3,3-dimethylbutan-2-ol, or 2-ethylbutan-1-ol. The monohydric alcohol can further include ethanol, propan-1-ol, butan-1-ol, pentan-1-ol, 2-phenoxyethanol, 3-phenoxy-1-propanol (propanediol phenyl ether), 1-phenoxy-2-propanol (propanediol phenyl ether), or a combination thereof.

The monobasic acid of the present disclosure is a carboxylic acid including a monoprotic acid, and there is a carboxyl group in the compound of the carboxylic acid. The carbon number of the monobasic acid is at least larger than or equal to two, and the carboxyl group can be the substituent at any position. According to the IUPAC nomenclature, the longest carbon chain including the main functional group is the main chain, and the carbon atom closest to the main functional group is Carbon 1, wherein a number is used to represent the position of one substituent on which of the carbons, and the number can be 1, 2, 3, 4, 5, 6, 7, 8, 9, 10, or other numbers based on the length of the carbon chain. Further, the monobasic acid can have any stereochemical structure, such as atropisomers, *cis-trans* isomers, conformational isomers, diastereomers or enantiomers. The monobasic acid can include ethanoic acid, propanoic acid, butanoic acid, pentanoic acid, hexanoic acid, heptanoic acid, octanoic acid, nonanoic acid, decanoic acid, benzoic acid, or a combination thereof.

The polyol of the present disclosure is an alcohol including a plurality of hydroxyl groups, wherein the carbon number of polyol is at least larger than or equal to two, and the hydroxyl groups can be the substituents at any position. According to the IUPAC nomenclature, the longest carbon chain including the main functional group is the main chain, and the carbon atom closest to the main functional group is Carbon 1, wherein a number is used to represent the position of one substituent on which of the carbons, and the number can be 1, 2, 3, 4, 5, 6, 7, 8, 9, 10, or other numbers based on the length of the carbon chain. Further, the polyol can have any stereochemical structure, such as atropisomers, *cis-trans* isomers, conformational isomers, diastereomers or enantiomers. The polyol can include ethane-1,2-diol, propane-1,3-diol, butane-1,4-diol, pentane-1,5-diol, hexane-1,6-diol, heptane-1,7-diol, octane-1,8-diol, nonane-1,9-diol, decane-1,10-diol, propane-1,2,3-triol (glycerol), 2-(hydroxymethyl)-2-methylpropane-1,3-diol, 2-ethyl-2-(hydroxymethyl)propane-1,3-diol, 2,2-bis(hydroxymethyl)propane-1,3-diol, D-ribitol, meso-xylitol, (2S,3R,4R,5R)-hexane-1,2,3,4,5,6-hexol, (1R,2S,3r,4R,5S,6s)-cyclohexane-1,2,3,4,5,6-hexol, or a combination thereof.

The polyacid of the present disclosure is a carboxylic acid including a plurality of monoprotic acids, and there is a plurality carboxyl groups in the compound of the carboxylic acid. The carbon number of the polyacid is at least larger than or equal to two, and the carboxyl groups can be the substituents at any position. According to the IUPAC nomenclature, the longest carbon chain including the main functional group is the main chain, and the carbon atom closest to the main functional group is Carbon 1, wherein a number is used to represent the position of one substituent on which of the carbons, and the number can be 1, 2, 3, 4, 5, 6, 7, 8, 9, 10, or other numbers based on the length of the carbon chain. Further, the polyacid can have any stereochemical structure, such as atropisomers, *cis-trans* isomers, conformational isomers, diastereomers or enantiomers. The polyacid can include ethanedioic acid, propanedioic acid, butanedioic acid, pentanedioic acid, hexanedioic acid, heptanedioic acid, octanedioic acid, nonanedioic acid, decanedioic acid, 2-hydroxybutanedioic acid, methylpropanedioic acid, (Z)-but-2-enedioic acid, (E)-but-2-enedioic acid, 1,2-benzenedicarboxylic acid, 1,3-benzenedicarboxylic acid, 1,4-benzenedicarboxylic acid, 2-hydroxybenzoic acid, phenylboronic acid, or a combination thereof.

The lactone of the present disclosure can include the structure of 1-oxacycloalkan-2-one, wherein the lactone is obtained from a compound including a hydroxyl group and a carboxylic acid, and the compound is condensed within the molecule so as to form a cyclic carboxylate monomer. According to the position of the hydroxyl group forming the ring and the number of carbon atoms in the ring, there can be many combinations, such as oxiran-2-one (α-acetolactone), oxetan-2-one (β-propiolactone), oxolan-2-one (γ-butyrolactone), 5-methyloxolan-2-one (γ-valerolactone), oxan-2-on (a-valerolactone), 5-ethyloxolan-2-one (γ-caprolactone), oxepan-2-one (ε-caprolactone), D-glucono-1,5-lactone (δ-gluconolactone), or a combination thereof.

The lactone cyclic ester of the present disclosure can be a polycyclic diester monomer obtained by the esterification condensation of two identical or two different compounds including the hydroxy acid, and the lactone cyclic ester can include 1,4-dioxane-2,5-dione (glycolide), 3,6-dimethyl-1,4-dioxane-2,5-dione (lactide), or a combination thereof. Further, according to the stereoisomers formed based on differences in the spatial arrangement of atoms, the lactide can be further divided to (R,R)-3,6-dimethyl-1,4-dioxane-2,5-dione (LL-lactide), (S,S)-3,6-dimethyl-1,4-dioxane-2,5-dione (DD-lactide), and (meso)-3,6-dimethyl-1,4-dioxane-2,5-dione (DL-lactide). Further, the lactide also can be formed by the carboxylic acid compounds including hydroxyl groups, wherein the carboxylic acid compounds can be directly copolymerized to form polymers without ring-opening reaction, and the lactide can include 2-hydroxyacetic acid (glycolic acid), 3-hydroxypropanoic acid (lactic acid), 4-hydroxybutanoic acid, 5-hydroxyvaleric acid, or a combination thereof.

The carbonate ester of the present disclosure can be the compound in which some or all of the hydrogens of the hydroxyl group in the carbonic acid are substituted by an alkyl group, and the carbonate ester can be divided to cyclic carbonate esters and linear carbonate esters. The linear carbonate ester can include dimethyl carbonate (DMC), diethyl carbonate (DEC), dipropyl carbonate (DPC), ethyl methyl carbonate (EMC), methyl propyl carbonate (MPC), ethyl propyl carbonate (EPC), and methyl 2,2,2-trifluoroethyl carbonate (FEMC). The cyclic carbonate ester can include 1,3-dioxolan-2-one (ethylene carbonate; EC), 4-methyl-1,3-dioxolan-2-one (propylene carbonate; PC), 1,3-dioxan-2-one (trimethylene carbonate; TMC), 4-ethyl-1,3-dioxolan-2-one (1,2-Butylene carbonate), (4R,5S)-4,5-dimethyl-1,3-dioxolan-2-one (cis-2,3-butylene carbonate), 1,2-pentylene carbonate, 2,3-pentylene carbonate, 2H-1,3-dioxol-2-one (vinylene carbonate; VC), 4-vinyl-1,3-dioxolan-2-one (vinylethylene carbonate; VEC), 4-fluoro-1,3-dioxolan-2-one (fluoroethylene carbonate; FEC), trans-4,5-difluoro-1,3-dioxolan-2-one (difluoroethylene carbonate; DFEC), 1,3-dithiole-2-thione (vinylene trithiocarbonate), or a combination thereof.

The ring-opening polymerization of the present disclosure refers to that the chemical bonds of a cyclic compound monomer are broken to form a chain monomer. An initiator can be added in the ring-opening polymerization so as to excite the chemical reactivity of the monomers, so that the free radicals of the monomers are initiated to addition polymerizing and copolymerizing and then to form polymers with longer molecular chains.

The initiator of the present disclosure can be the monohydric alcohol, the monobasic acid, the polyol or the polyacid, such as hexan-1-ol, 3-phenoxy-1-propanol, ethanoic acid, and ethane-1,2-diol. Further, the initiator also can be peroxides and aromatic ketones, including alkyl peroxides, alkyl hydroperoxides, peroxyesters, azo compounds, benzophenones, alkyl aromatic ketones, and benzils, for example, hydrogen peroxide, diphenylperoxyanhydride, acetic nitric peroxyanhydride, 2-(tert-butylperoxy)-2-methylpropane, tert-butyl peroxy-2-ethylhexanoate, 2,2'-azobis(2-methylpropionitrile), 2,2'-azodi(2,4-dimethylvaleronitrile), 1-hydroxycyclohexyl phenyl ketone, bis(2,6-difluoro-3-(1-hydropyrrol-1-YL)phenyl)titanocene, dicarbonylbis (η⁵-cyclopentadienyl) titanium, 2-hydroxy-2-methylpropiophenone, 2-isopropylthioxanthone, ethyl 4-dimethylaminobenzoate, 2,2-bimethoxy-2-phenylacetophenone, phenyl bis(2,4,6-trimethylbenzoyl)-phosphine oxide, 2-methyl-4'-(methylthio)-2-morpholino-propiopheno, 2-benzyl-2-(dimethylamino)-4'-morpholinobutyrophenone, diphenylmethanone, 4-chlorobenzophenone, 4,4'-bis(diethylamino)-benzophenone, 4-(4-methylphenylthio)benzophenone, 2-ethylhexyl 4-(dimethylamino)benzoate, methyl phenylglyoxylate, methyl 2-benzoylbenzoate, phenyl tribromomethyl sulfone, 2,2'-bis(2-chlorophenyl)-4,4',5,5'-tetraphenyl-1,2'-biimidazole, 4-[bis[4-(dimethylamino)phenyl]methyl]-N,N-dimethylaniline, or a combination thereof. The adding ratio of the mole number of the initiator can be adjusted according to the designs thereof, and for example, the adding ratio of the mole number of the initiator is p, and the total ratio of the mole number of the polymeric precursor is q, wherein both p and q can be any integer from 0 to 10, namely 0, 1, 2, 3, 4, 5, 6, 7, 8, 9, and 10.

The polymeric precursor of the present disclosure can include at least one kind of monomer, and the monomer can be selected from the lactone, the lactone cyclic ester or the carbonate ester. The adding ratio of the mole number of each of the monomers can be adjusted according to the designs thereof, and for example, the adding ratio of the mole number of the lactone is a, the adding ratio of the mole number of the lactone cyclic ester is b, and the adding ratio of the mole number of the carbonate ester is c, wherein all of a, b and c can be any integer from 0 to 10, namely 0, 1, 2, 3, 4, 5, 6, 7, 8, 9, and 10.

The catalyst of the present disclosure can facilitate the pathway with lower activation energy to perform so as to accelerate the overall chemical reaction rate and activate the ring-opening polymerization, and the catalyst can be selected from polyester polyols, pyridine compounds, organic amine compounds, organotin compounds, organic titanium compounds, metal salts of organic carbonic acid, inorganic acids, metal salts of inorganic carbonic acid, or a combination thereof. Further, the catalyst can also include tin, zinc, aluminum or other alkali metal including imino (HC-N) or alkimino (RC=N) groups.

The cross-linking agent of the present disclosure can be added during the preparation of the polymer, so that a plurality of the linear molecules will bond and cross-link to each other so as to form a network structure, and then the electrochemical stability of the electrolyte can be enhanced. The cross-linking agent can be selected from cyanate compounds, epoxy resin compounds including ether groups, alcohol compounds, amine compounds, aziridine compounds, or compounds including vinyl groups.

The metal salt of the present disclosure can include the inorganic lithium salts, such as LiPF₆, LiBF₄, LiSbF₆, LiAsF₆, LiClO₄, LiC₄BO₈, LiTFSI, LiFSI, LiNO₃, and LiGaCl₄; the lithium sulfonate salt including fluorine, such as LiCF₃SO₃, LiN(C₂F₅SO₂)₂, LiN(CF₃SO₂)₂, LiC(CF₃SO₂)₃, LiBF₂(C₂O₄) (LiDFOB), and LiB(C₂O₄)₂ (LiBOB), or a combination thereof. Further, the aforementioned metal salts can be presented by many different oxidation states.

The material of the positive pole of the present disclosure can be a lithium composite metal oxide including lithium or at least one metal, such as LiFePO₄, lithium manganese oxides (LiMnO₂, LiMn₂O₄), lithium cobalt oxides (LiCoO₂), lithium nickel oxides (LiNiO₂), lithium nickel cobalt oxides (LiNiCoO₂), lithium nickel manganese oxides (LiNiMnO₄), lithium manganese cobalt oxides (LiCoMnO₂, LiCoMnO₄), lithium nickel manganese cobalt oxides (LiNiCoMnO₂, LiNiCoMnO₄), or a combination thereof. Further, the aforementioned lithium composite metal oxide can be presented by many different oxidation states.

The material of the negative pole of the present disclosure can be lithium metal, carbon-based materials (graphite), silicon-based materials (silicon, silicon oxides, silicon-carbon composites, silicon alloys, or core-shell composites formed of silicon particles and polymers), lithium metal oxides (Li₄Ti₅O₁₂), or a combination thereof.

The separator of the present disclosure can be a thin film having porous structure and can include polyolefin, polyamide, monolayer or multilayer film made of polyester fiber, such as polyethylene (PE), polypropylene (PP), polyethylene terephthalate (PET), acrylonitrile-butadiene-styrene copolymer (ABS), or epoxy resin. Further, the separator also can be a thin film made of an inorganic ceramic composite, wherein the surface of the thin film includes at least one of Mg(OH)₂, MgO, BaSO₄, SnO₂, NiO, CaO, Al₂O₃, ZnO, SiO₂, TiO₂, or a combination thereof. Furthermore, the aforementioned thin film made of an inorganic ceramic composite can be presented by many different oxidation states.

The additive of the present disclosure can be cyclic compounds including ether groups, aromatic compounds, compounds including phosphorus, compounds including boron, inorganic oxides, oxathiolane 2,2-dione, prop-1-ene-1,3-sultone, or a combination thereof.

In the present disclosure, the additive of the cyclic compound including ether groups can be the crown ether, wherein the crown ether is a molecule using the ethyleneoxy group (-CH₂CH₂O-) as the main repeating unit and can include 1,4,7-trioxonane (9-Crown-3), 1,4,7,10-tetraoxacyclododecane (12-Crown-4), 1,4,7,10,13-pentaoxacyclopentadecane (15-Crown-5), 1,4,7,10,13,16-hexaoxacyclooctadecane (18-Crown-6), 1,4,7,10,13,16,19-heptaoxacycloheneicosane (21-Crown-7), 6,7,9,10,17,18,20,21-octahydrodibenzo[b,k][1,4,7,10,13,16]hexaoxacyclooctadecine (Dibenzo-18-crown-6), 1,4,10,13-tetraoxa-7,16-diazacyclooctadecane (Diaza-18-crown-6), or a combination thereof.

In the present disclosure, the additive of the aromatic compound of the present disclosure can include methoxybenzene, 1-ethynyl-4-methoxybenzene, tert-butylbenzene, fluorobenzene, 1,2-difluorobenzene, 1,1'-oxydibenzene, 1,4-diphenylbenzene, 2-fluoro-4-(2-methyl-2-propanyl)aniline, N-[3-(trimethoxysilyl)propyl]aniline, or a combination thereof.

In the present disclosure, the additive of the compound including phosphorus can be tris(trimethylsilyl) phosphite (TMSPi), tris(2,2,2-trifluoroethyl) phosphite, triphenyl phosphite, 1,3,5,2,4,6-triazatriphosphorine, 2-ethoxy-2,4,4,6,6-pentafluoro-2,2,4,4,6,6-hexahydro-, or a combination thereof.

In the present disclosure, the additive of the compound including boron can be trimethyl borate, tris(trimethylsilyl) borate, 2,4,6-trimethyl-1,3,5,2,4,6-trioxatriborinane, or a combination thereof.

In the present disclosure, the additive of the inorganic oxides of the of the present disclosure can be lithium lanthanum zirconium oxides (LiLaZrO), lithium lanthanum zirconium tantalum oxides (LiLaZrTaO), lithium lanthanum titanium oxides (LiLaTiO), LiPO, LiPOF, LiTiPO, LiAIGeP, lithium aluminum phosphate titanium oxides (LiAITiPO), lithium germanium phosphorus sulfide oxides (LiGePSO), lithium tin phosphorus sulfide oxides (LiSnPSO), lead zirconium titanium oxides (PbZrTiO), lead lanthanum zirconium titanium oxides (PbLaZrTiO), barium titanium oxides (BaTiO), or other composite materials. The aforementioned additive of the inorganic oxides can be presented by many different oxidation states, or can be Al₂O₃, TiO₂, SiO₂, SnO₂, NiO, ZnO, CaO, MgO, ZrO₂, CeO₂, Y₂O₃, etc., so that it is favorable for reducing the degree of crystallinity of the electrolyte with high molecular weight so as to increase the electrical conductivity of ions and the physical and mechanical properties of the electrolyte. Thus, the cycle life of the battery can be enhanced.

The straight chain in the present disclosure refers that the monomer are mainly polymerized along one direction to form a long linear polymer.

The molecular weight of the present disclosure is measured by the gel permeation chromatography (GPC), which can be used to measure the molecular weight of the polymer with high molecular weight and the distribution thereof. The GPC is analyzed based on that the macromolecules will be separated due to different sizes through the stationary phase, wherein the molecules with larger molecular weights have shorter residence times, and conversely, the molecules with smaller molecular weights have longer residence times. The polymer will be compared with the molecular weight and the calibration curve of the residence time (or the effluent volume) of the standard so as to obtain the relative molecular weight of the polymer. Thus, the weight-average molecular weight and the number-average molecular weight of the polymer can be obtained, and the molecular weight dispersion of the polymer can be understood.

The weight-average molecular weight of the present disclosure is described from a statistical point of view and can be divided to the overall molecular weight and the individual molecular weight. The overall molecular weight is calculated based on the relationship data between the residence time (or the effluent volume) and the relative concentration, wherein the range to be measured is considered as an overall peak, and the value of the overall peak is calculated by the weighted average. Then, the value of the overall peak will be compared with the calibration curve of the standard so as to obtain the overall molecular weight of the polymer. The individual molecular weight is calculated based on the relationship data between the residence time (or the effluent volume) and the relative concentration, wherein each of the individual peaks in the range to be measured can be clearly distinguished. The distinguishing standard thereof is to obtain the maximum relative concentration within the range to be measured first, and then the peaks with the relative concentrations thereof at least greater than or equal to 5% of the maximum relative concentration are named as, according to the residence times thereof from short to long, Peak 1, Peak 2, Peak 3, Peak 4, Peak 5, Peak 6, Peak 7, Peak 8, Peak 9, Peak 10, and so on. Next, the peaks will be respectively compared with the calibration curve of the standard so as to obtain the individual molecular weight of the polymer. Further, the cut-off standard of the range to be measured is selected based on 2% of the maximum relative concentration, and if the overlapping ratio of the individual peaks is too large to be distinguished, only the overall molecular weight is calculated.

The electrical conductivity of the present disclosure is measured by the electrochemical impedance spectroscopy (EIS), wherein the alternating current of 1 Hz to 1000 kHz and 50 mV amplitude is applied to the polymer or the electrolyte so as to measure the resistor value. Then, the electrical conductivity is calculated by the following formula: Ci = (1/R)×(L/A), wherein Ci (S·cm⁻¹) is the electrical conductivity, R (Ω) is the resistor value, L (cm) is the distance between two electrodes, A (cm²) is the cross-sectional area of the object to be measured and the electrode, and L/A can represent the electrical conductivity coefficient (cm⁻¹).

The electrochemical stability of the present disclosure is measured by the linear sweep voltammetry (LSV), wherein the measurement is cyclically performed at a scan rate of 0.1 V/s under the condition of Li/Li⁺ relative voltage between -5 V and 5 V, and the results of the corresponding changes in the relationship between current and potential can be obtained.

The flash point of the present disclosure can represent the lowest temperature at which a gas volatilized by a substance at one atmospheric pressure is ignited while contacting with an ignition source. The measurement of the flash point can be divided to the open cup method and the closed cup method. The open cup method can be Cleveland open-cup method, and the instrument used can be exemplified by ASTM D92. The closed cup method can be Pensky Martens closed cup method, Tag closed cup method and Small scale closed cup method, and the instruments used can be exemplified by ASTM D56, ASTM D93, and ASTM D7094. When the flash point of the polymer is Fpp (°C), the following condition is satisfied: 80°C < Fpp< 500°C; 100°C < Fpp < 400°C; 120°C < Fpp < 350°C; 150°C < Fpp < 250°C; or 200°C < Fpp < 500°C. When the flash point of electrolyte is Fpe (°C), the following condition can be satisfied: 80°C < Fpe< 500°C; 100°C < Fpe < 400°C; 120°C < Fpe < 350°C; 150°C < Fpe < 250°C; or 200°C < Fpe < 500°C. Compared with the commercially available liquid electrolyte having the range of the flash point of 20°C to 80°C, the electrolyte the colloidal polymer or the colloidal electrolyte of the present disclosure have a higher flash point, which means that it has the ability to withstand high temperatures. Thus, the safety and the cycle life of the battery can be enhanced, and it is favorable for avoiding the internal short circuit of the battery caused by overheating or other safety concerns.

The polymer of the present disclosure can be reprocessed with water removal purification, extraction, high-temperature heating in the atmosphere, high-temperature distillation, high-temperature vacuum drying, low-temperature vacuum drying, etc., so that the polymerization efficiency of monomers can be enhanced, the solubility of the lithium salt can be increased, or the electrical conductivity thereof can be increased.

The molecular weight of the present disclosure can be represented by the number-average molecular weight and the weight-average molecular weight. The number-average molecular weight is the average molecular weight based on the number of molecules and can be calculated by that the total weight of all molecules of polymer with high molecular weight is divided by the total mole number of the molecules. The weight-average molecular weight is the average molecular weight based on the weight and can be calculated by that the molecular weight of each polymer of the polymer with high molecular weight is multiplied by the proportion thereof of the total weight. The ratio of the weight-average molecular weight and the number-average molecular weight can represent the degree of dispersion of the molecular weight of the polymer with high molecular weight, wherein when the ratio is closer to 1, the molecular weight distribution is more uniform, and when the ratio value is larger, the molecular weight distribution is more dispersed.

The battery of the present disclosure can include the positive pole, the negative pole, the separator and the electrolyte. The separator can be disposed between the positive pole and the negative pole, and the electrolyte can be filled with the overall internal structure of the battery.

The battery of the present disclosure can be a primary cell or a secondary cell. The electrochemical carrier of the primary cell or the secondary cell can be at least one of a button carrier, a roll-up carrier or a laminated carrier. The battery can be applied to portable electronic products, such as digital cameras, mobile phones, notebook computers, game console handles, etc., that require lightweight and thin designs, and the battery also can be applied to large-scale power storage industries such as light electric vehicles and electric vehicles.

According to the above descriptions, the specific embodiments and reference drawings thereof are given below so as to describe the present disclosure in detail.

### <Comparative example 1>

Table 1 shows the properties and the detailed data of the molecular weight of the polymer of Comparative example 1 and the properties of the electrolyte including the polymer of Comparative example 1, wherein Me is a total mole number of the carbonate ester in the polymeric precursor, Mlc is a total mole number of the lactone and the lactone cyclic ester in the polymeric precursor, Tg is a glass transition temperature of the polymer, Tm is a melting temperature of the polymer, VC is a viscosity of the polymer, Fpp is a flash point of the polymer, Mw is a weight-average molecular weight of the polymer, Mn is a number-average molecular weight of the polymer, R is a resistor value of the electrolyte, L/A is an electrical conductivity coefficient of the electrolyte, and Ci is an electrical conductivity of the electrolyte.

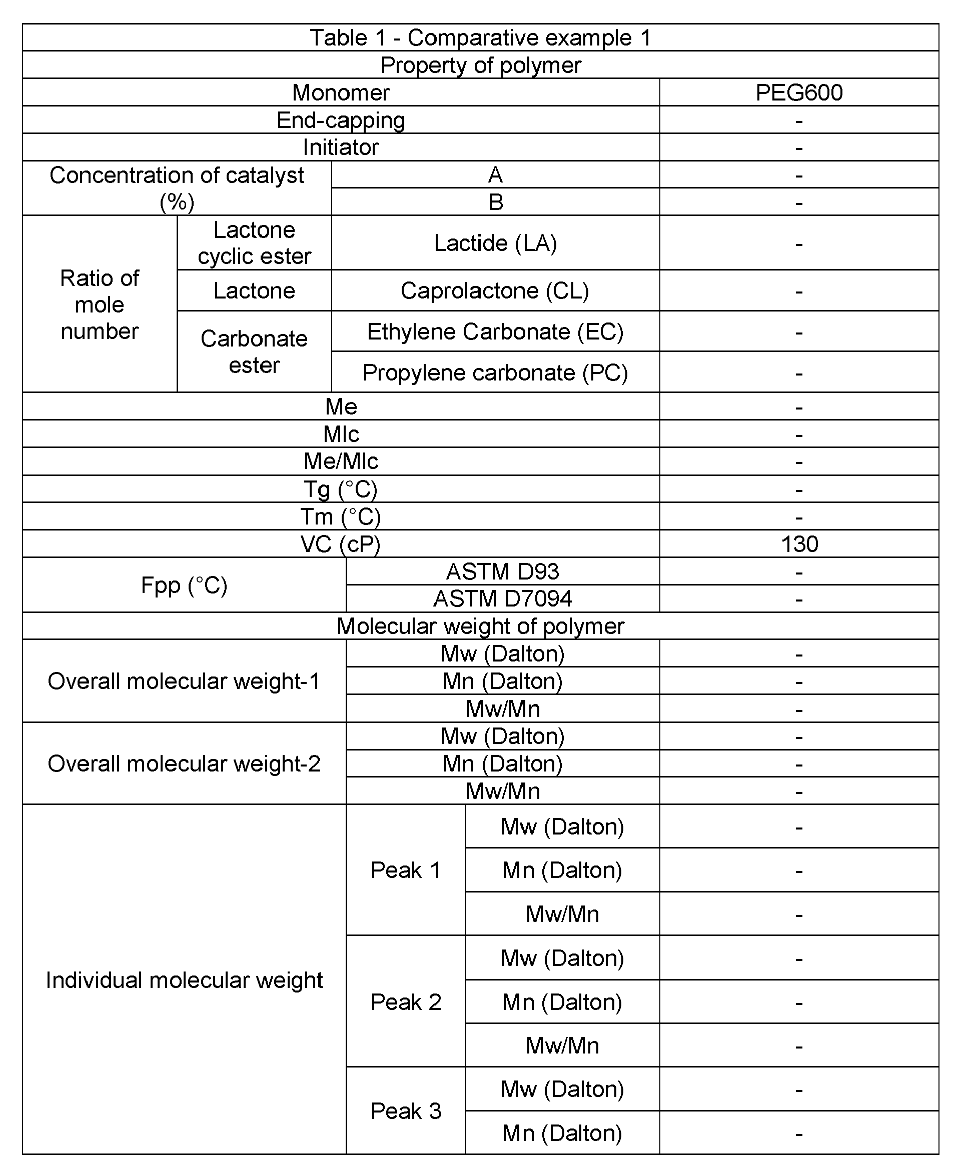

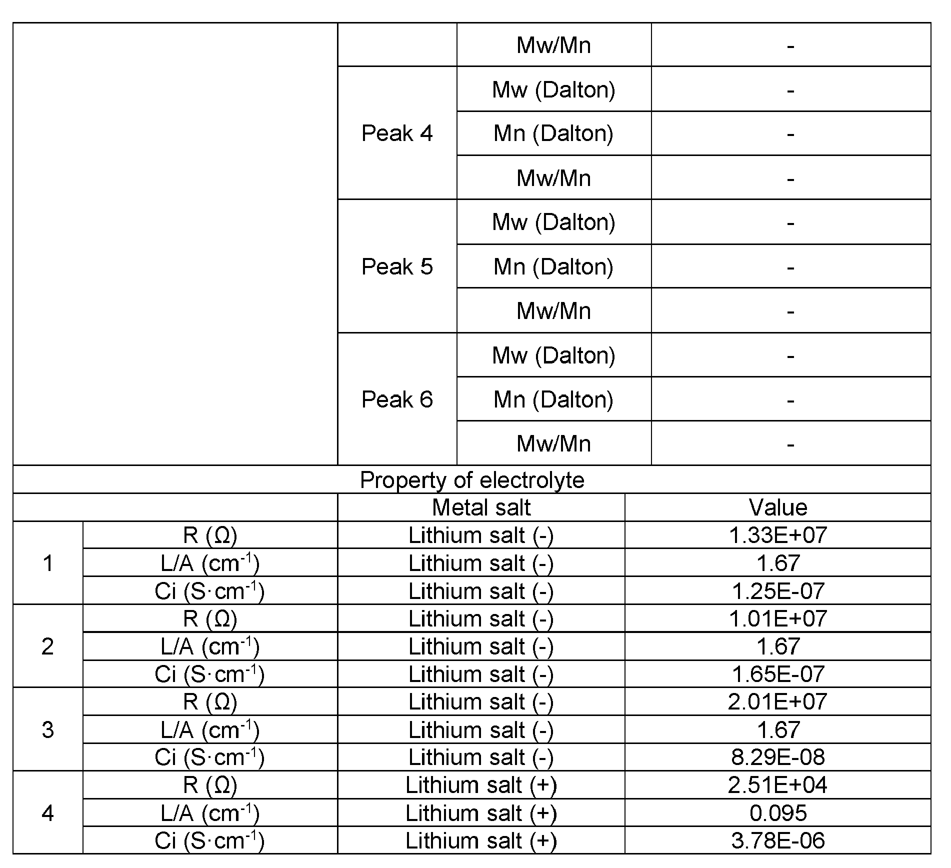

The definitions of parameters shown in tables of the following comparative examples or examples are the same as those shown in Table 1 of Comparative example 1, so that those will not be described again.

### <Comparative example 2>

Table 2 shows the properties and the detailed data of the molecular weight of the polymer of Comparative example 2 and the properties of the electrolyte including the polymer of Comparative example 2.

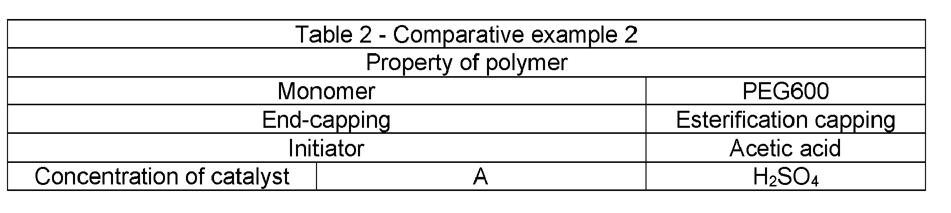

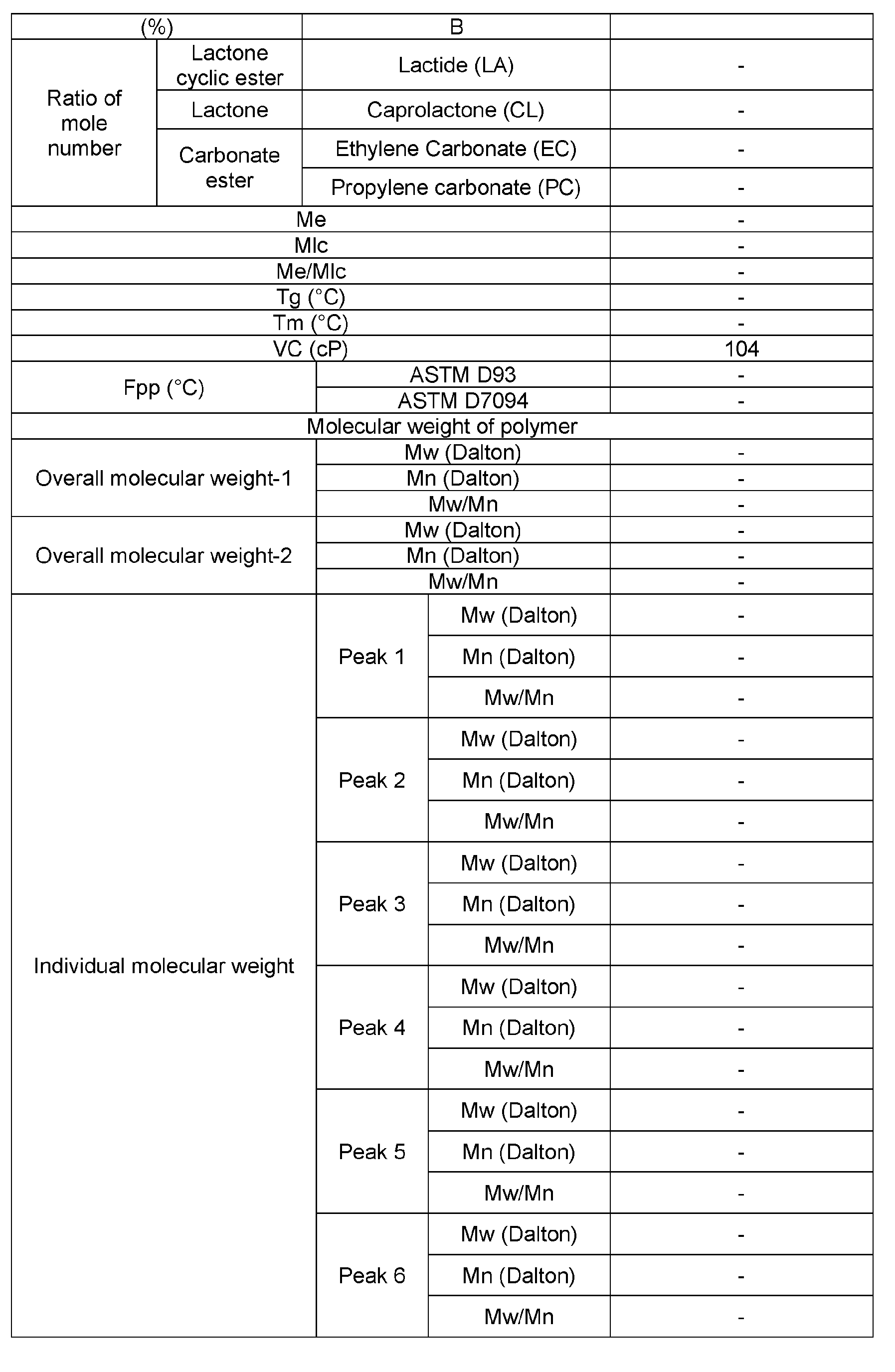

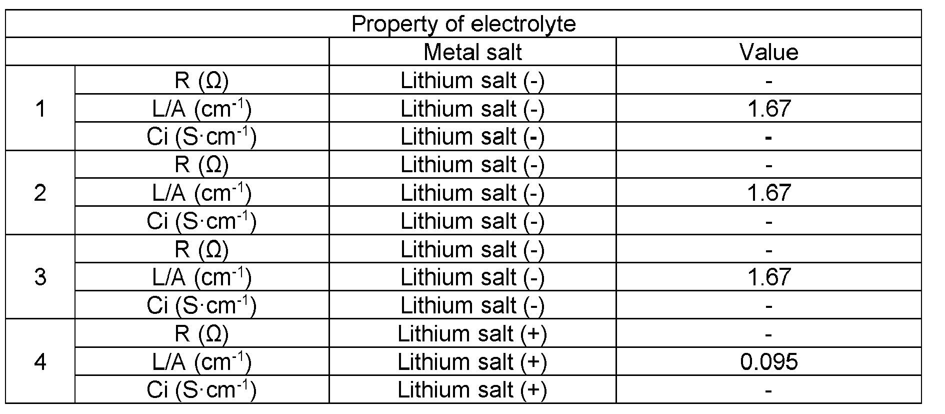

### <Comparative example 3>

Table 3 shows the properties and the detailed data of the molecular weight of the polymer of Comparative example 3 and the properties of the electrolyte including the polymer of Comparative example 3.

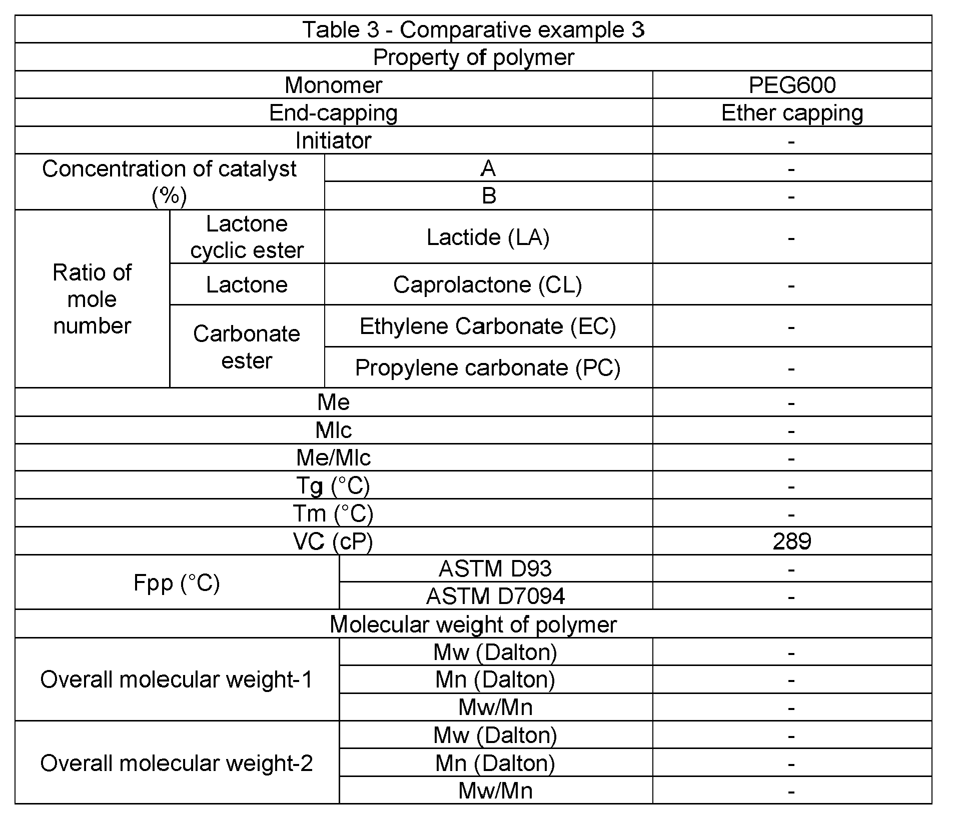

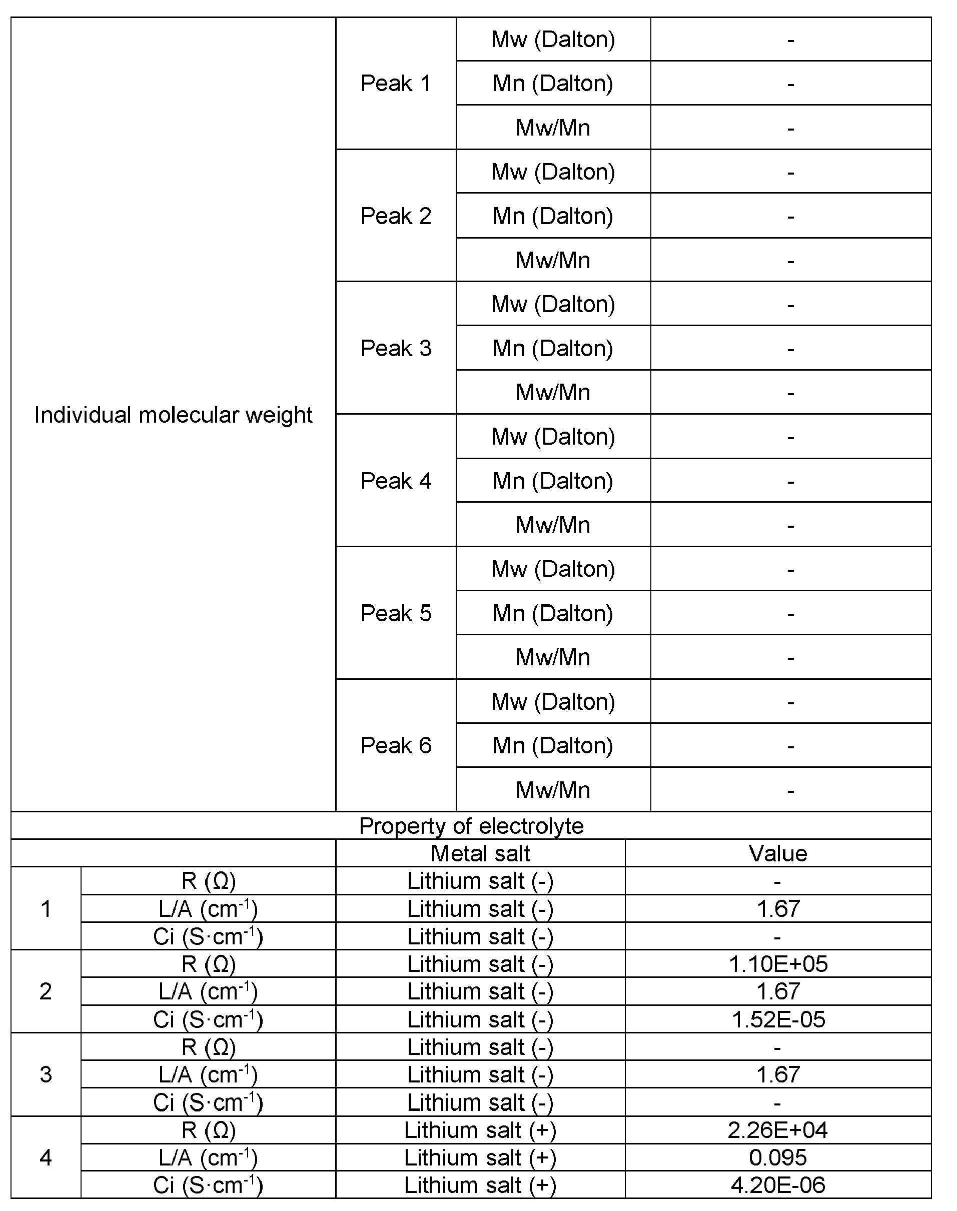

### <Comparative example 4>

Comparative example 4 shows the properties of different monomers that have not been polymerized, wherein Table 4 shows the properties and the detailed data of the molecular weight of the material of Comparative example 4 and the properties of the electrolyte including the material of Comparative example 4.

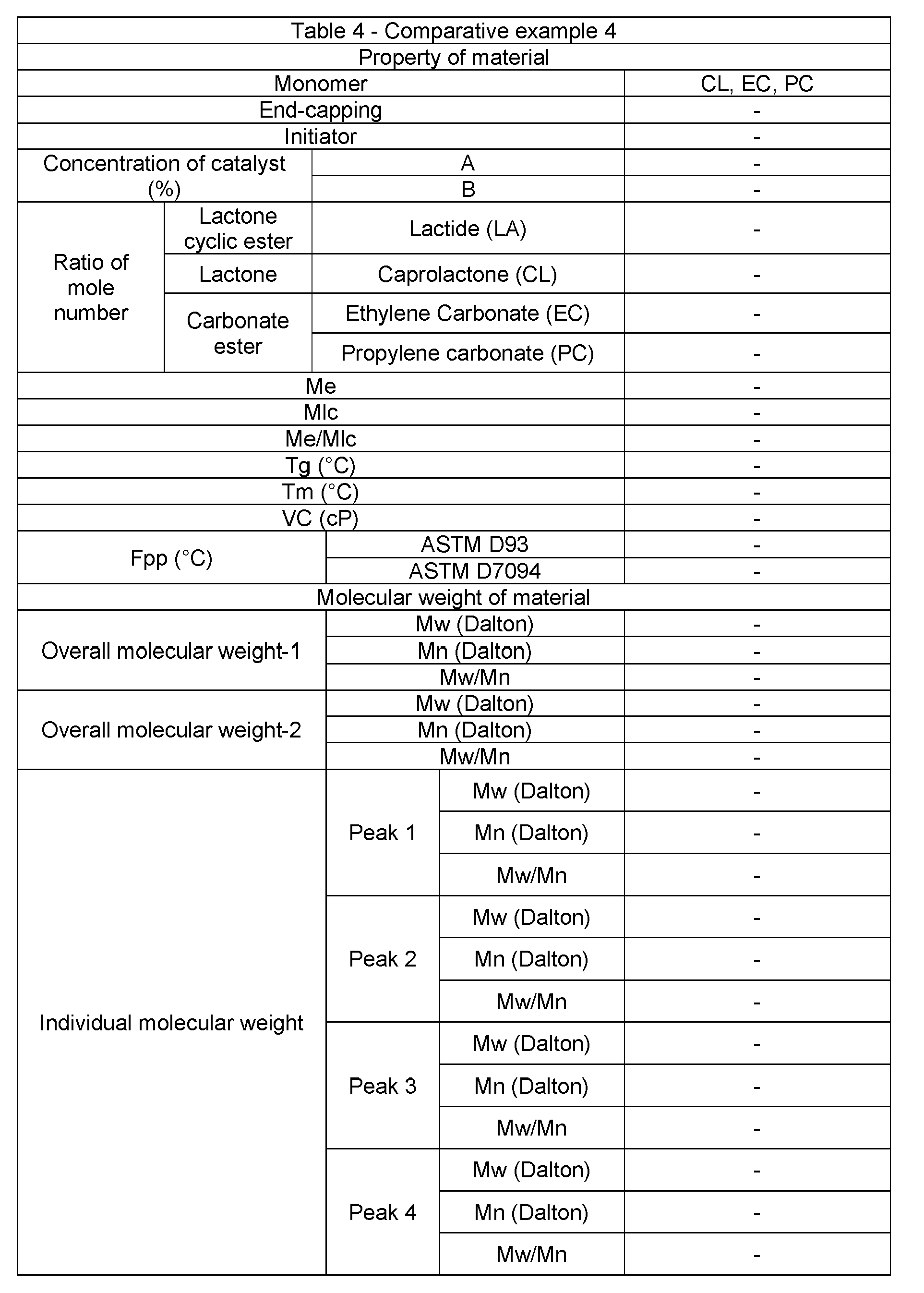

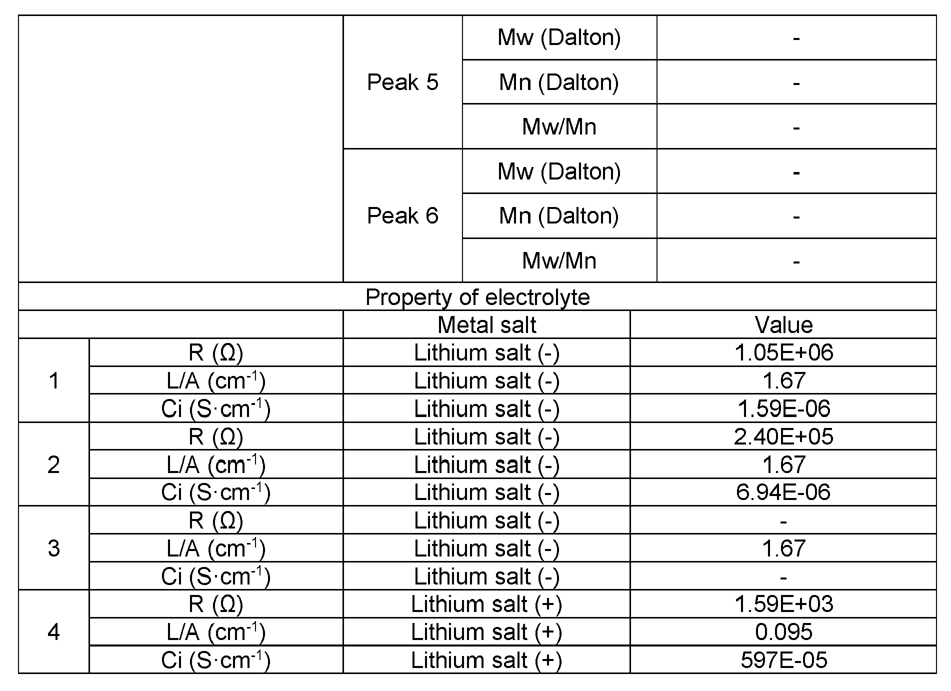

### <Example 1>

Table 5 shows the properties and the detailed data of the molecular weight of the polymer of Example 1 and the properties of the electrolyte including the polymer of Example 1.

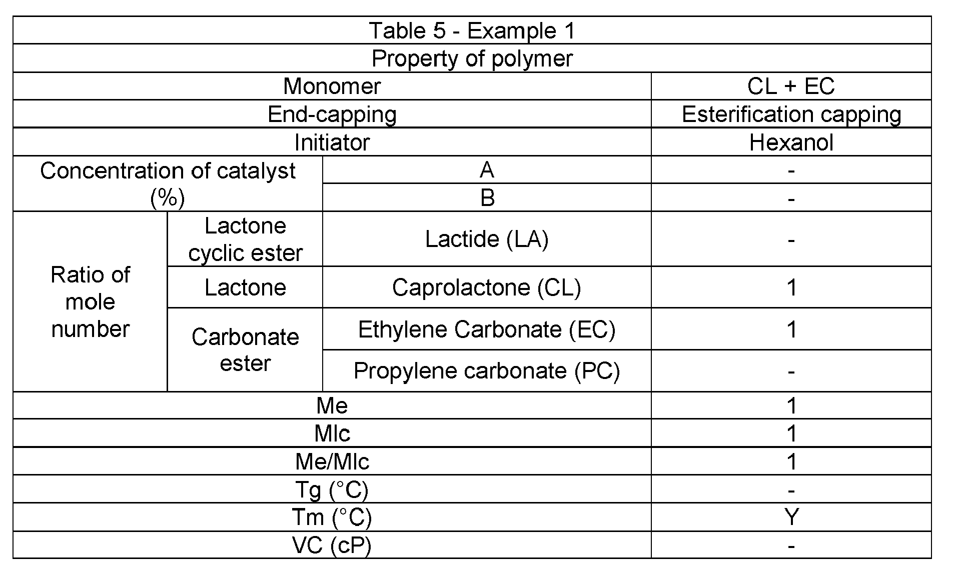

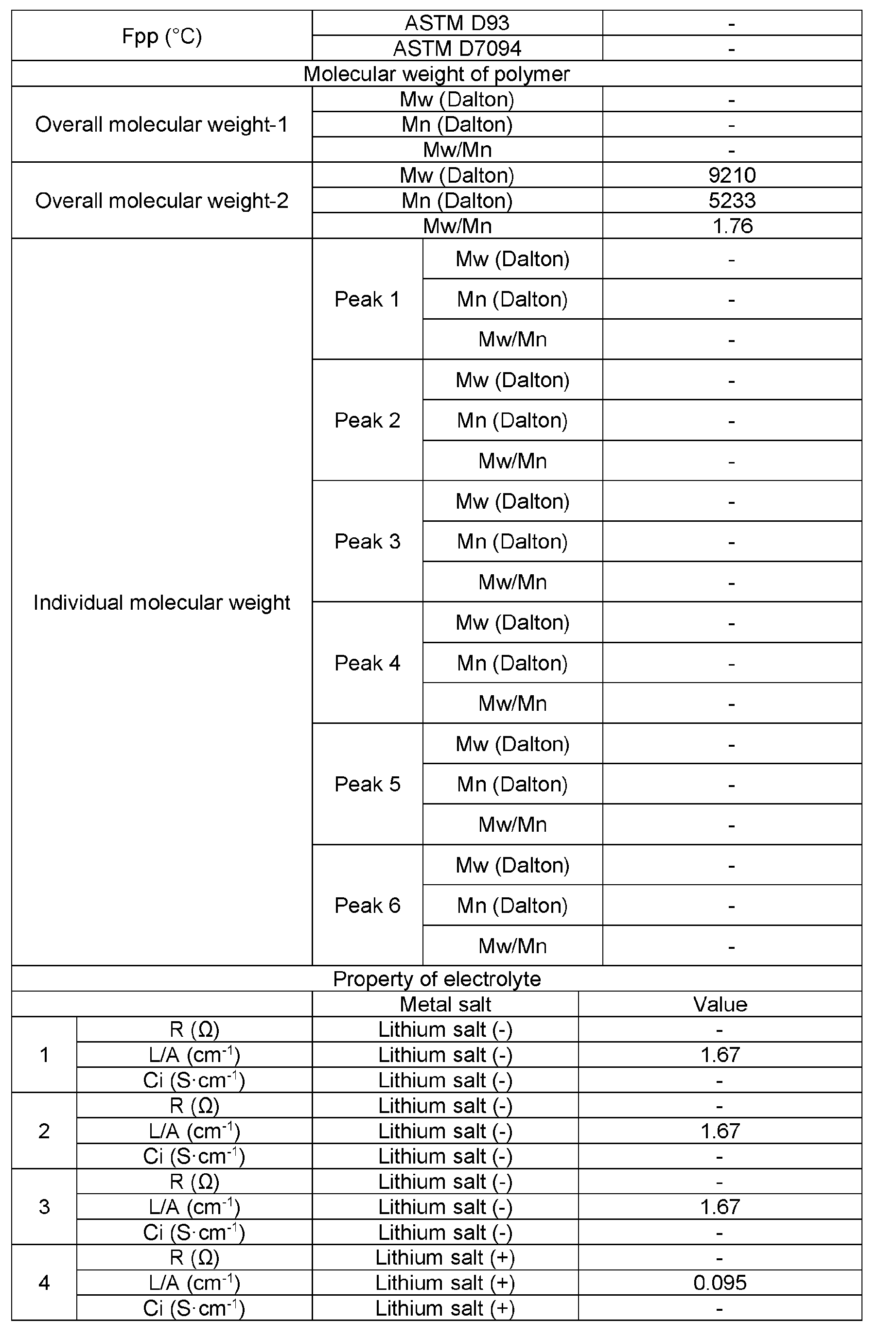

### <Example 2>

Table 6 shows the properties and the detailed data of the molecular weight of the polymer of Example 2 and the properties of the electrolyte including the polymer of Example 2.

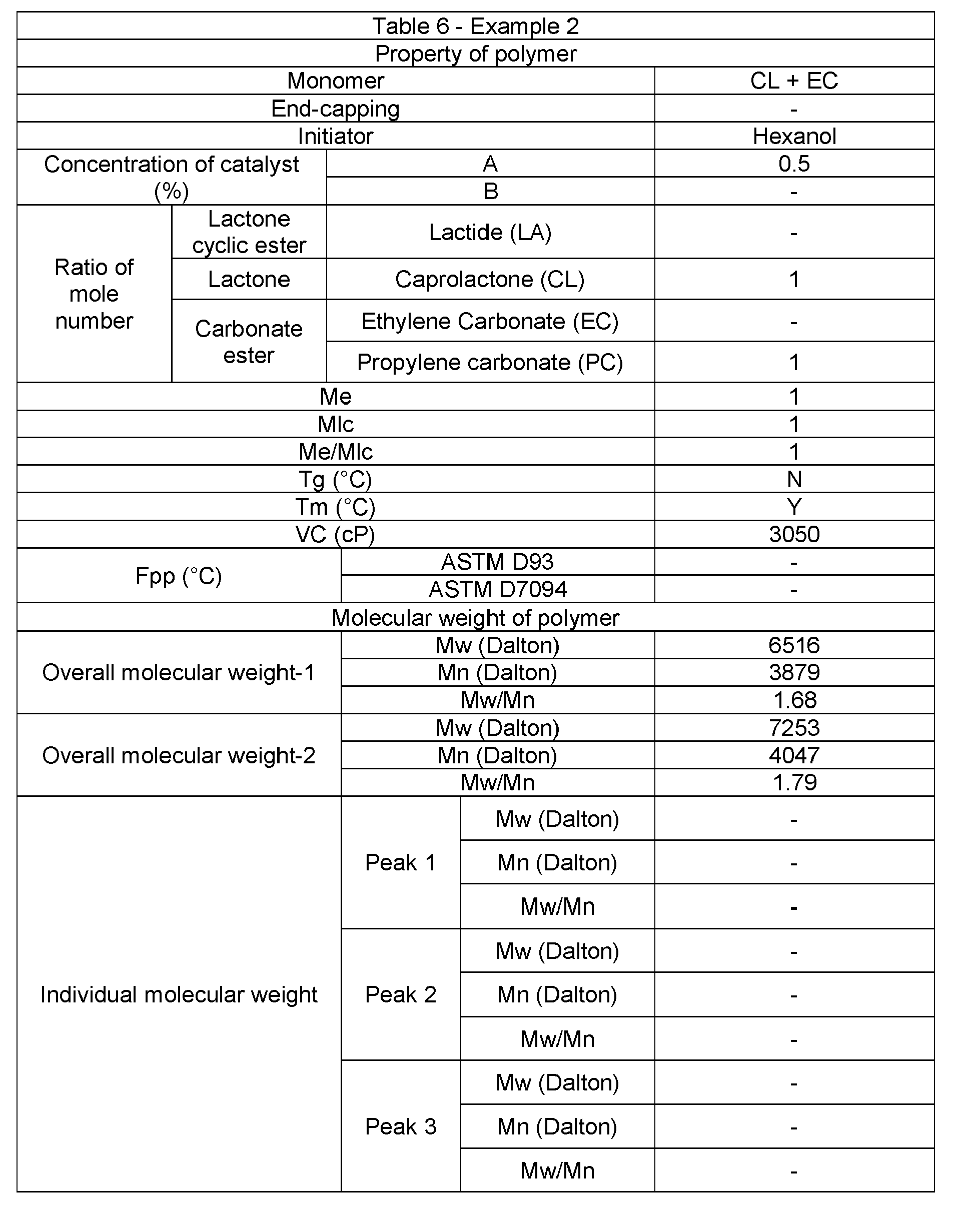

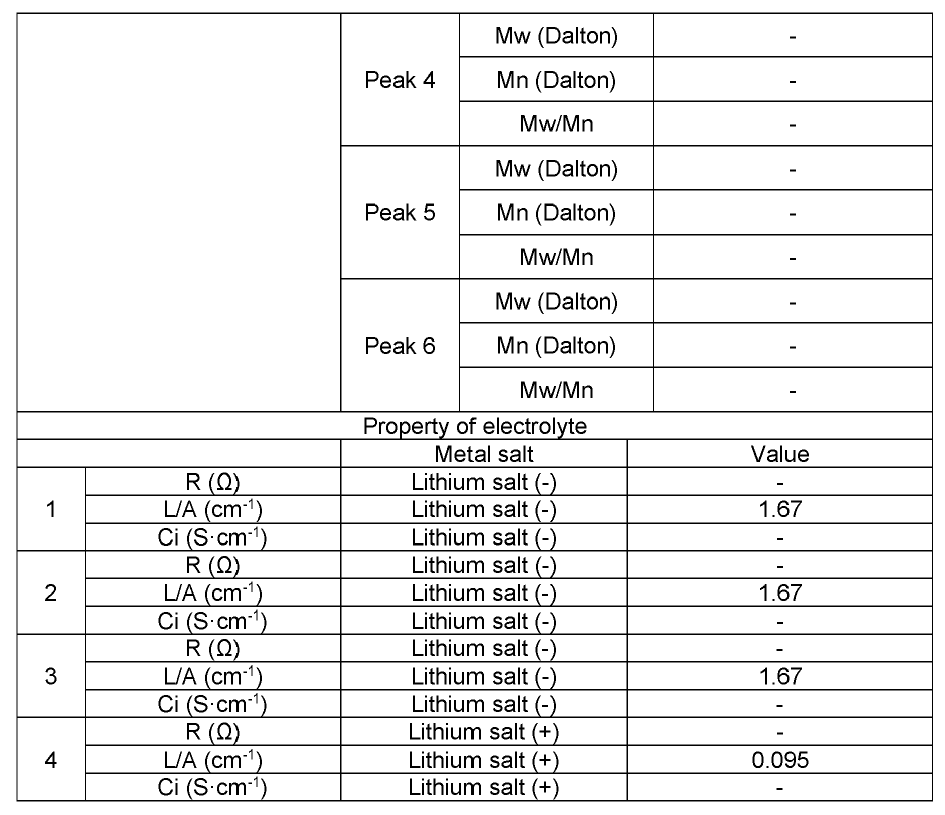

### <Example 3>

Table 7 shows the properties and the detailed data of the molecular weight of the polymer of Example 3 and the properties of the electrolyte including the polymer of Example 3.

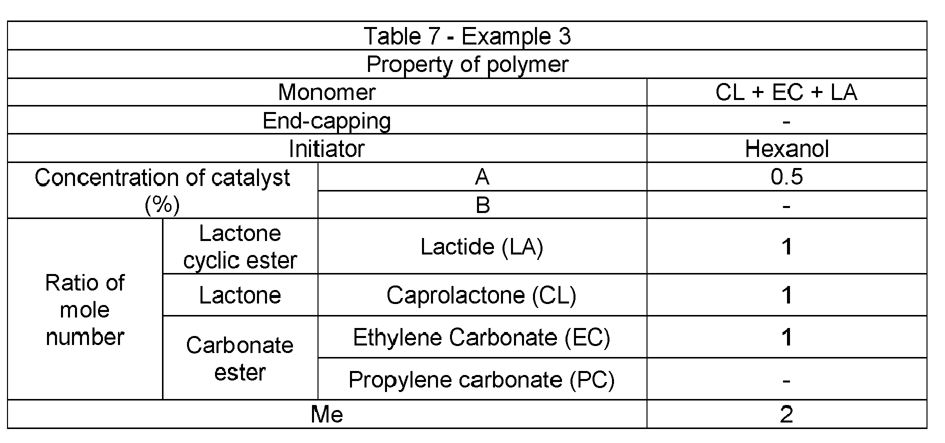

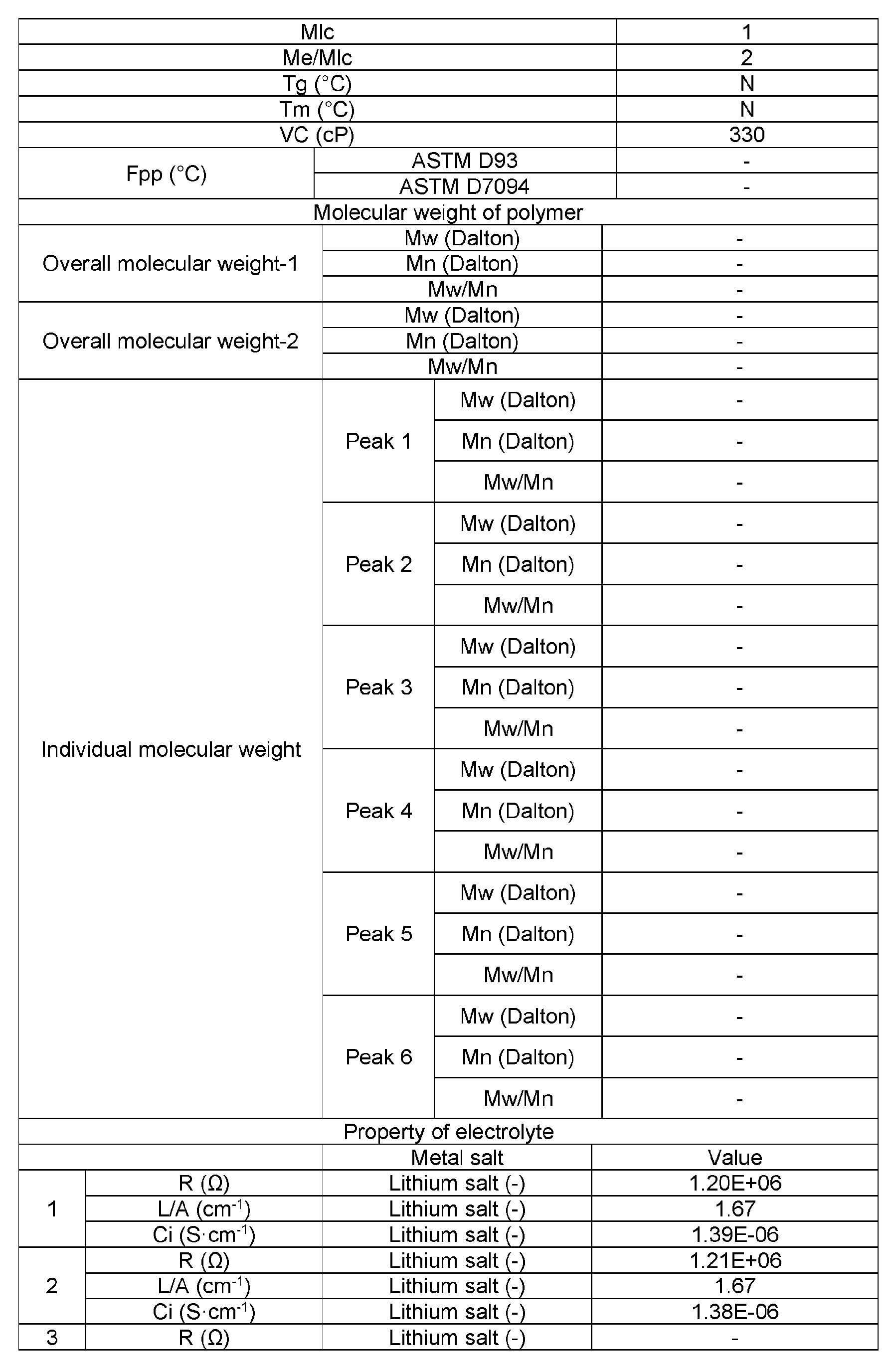

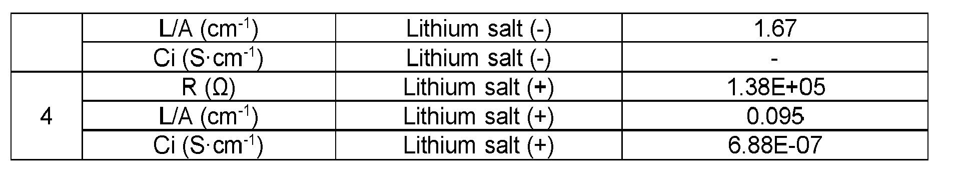

### <Example 4>

Table 8 shows the properties and the detailed data of the molecular weight of the polymer of Example 4 and the properties of the electrolyte including the polymer of Example 4.

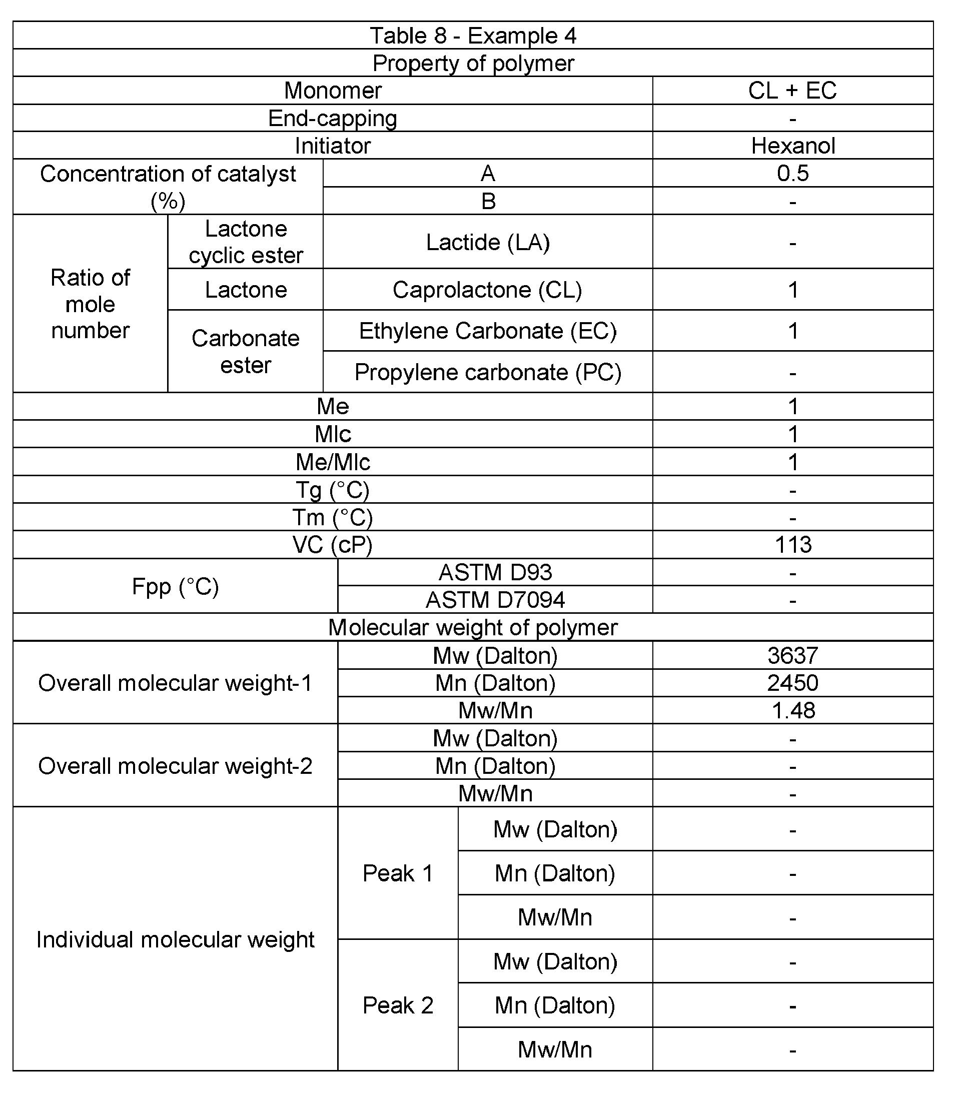

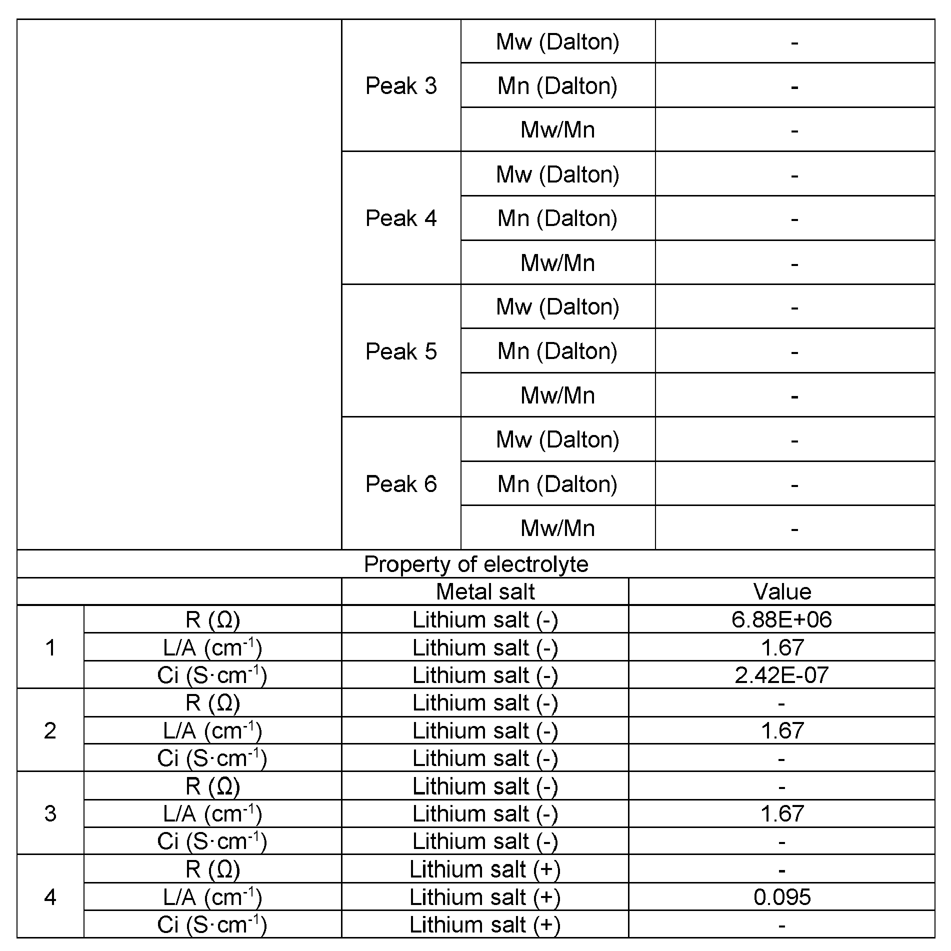

### <Example 5>

Table 9 shows the properties and the detailed data of the molecular weight of the polymer of Example 5 and the properties of the electrolyte including the polymer of Example 5.

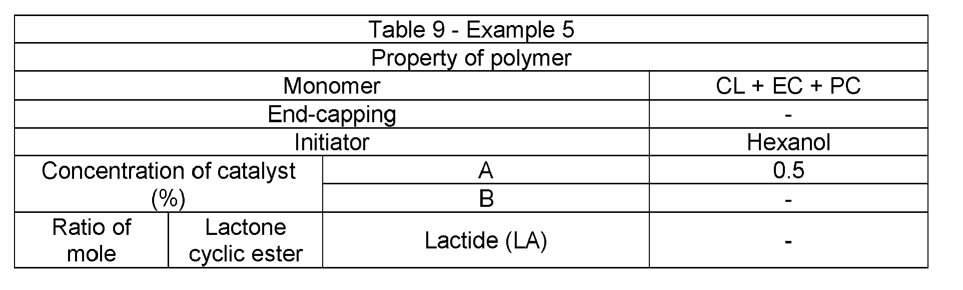

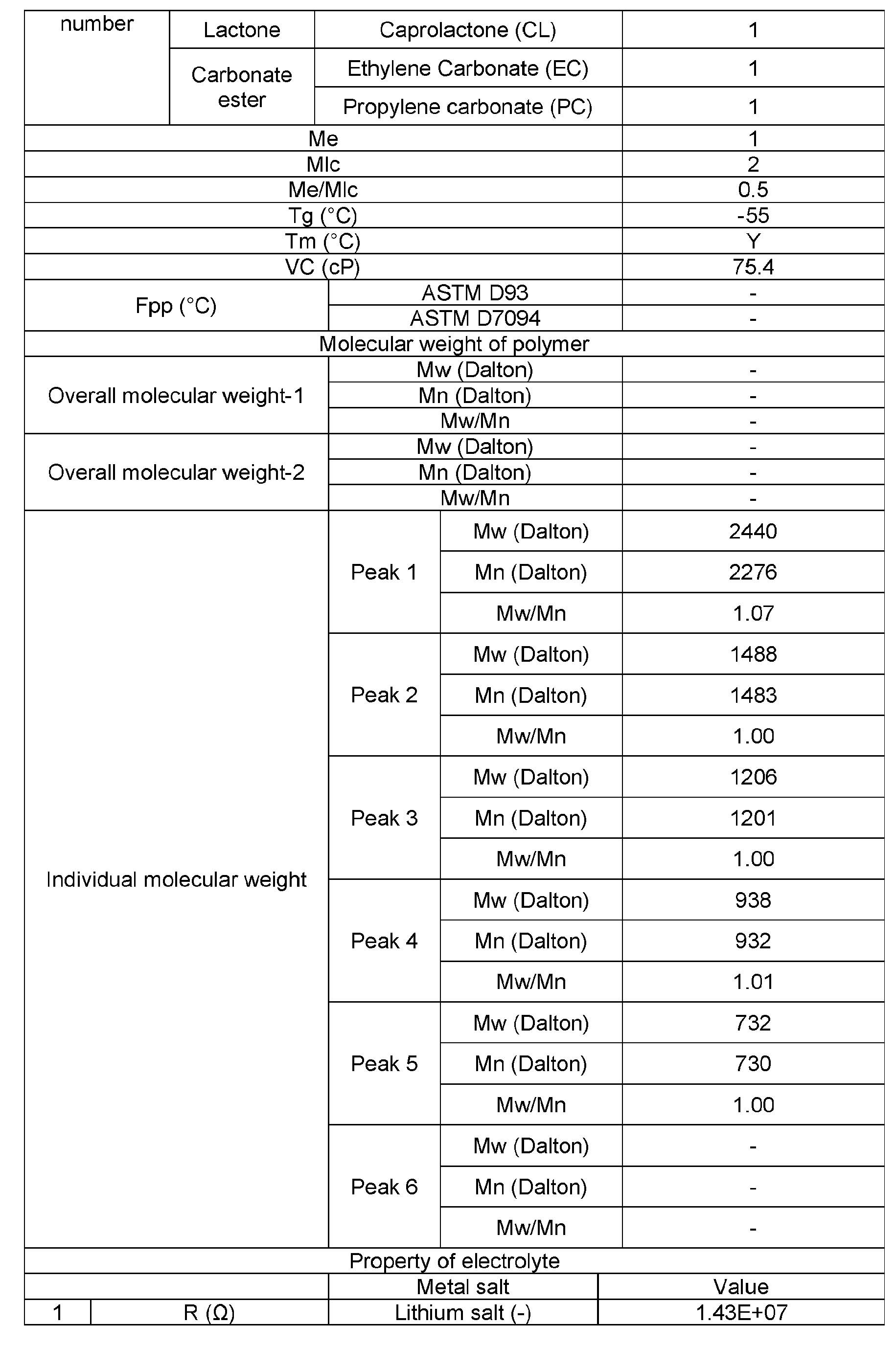

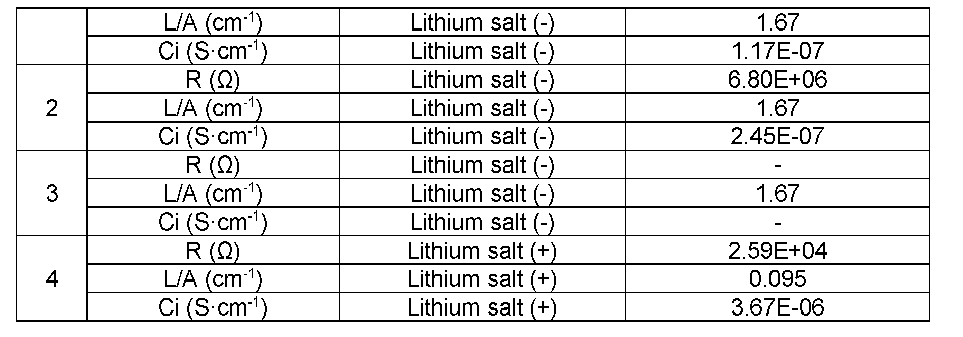

### <Example 6>

Table 10 shows the properties and the detailed data of the molecular weight of the polymer of Example 6 and the properties of the electrolyte including the polymer of Example 6.

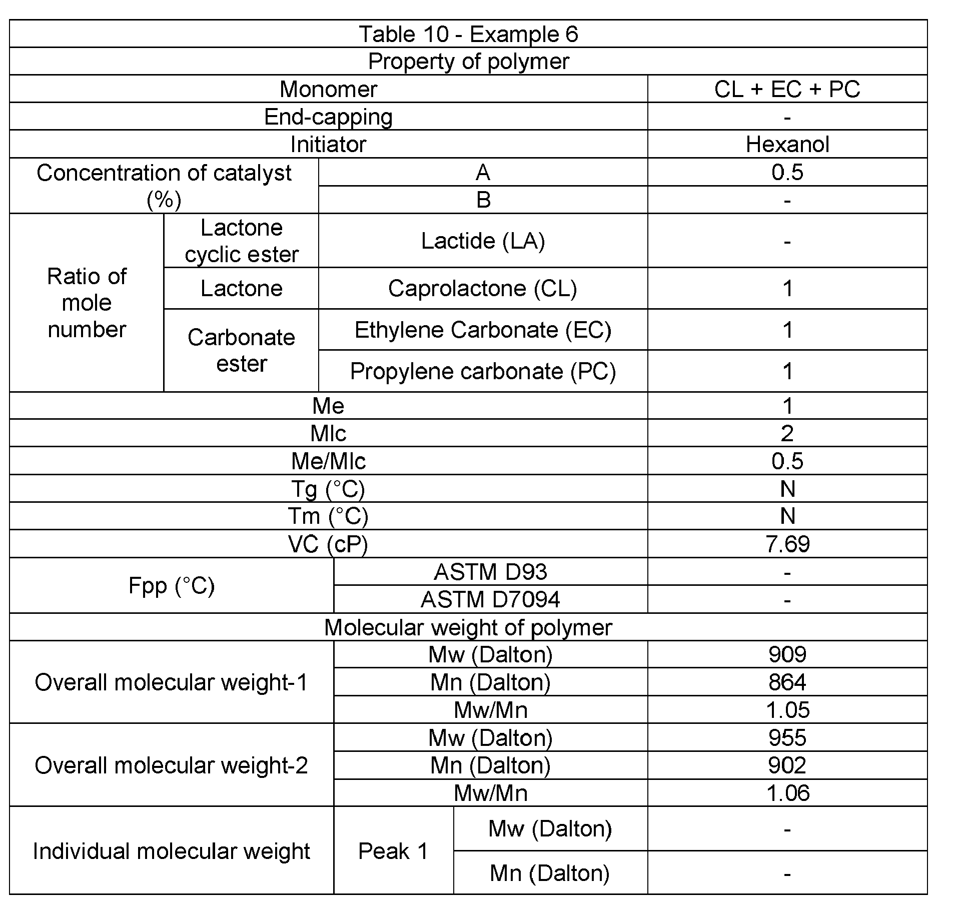

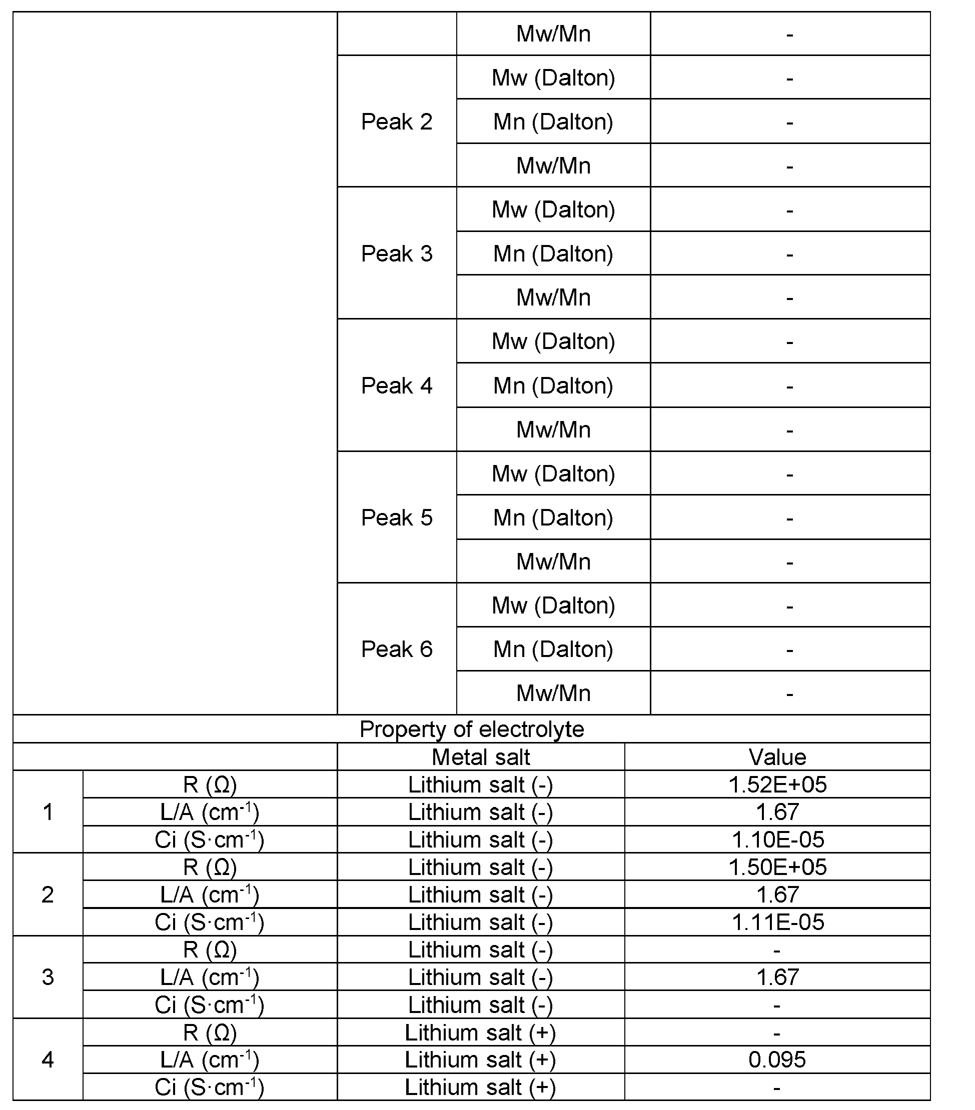

### <Example 7>

Table 11 shows the properties and the detailed data of the molecular weight of the polymer of Example 7 and the properties of the electrolyte including the polymer of Example 7.

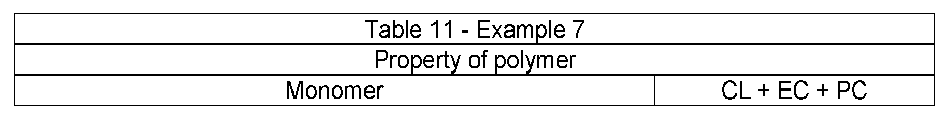

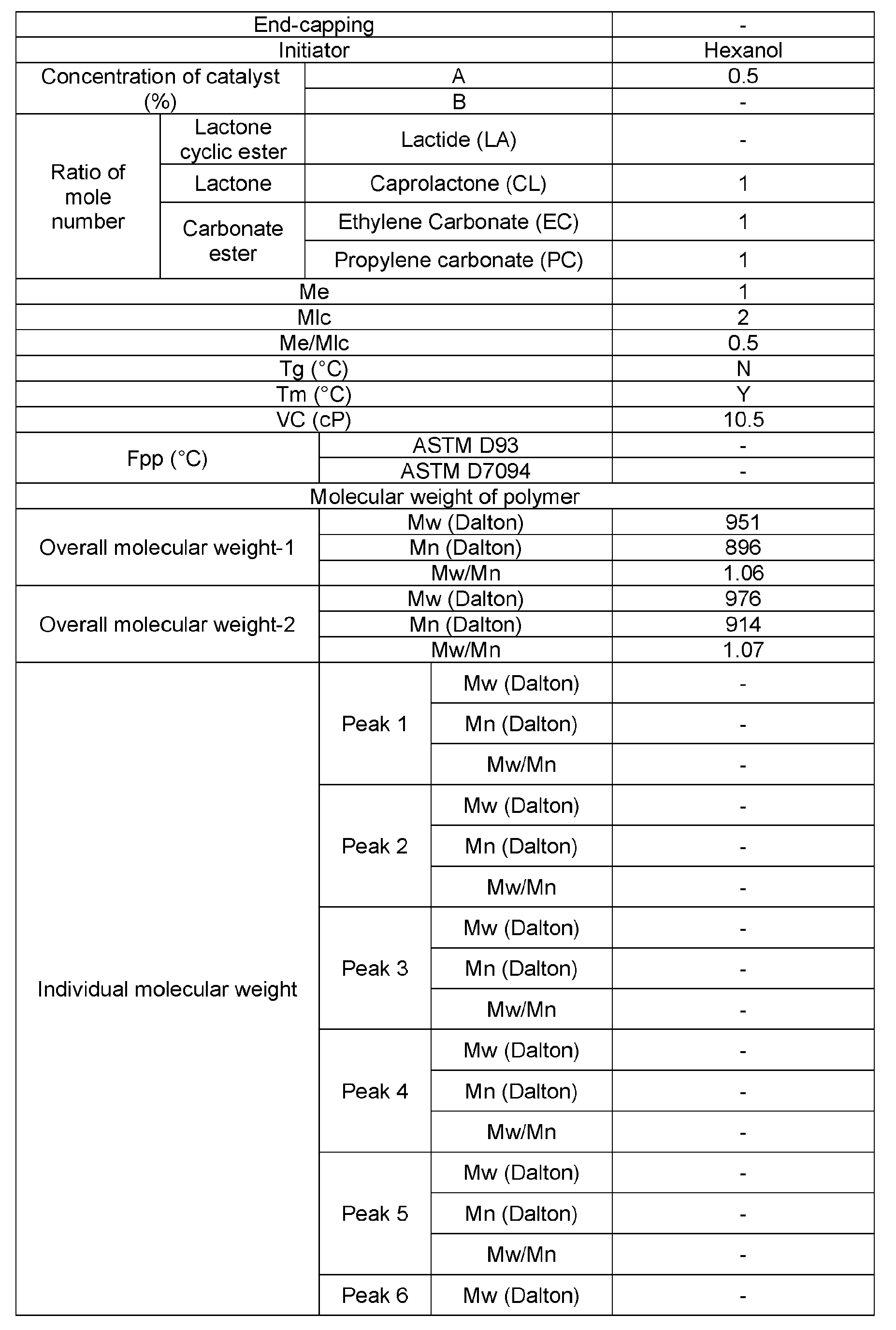

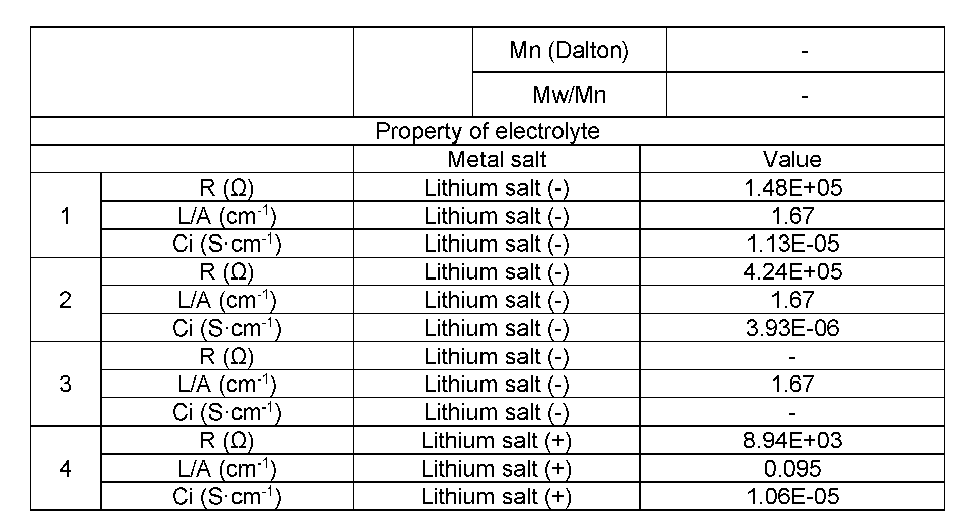

### <Example 8>

Table 12 shows the properties and the detailed data of the molecular weight of the polymer of Example 8 and the properties of the electrolyte including the polymer of Example 8.

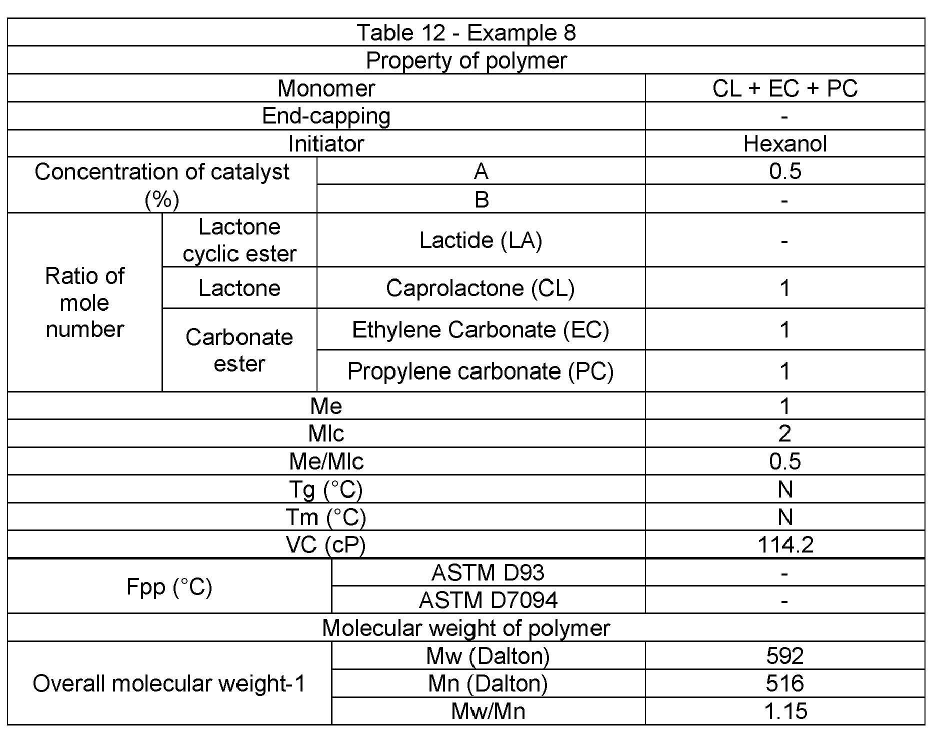

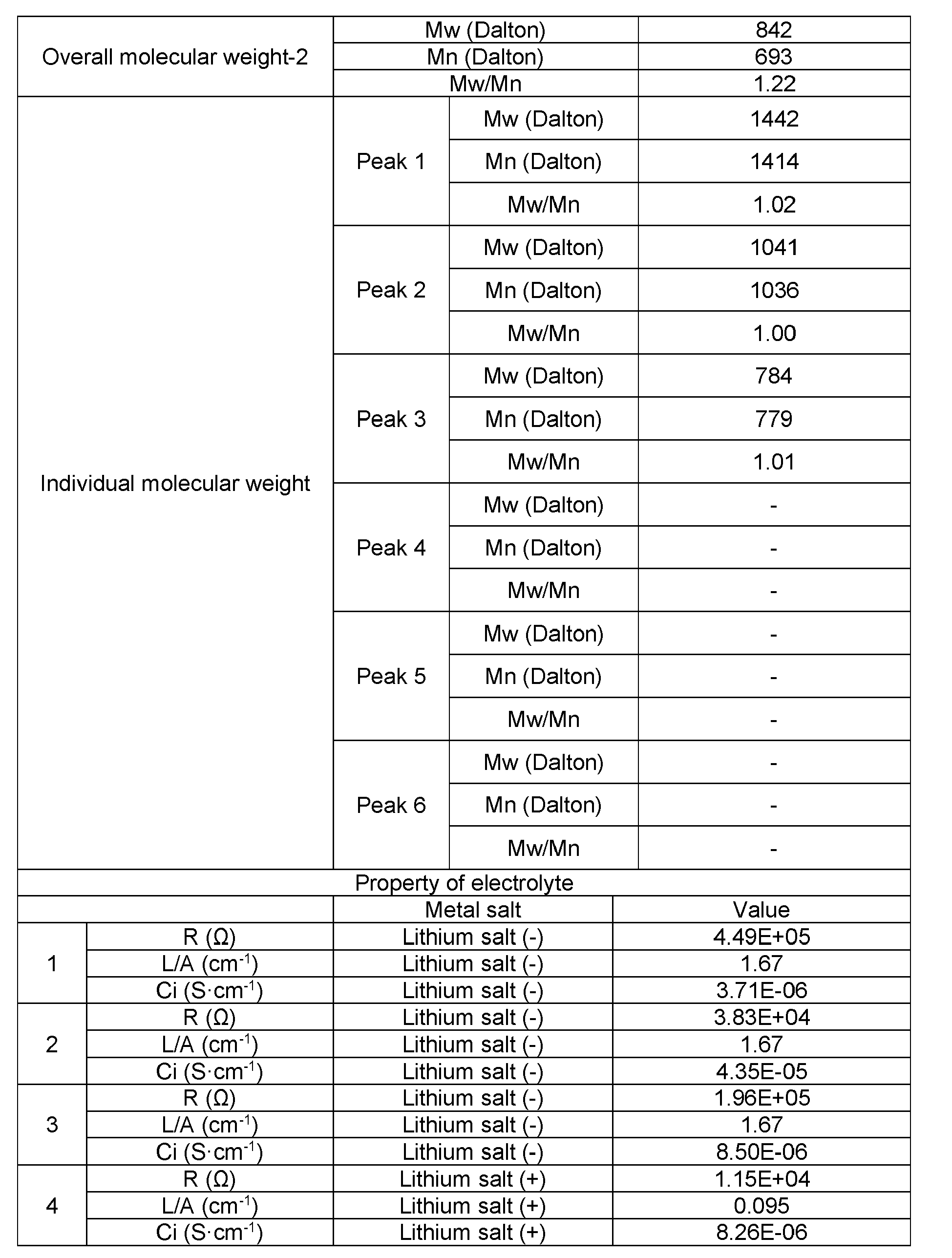

### <Example 9>

Table 13 shows the properties and the detailed data of the molecular weight of the polymer of Example 9 and the properties of the electrolyte including the polymer of Example 9.

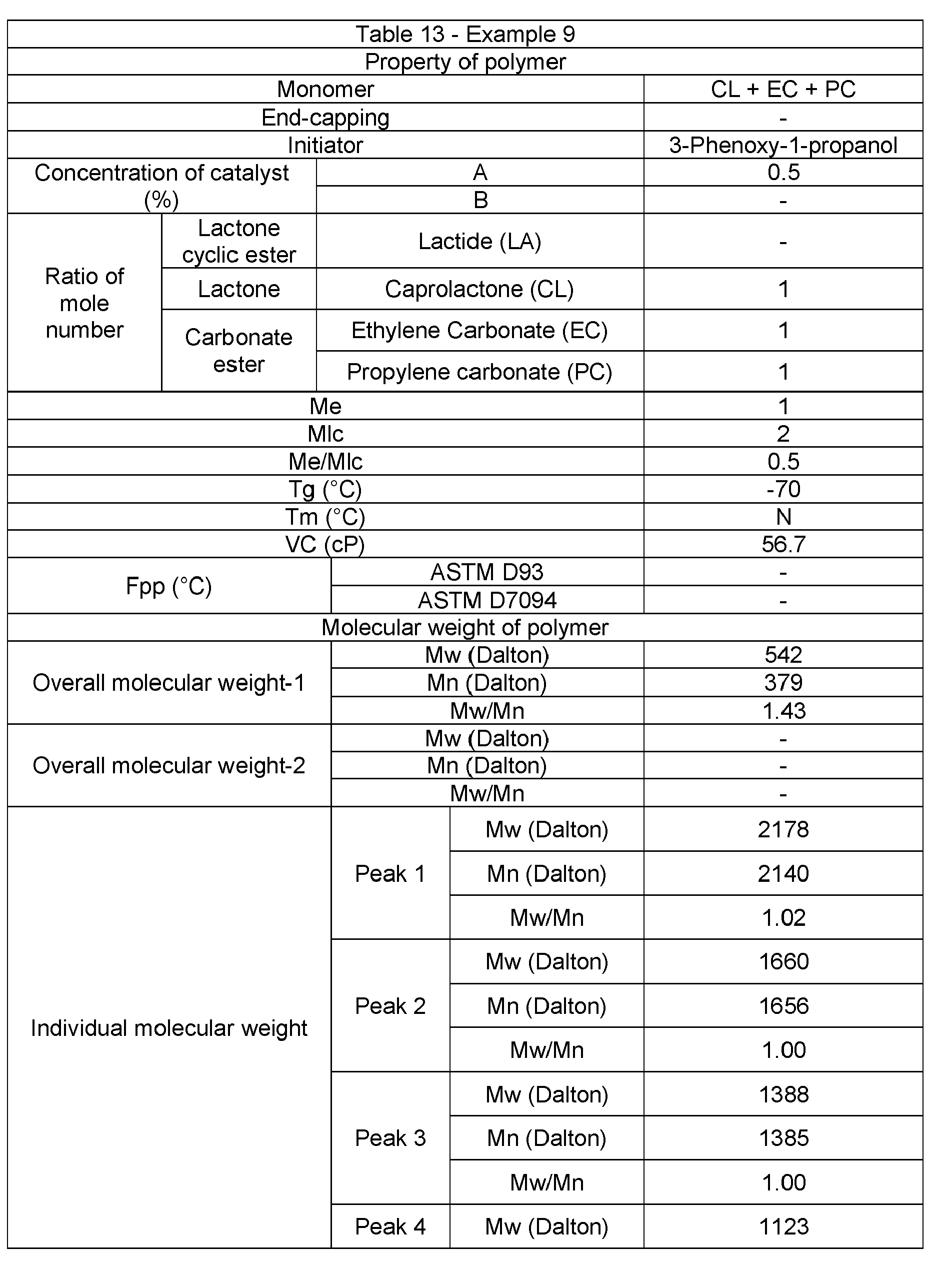

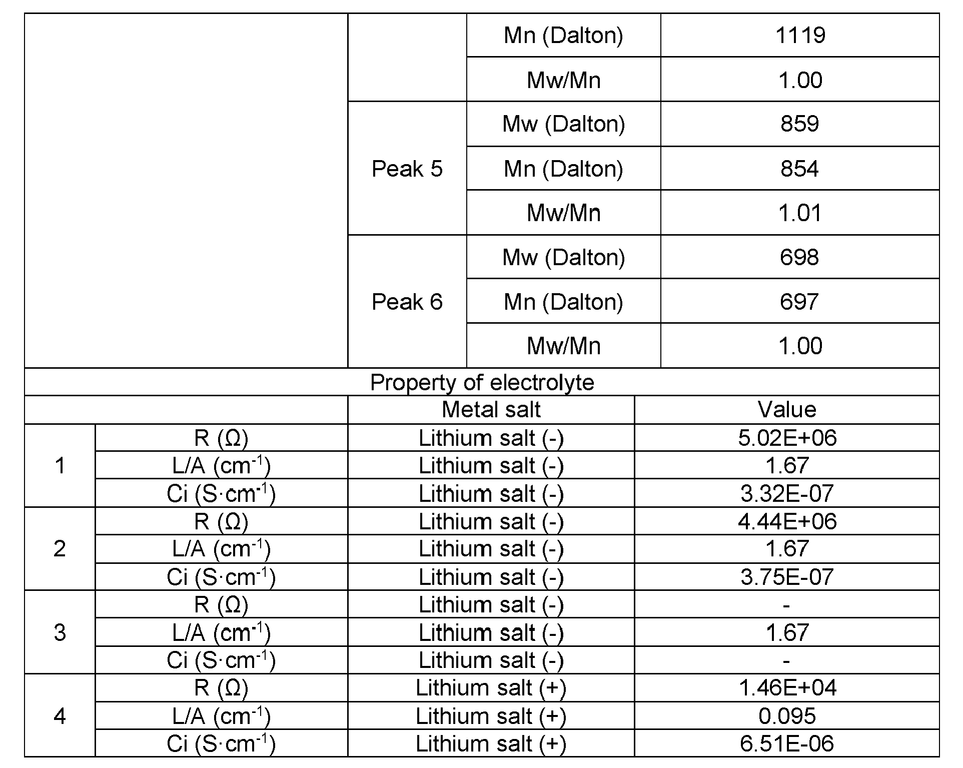

### <Example 10>

Table 14 shows the properties and the detailed data of the molecular weight of the polymer of Example 10 and the properties of the electrolyte including the polymer of Example 10.

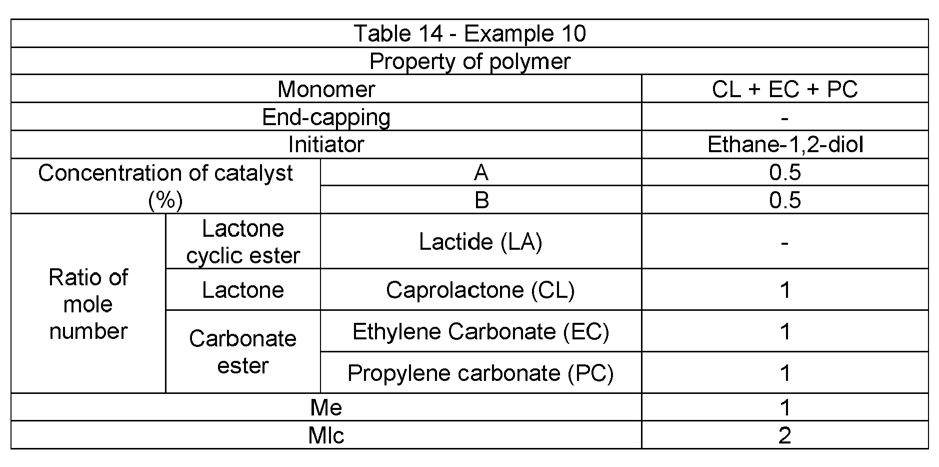

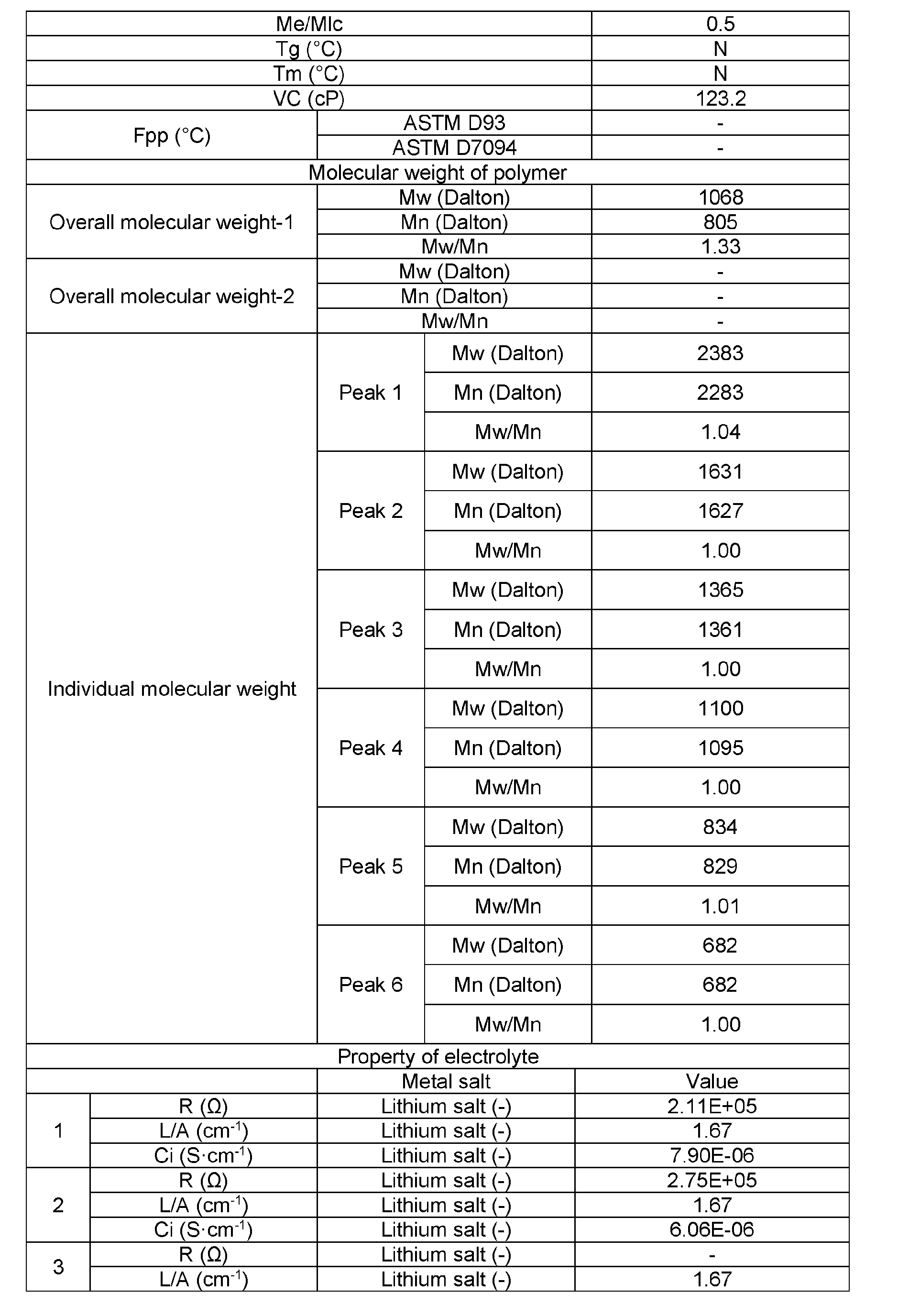

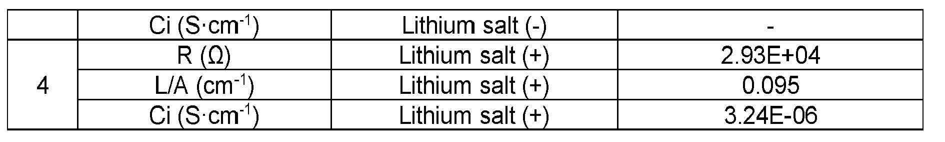

### <Example 11>

Table 15 shows the properties and the detailed data of the molecular weight of the polymer of Example 11 and the properties of the electrolyte including the polymer of Example 11.

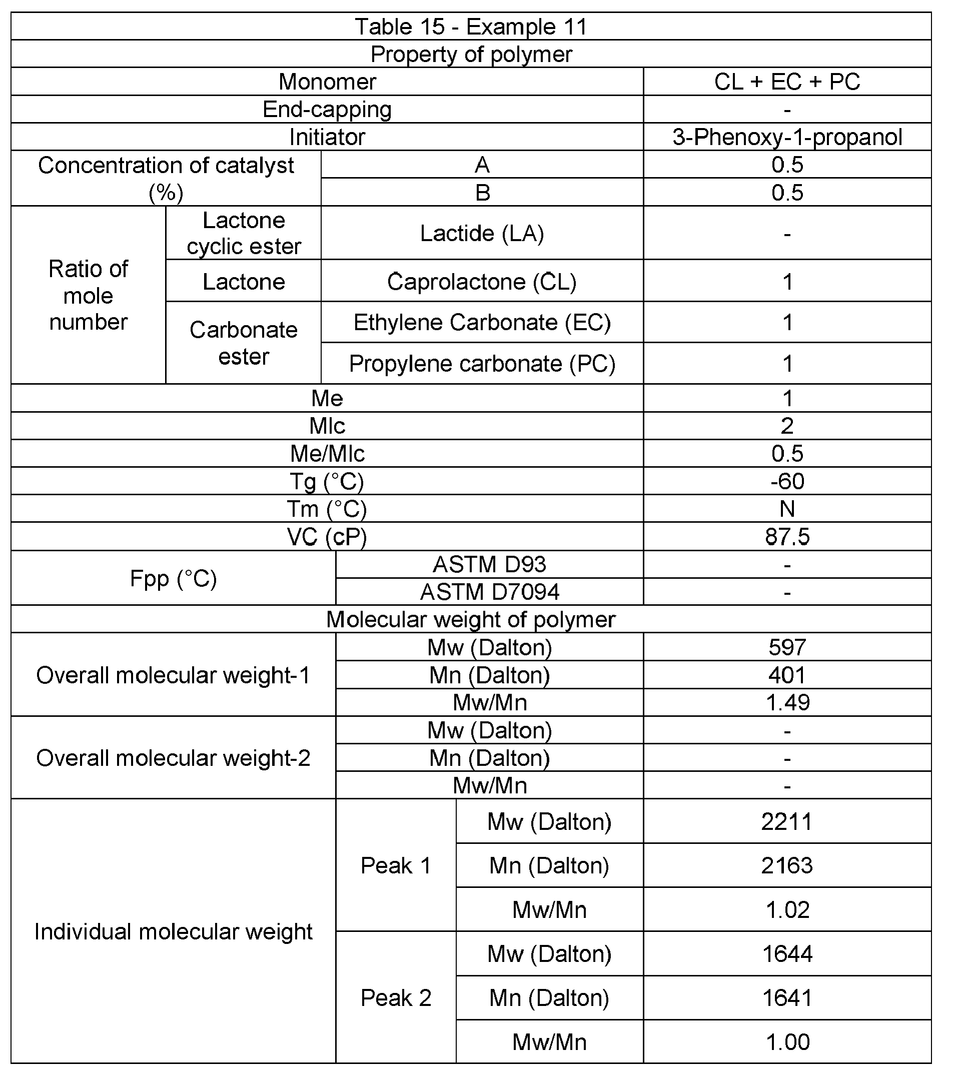

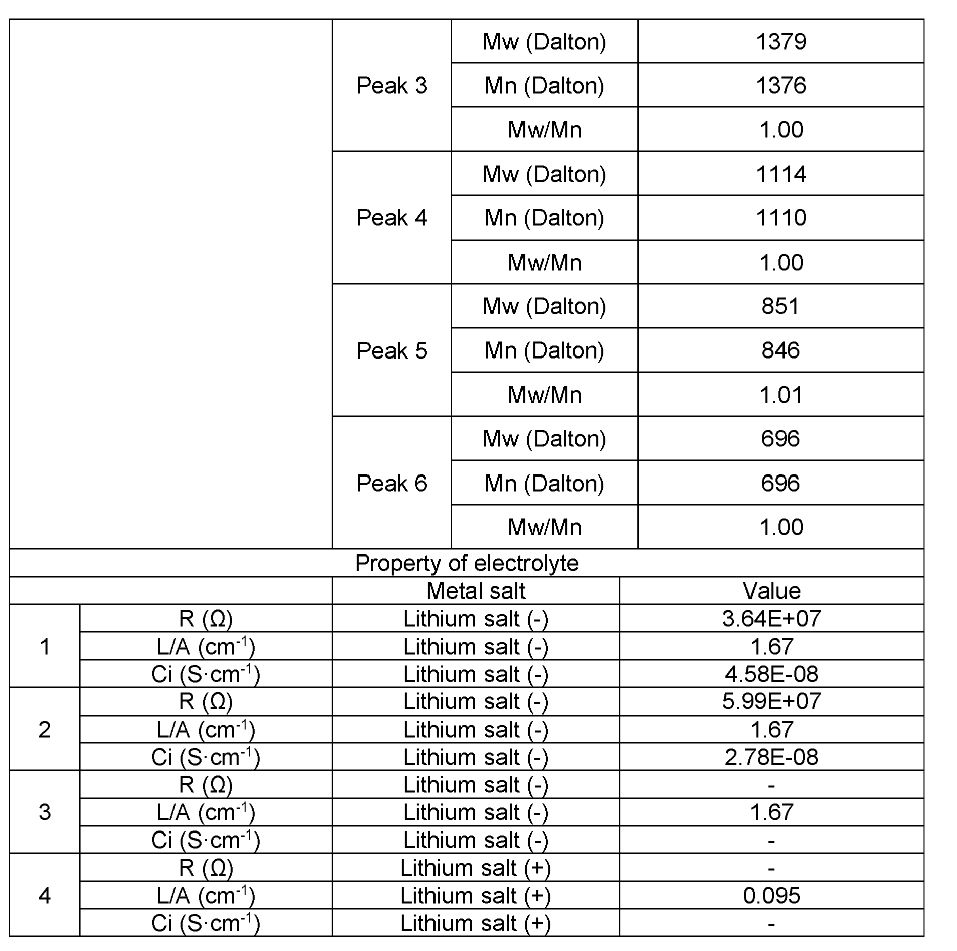

### <Example 12>

Table 16 shows the properties and the detailed data of the molecular weight of the polymer of Example 12 and the properties of the electrolyte including the polymer of Example 12.

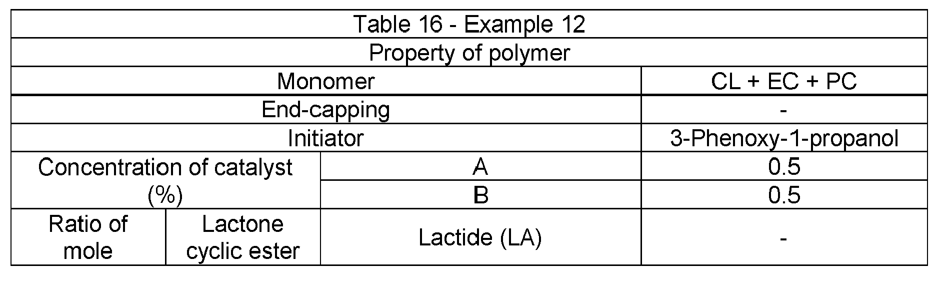

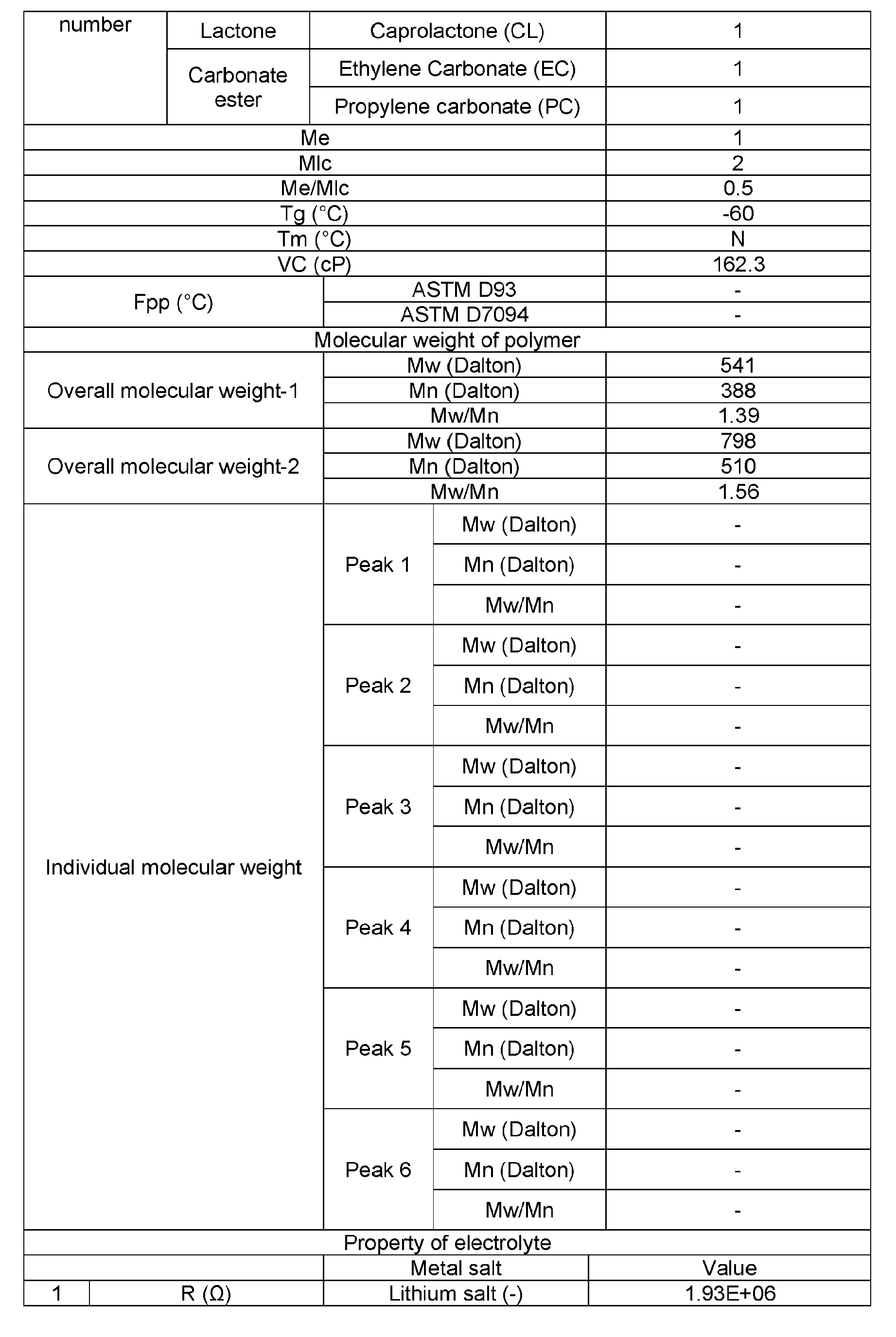

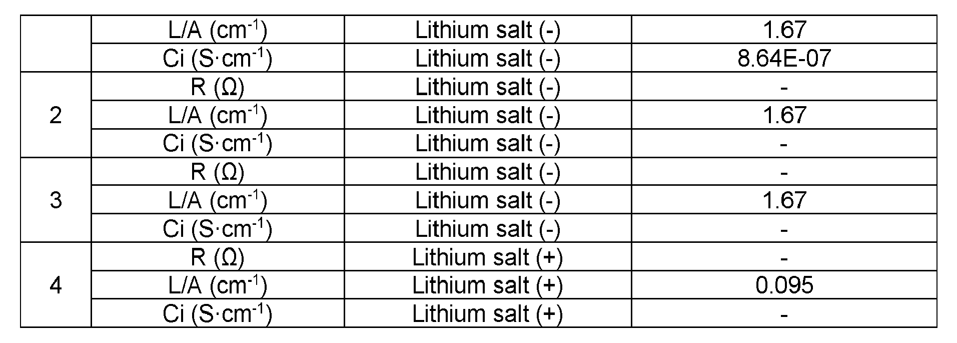

### <Example 13>

Table 17 shows the properties and the detailed data of the molecular weight of the polymer of Example 13 and the properties of the electrolyte including the polymer of Example 13.

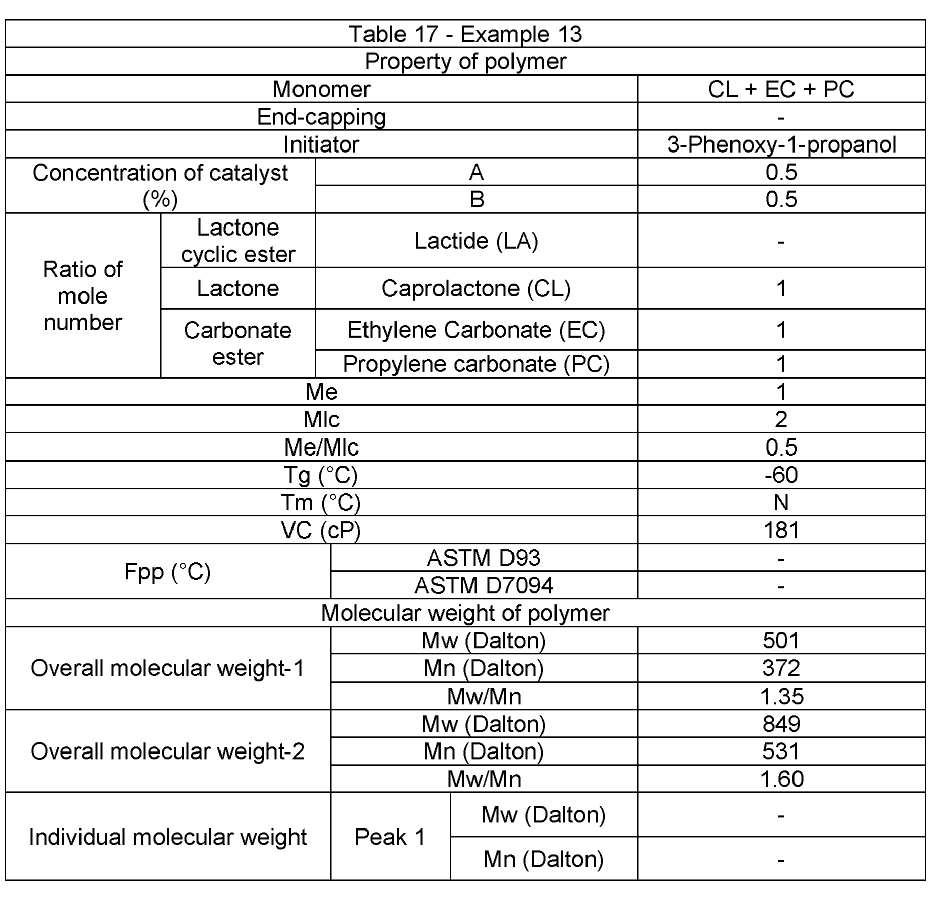

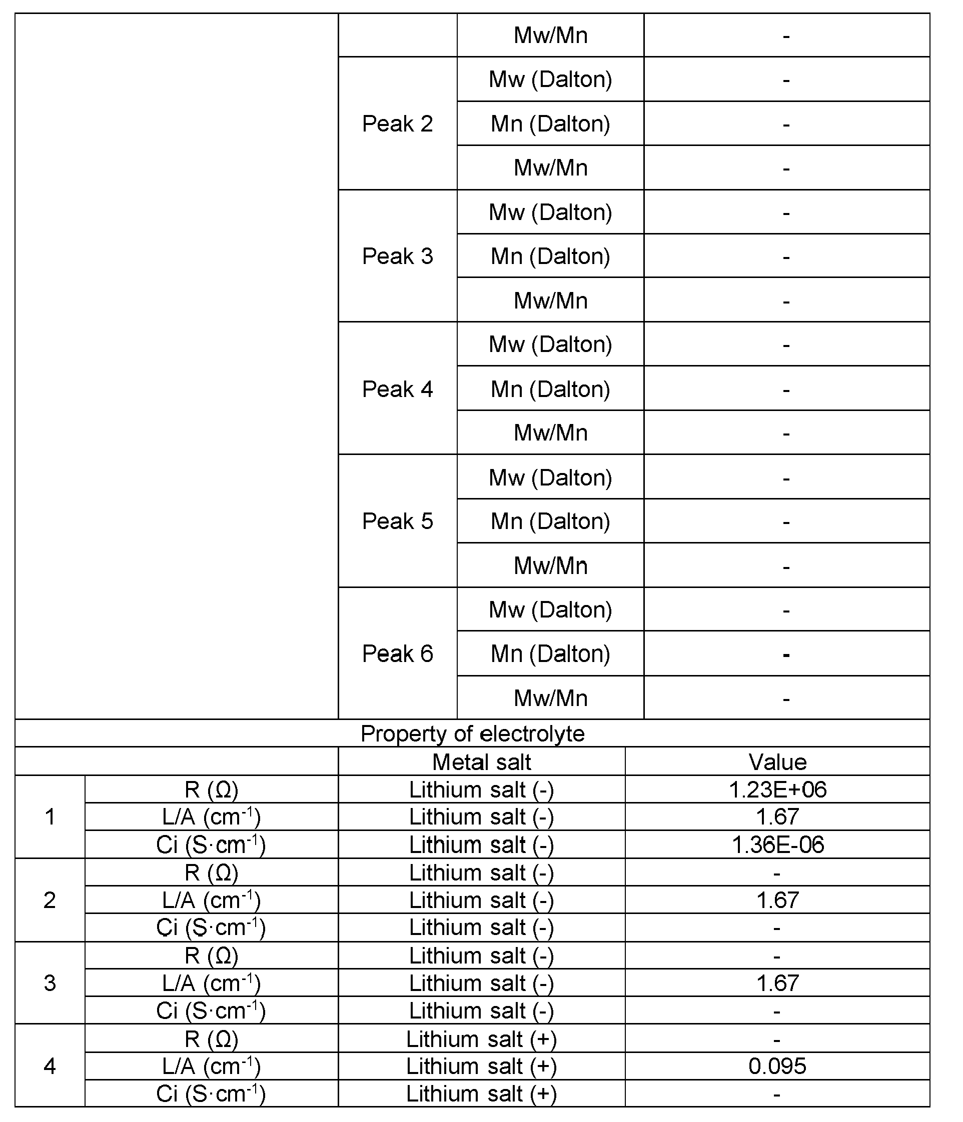

### <Example 14>

Table 18 shows the properties and the detailed data of the molecular weight of the polymer of Example 14 and the properties of the electrolyte including the polymer of Example 14.

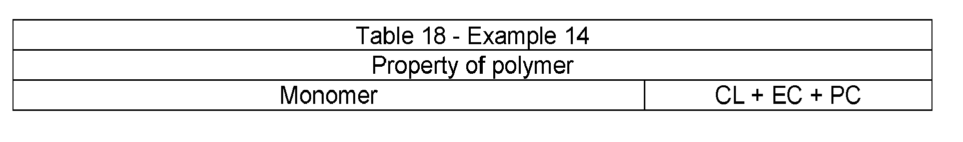

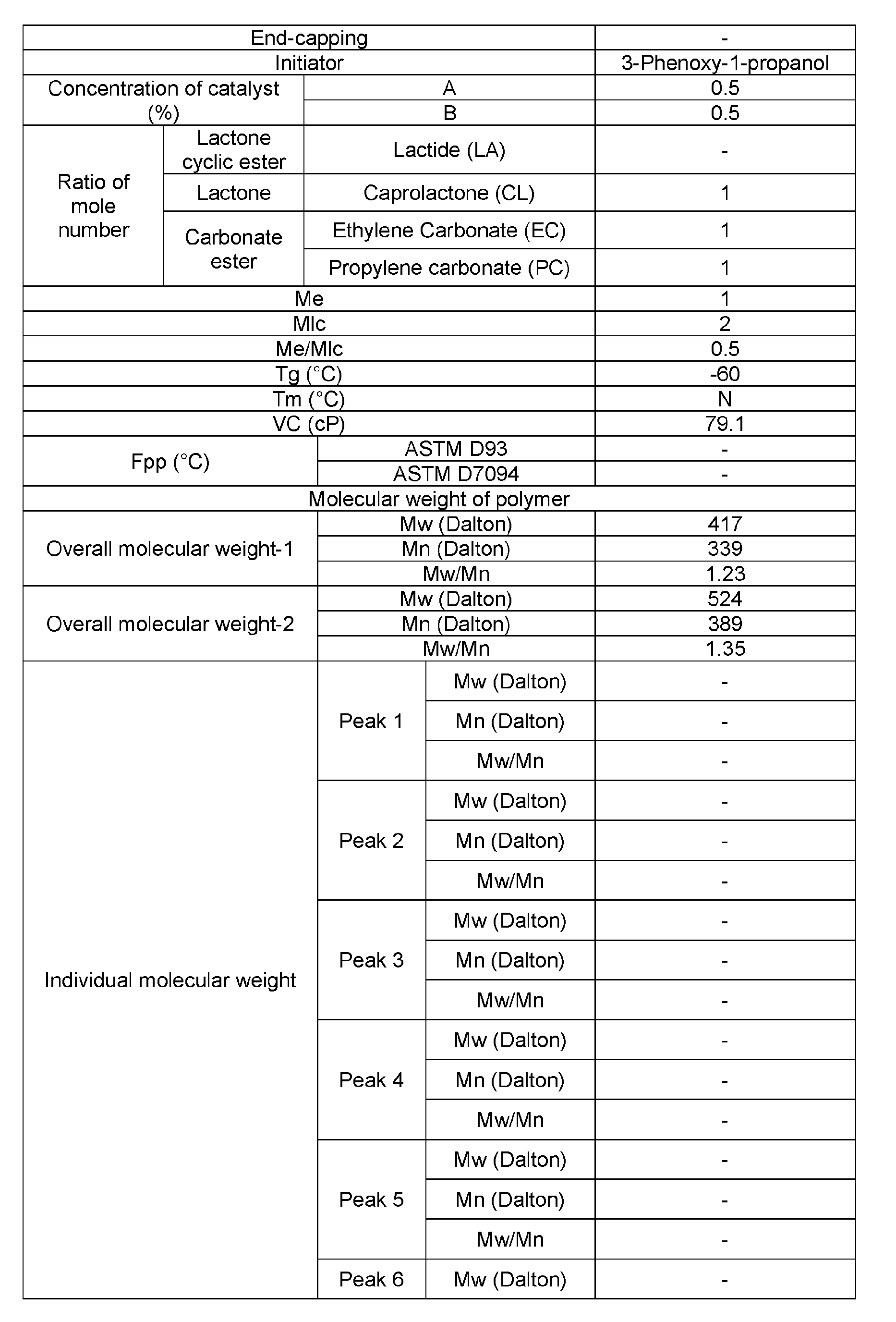

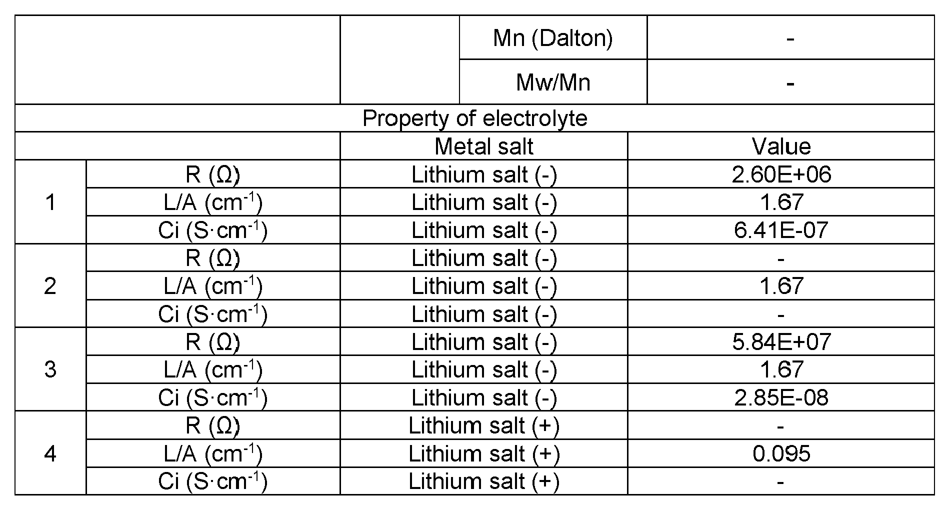

### <Example 15>

Table 19 shows the properties and the detailed data of the molecular weight of the polymer of Example 15 and the properties of the electrolyte including the polymer of Example 15.

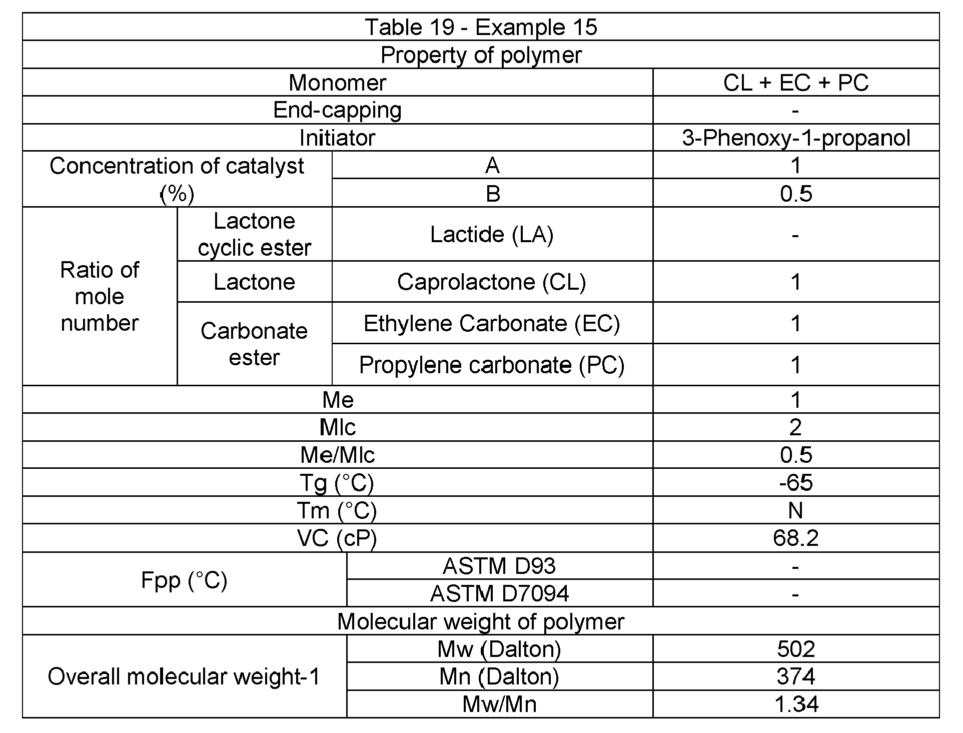

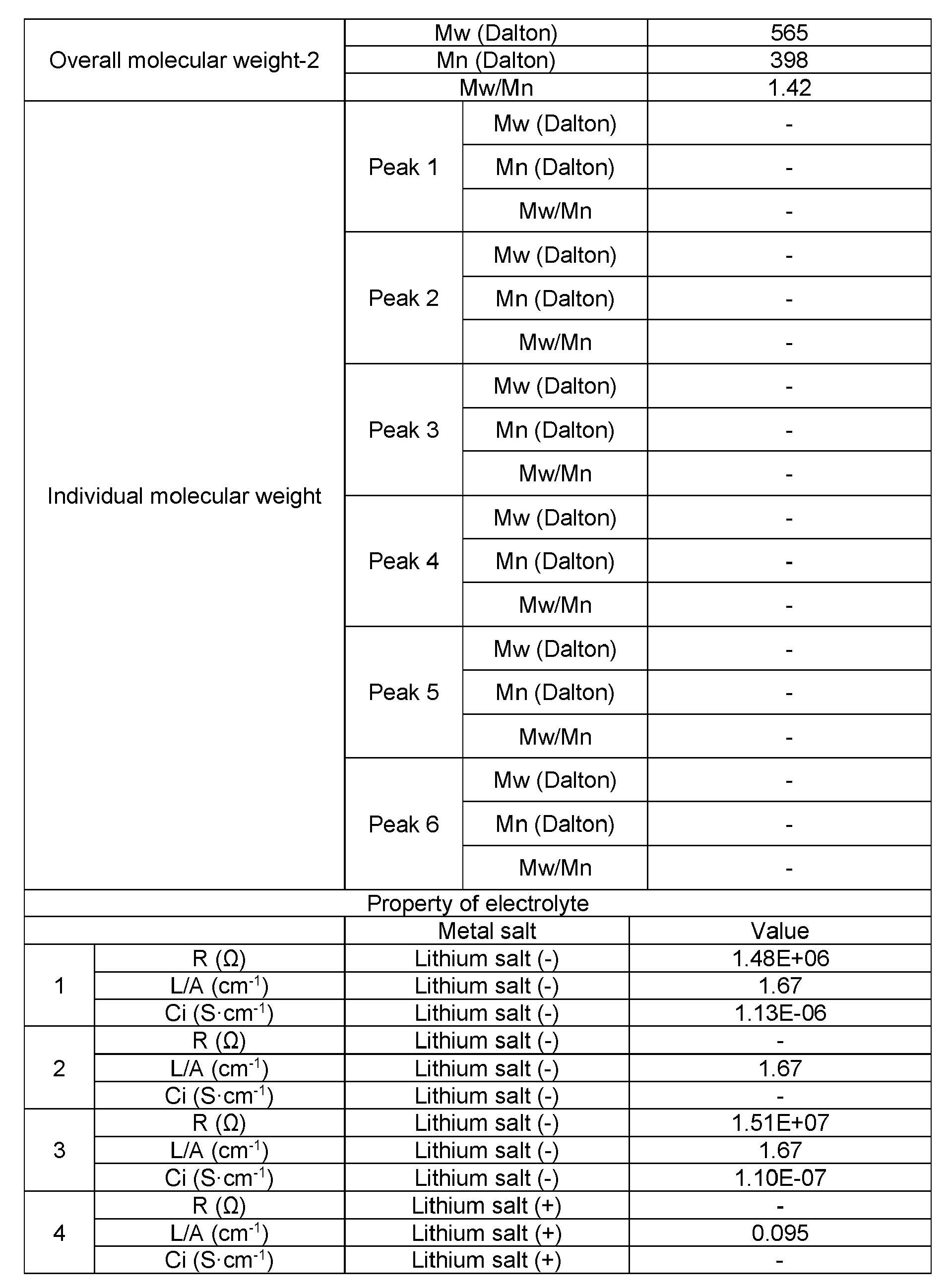

### <Example 16>

Table 20 shows the properties and the detailed data of the molecular weight of the polymer of Example 16 and the properties of the electrolyte including the polymer of Example 16.

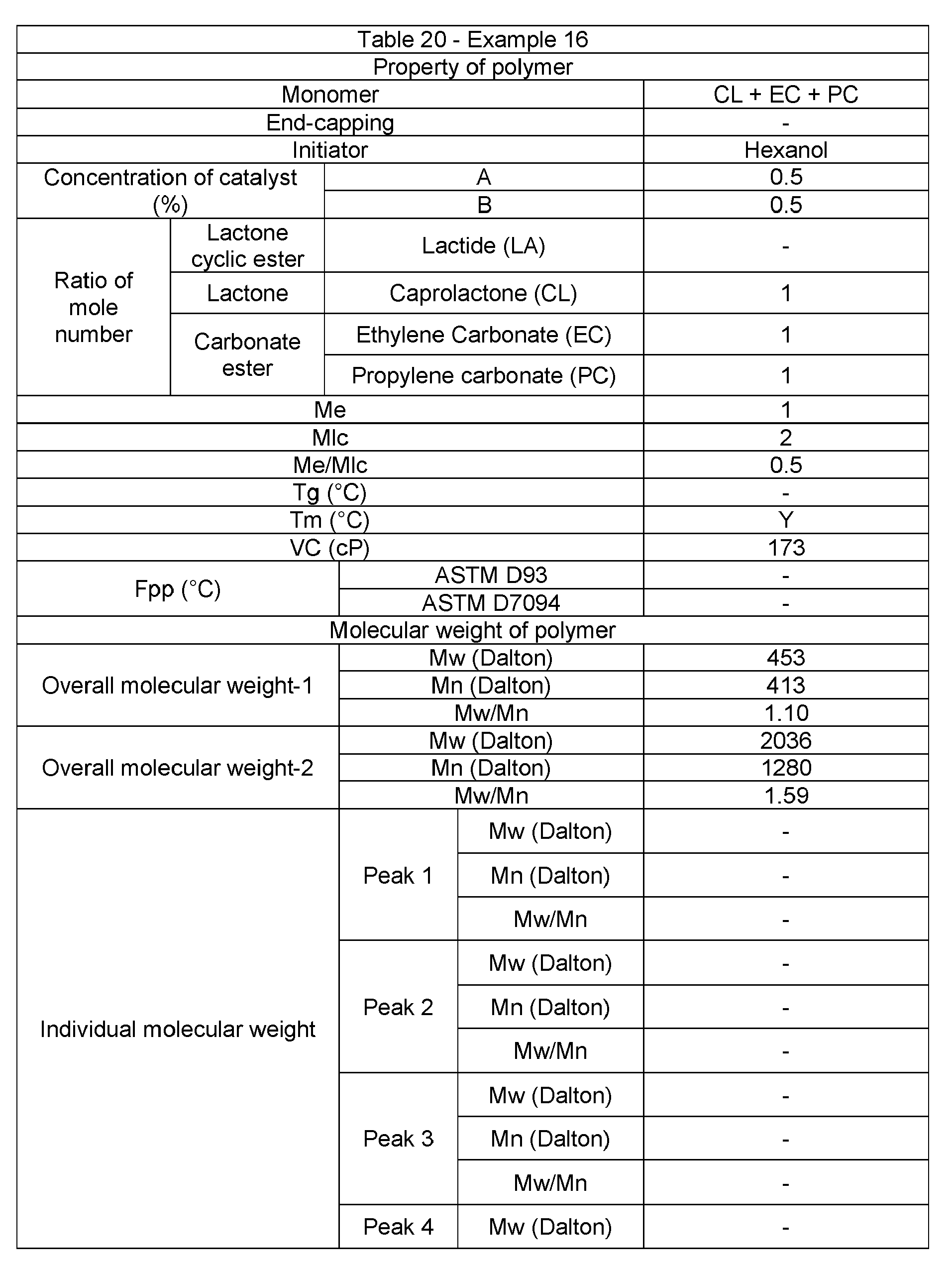

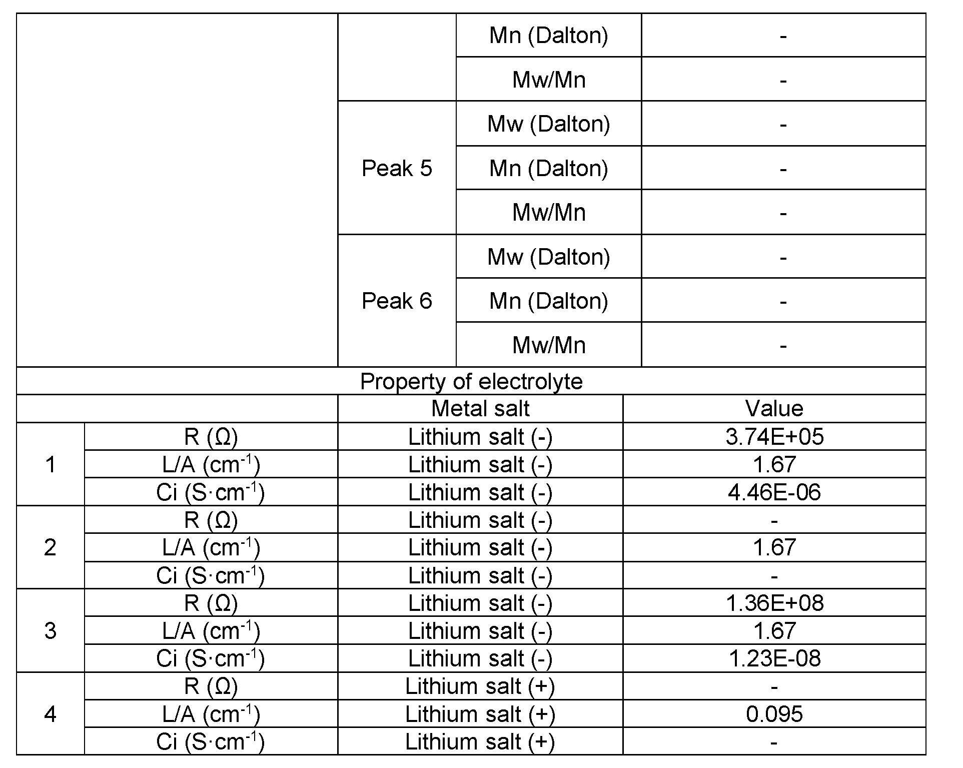

### <Example 17>

Table 21 shows the properties and the detailed data of the molecular weight of the polymer of Example 17 and the properties of the electrolyte including the polymer of Example 17.

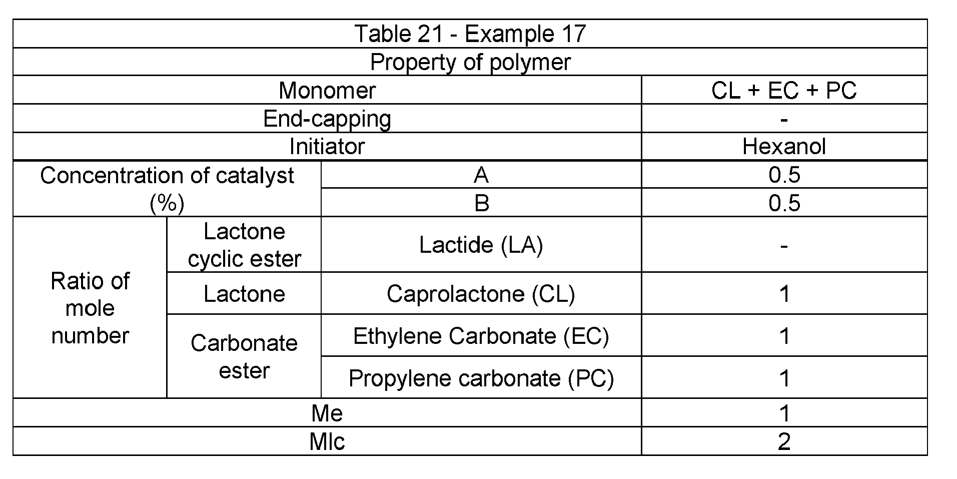

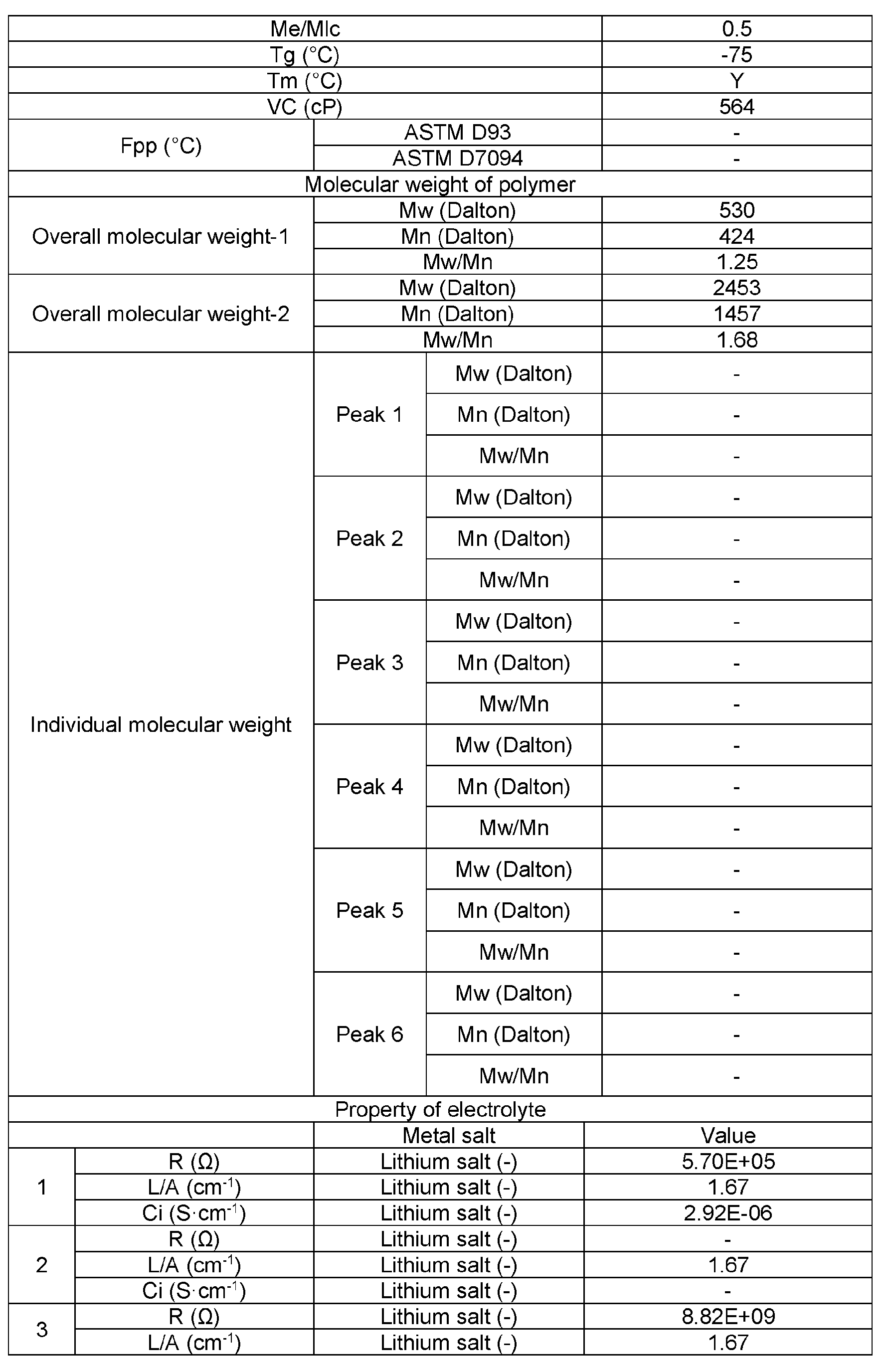

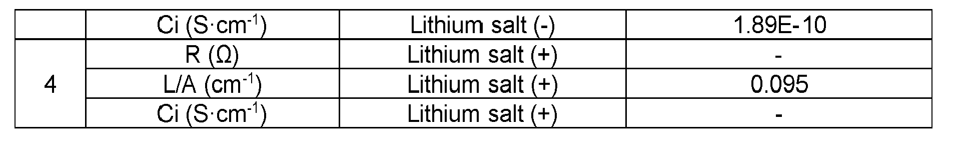

### <Example 18>

Table 22 shows the properties and the detailed data of the molecular weight of the polymer of Example 18 and the properties of the electrolyte including the polymer of Example 18.

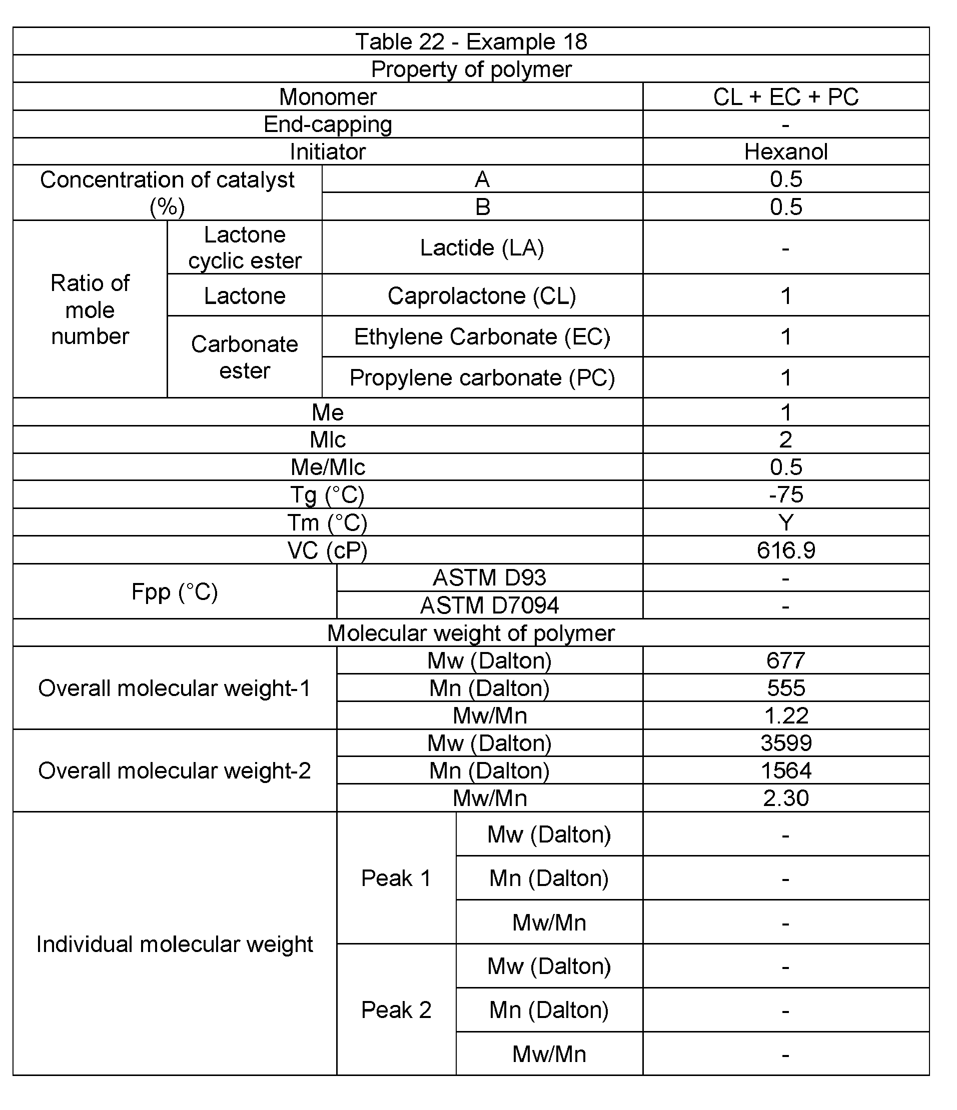

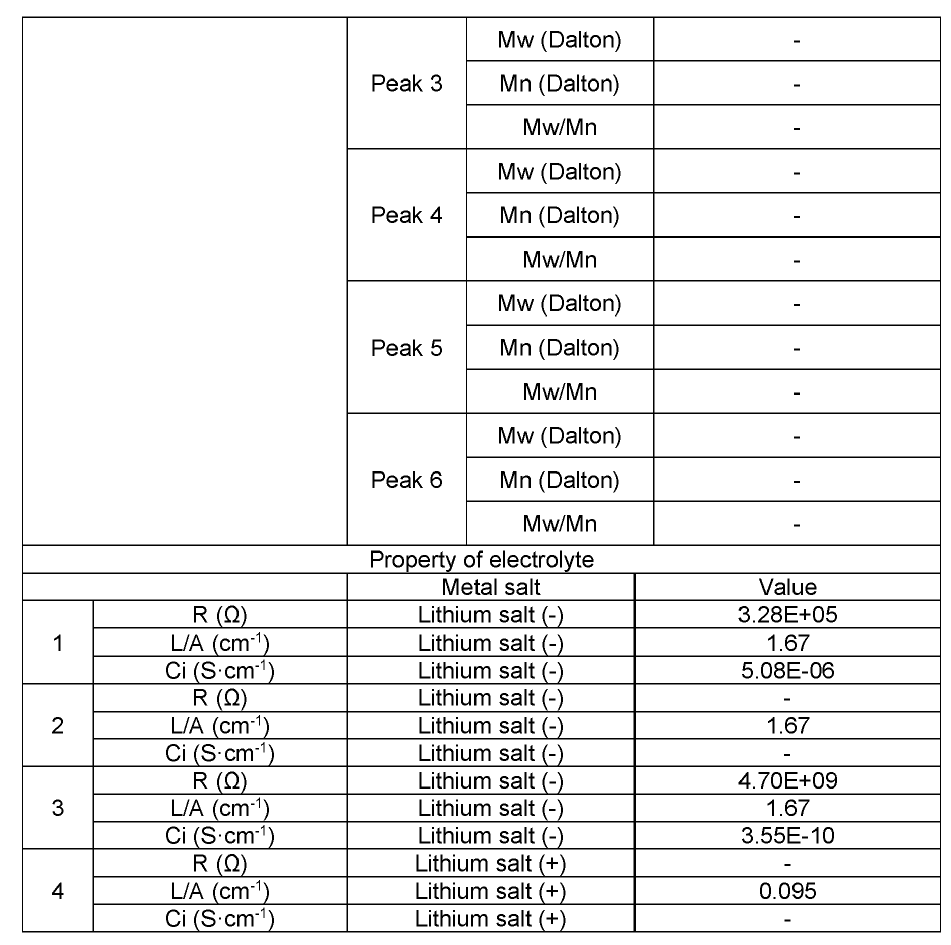

### <Example 19>

Table 23 shows the properties and the detailed data of the molecular weight of the polymer of Example 19 and the properties of the electrolyte including the polymer of Example 19.

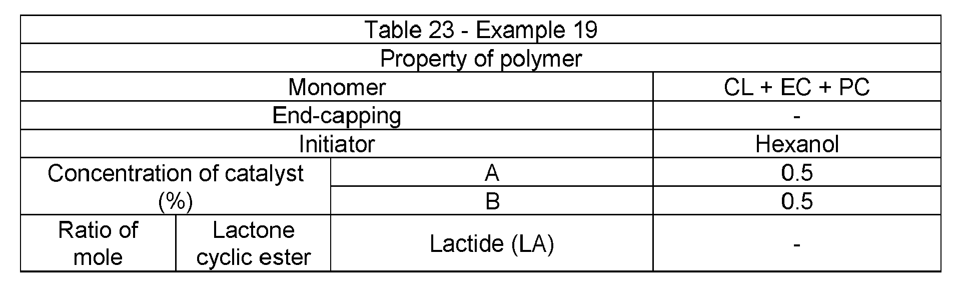

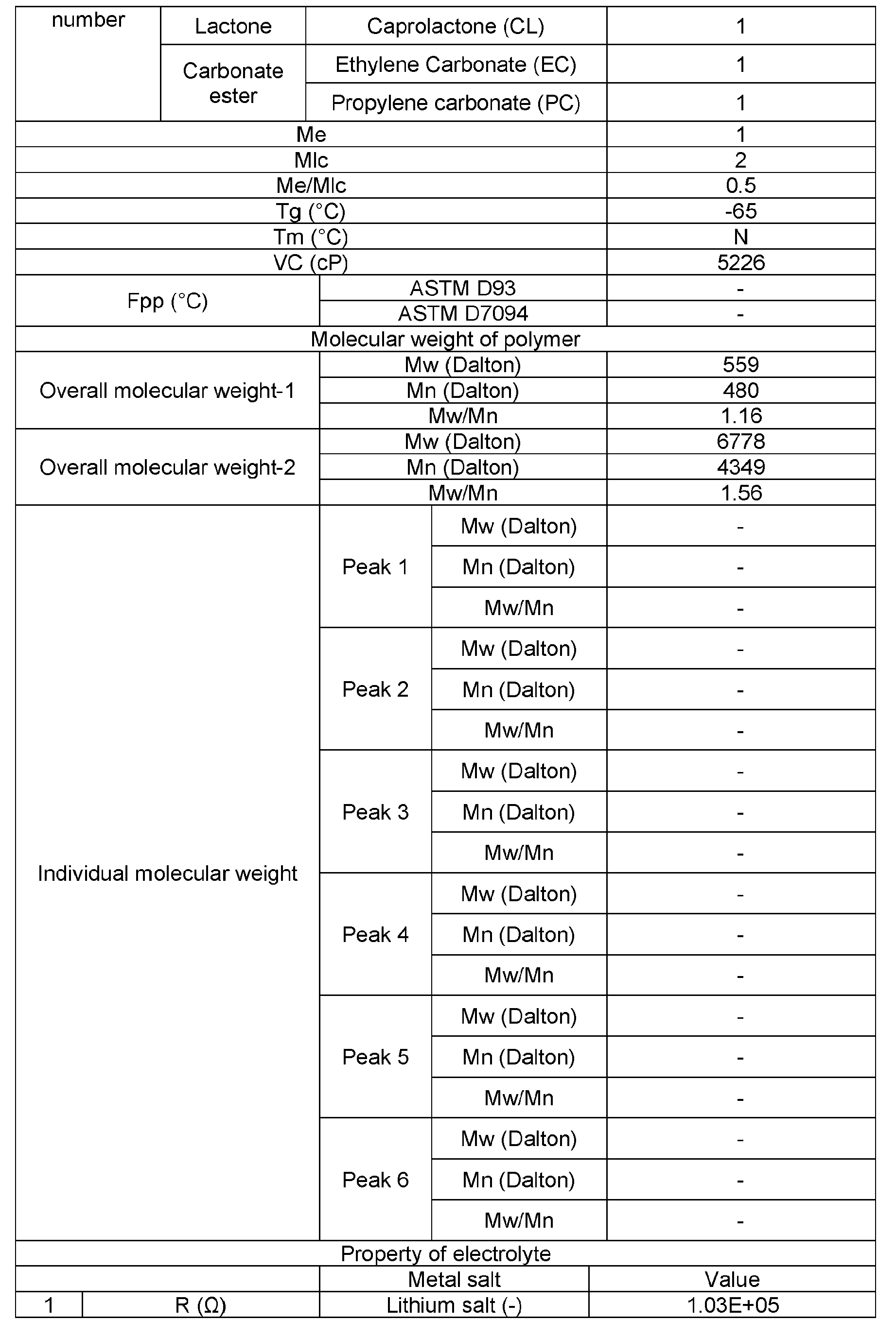

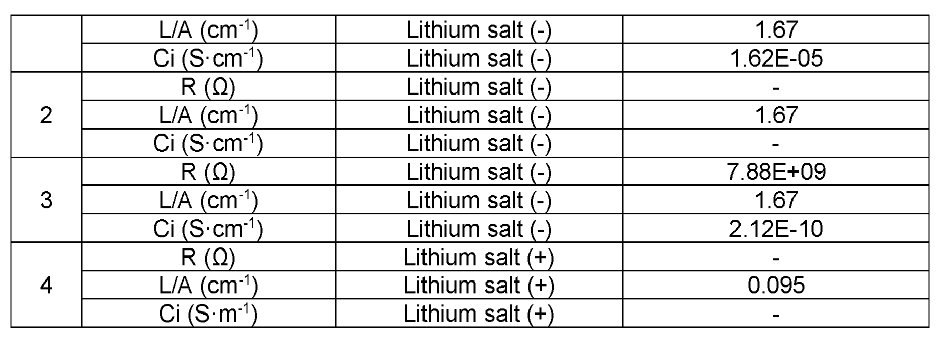

### <Example 20>

Table 24 shows the properties and the detailed data of the molecular weight of the polymer of Example 20 and the properties of the electrolyte including the polymer of Example 20.

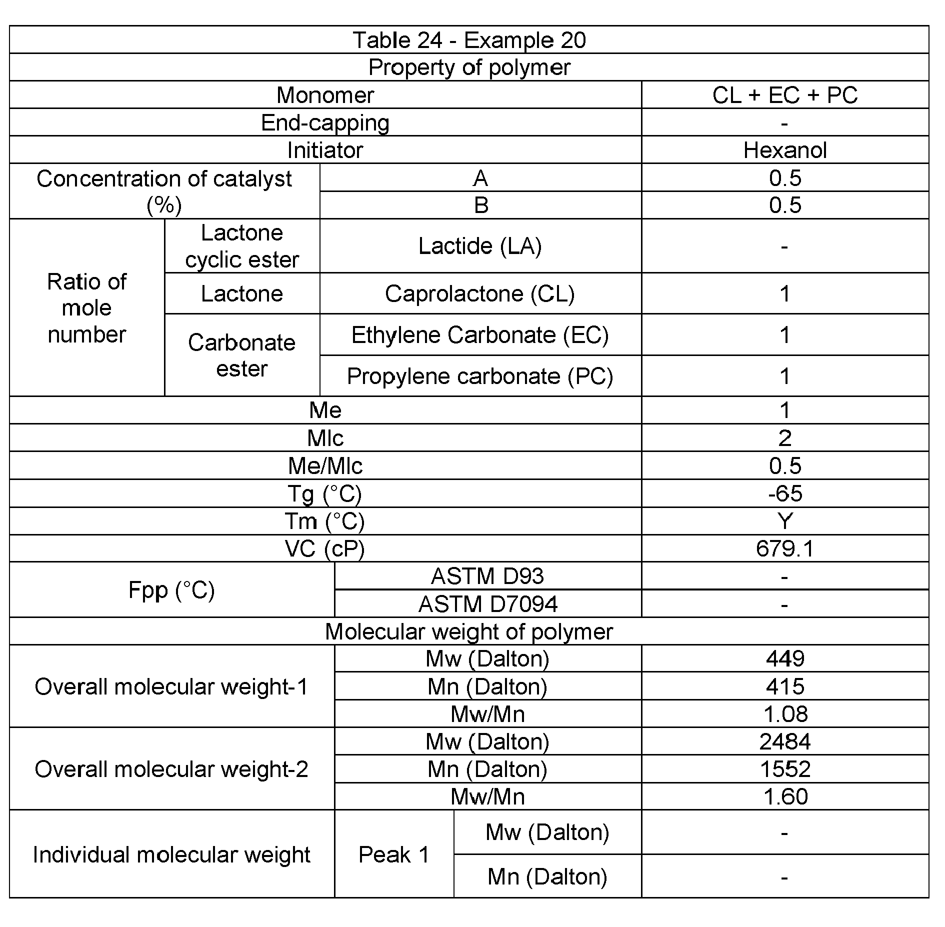

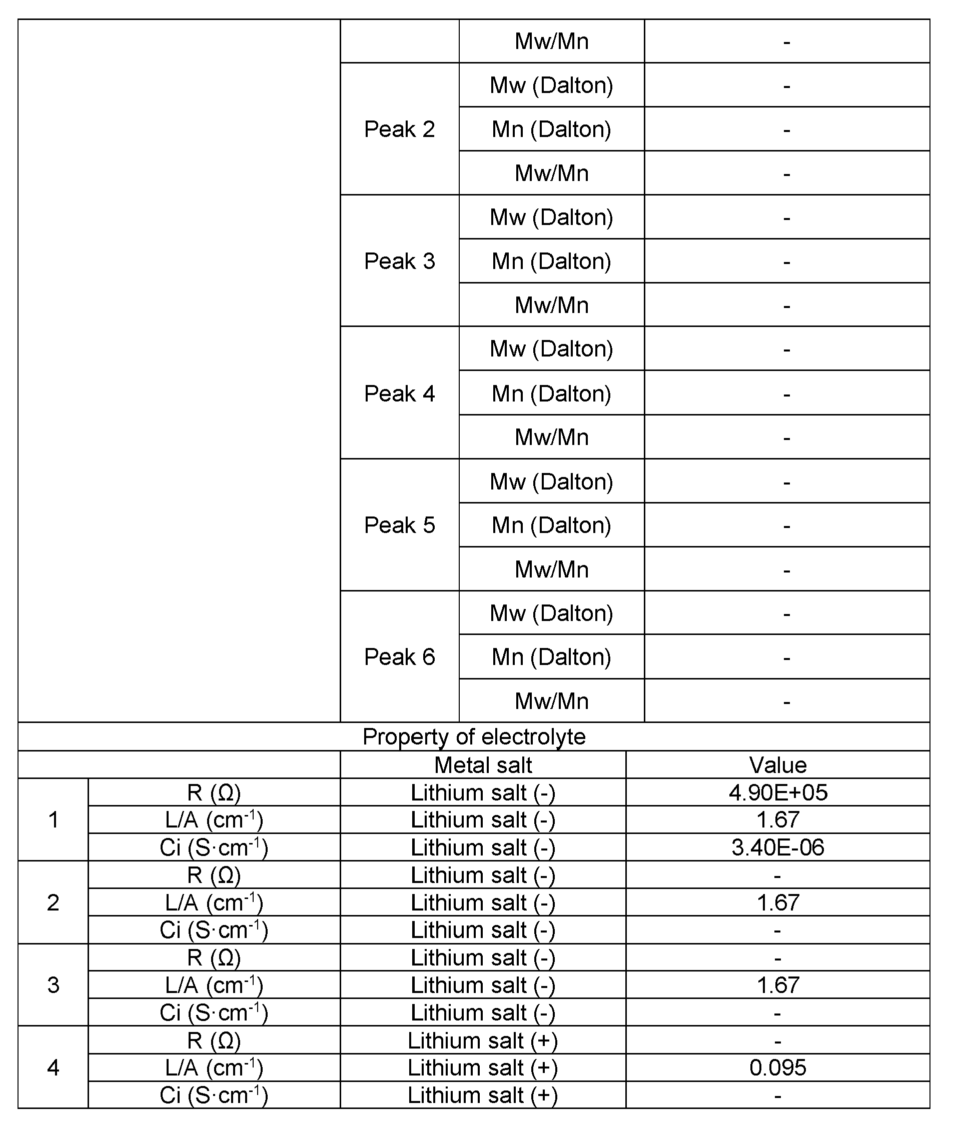

### <Example 21>

Table 25 shows the properties and the detailed data of the molecular weight of the polymer of Example 21 and the properties of the electrolyte including the polymer of Example 21.

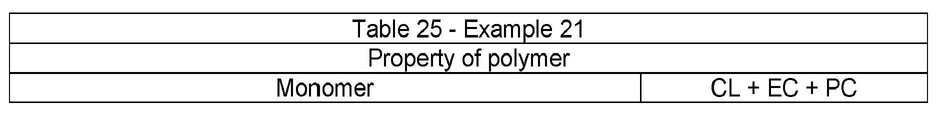

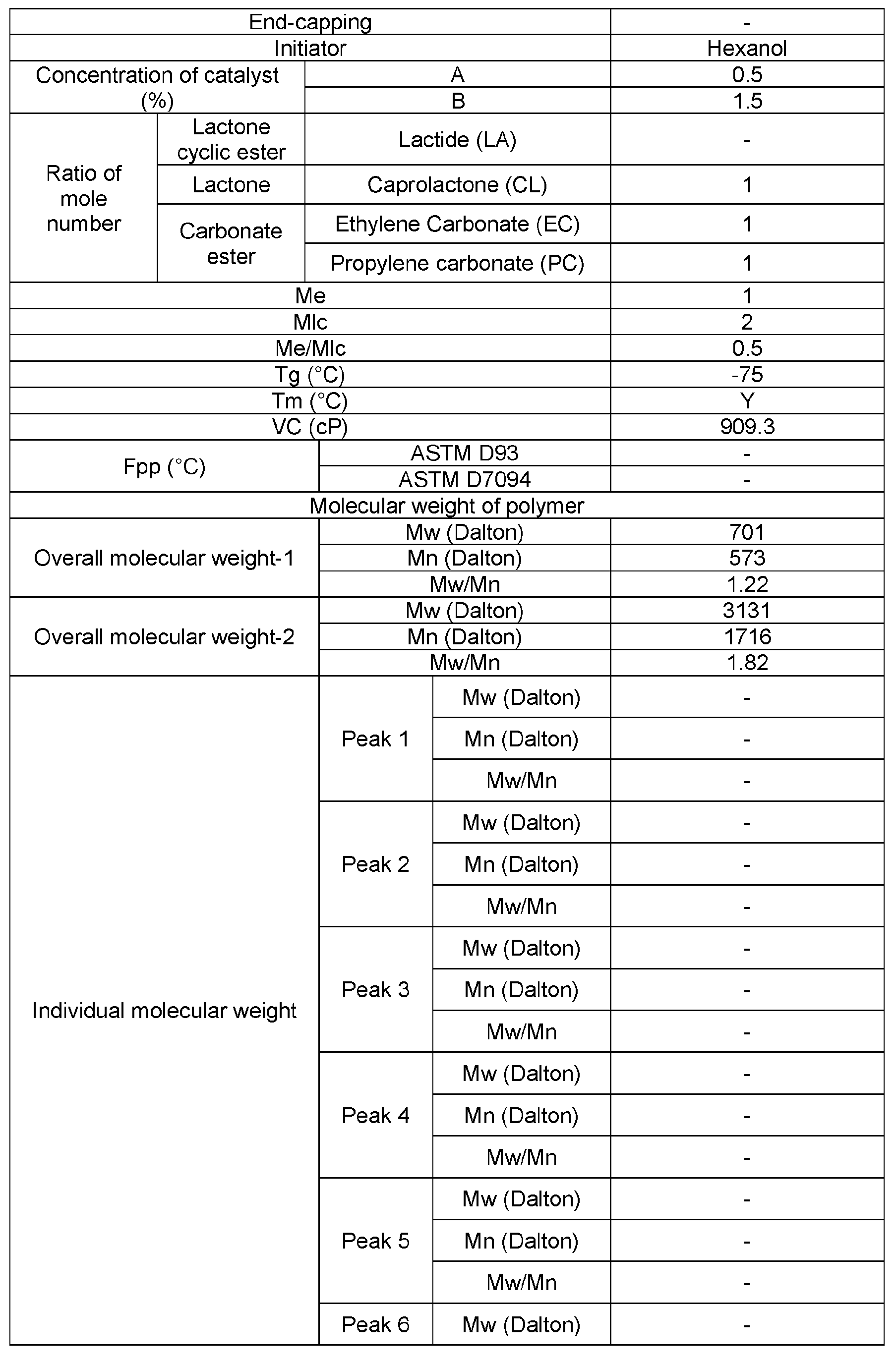

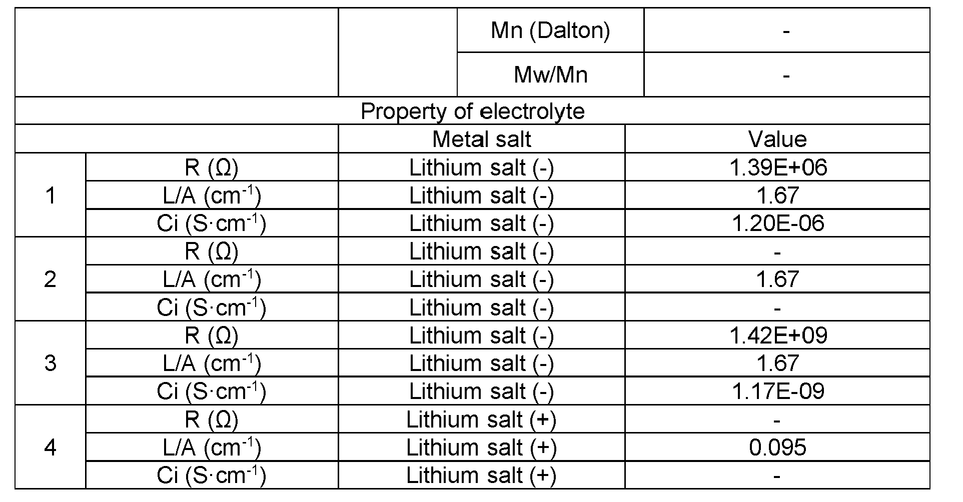

### <Example 22>

Table 26 shows the properties and the detailed data of the molecular weight of the polymer of Example 22 and the properties of the electrolyte including the polymer of Example 22.

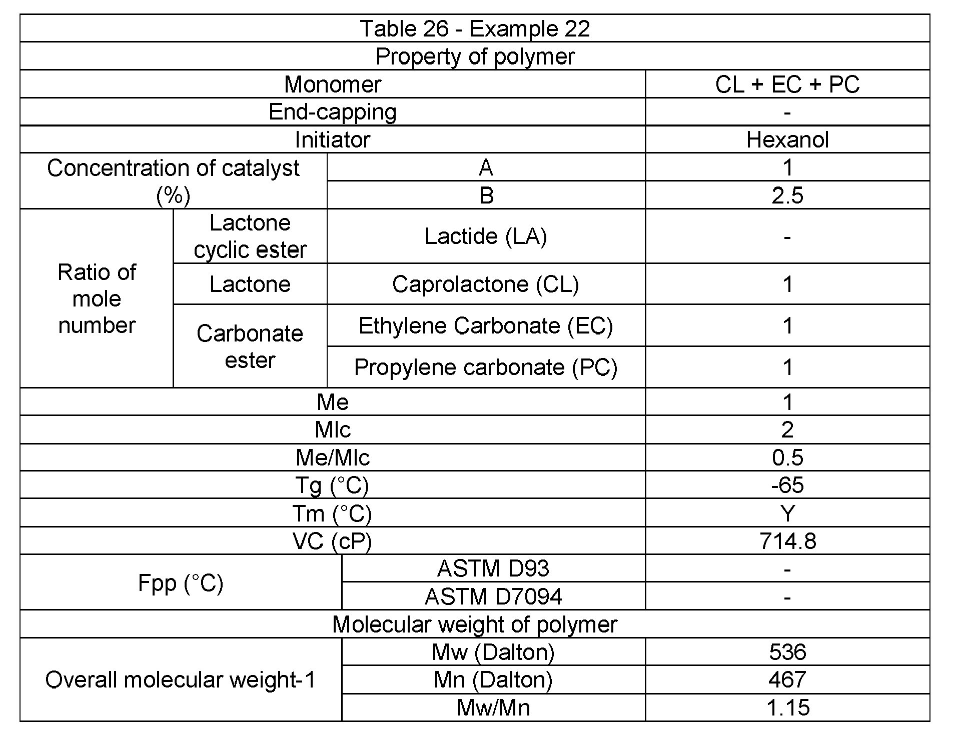

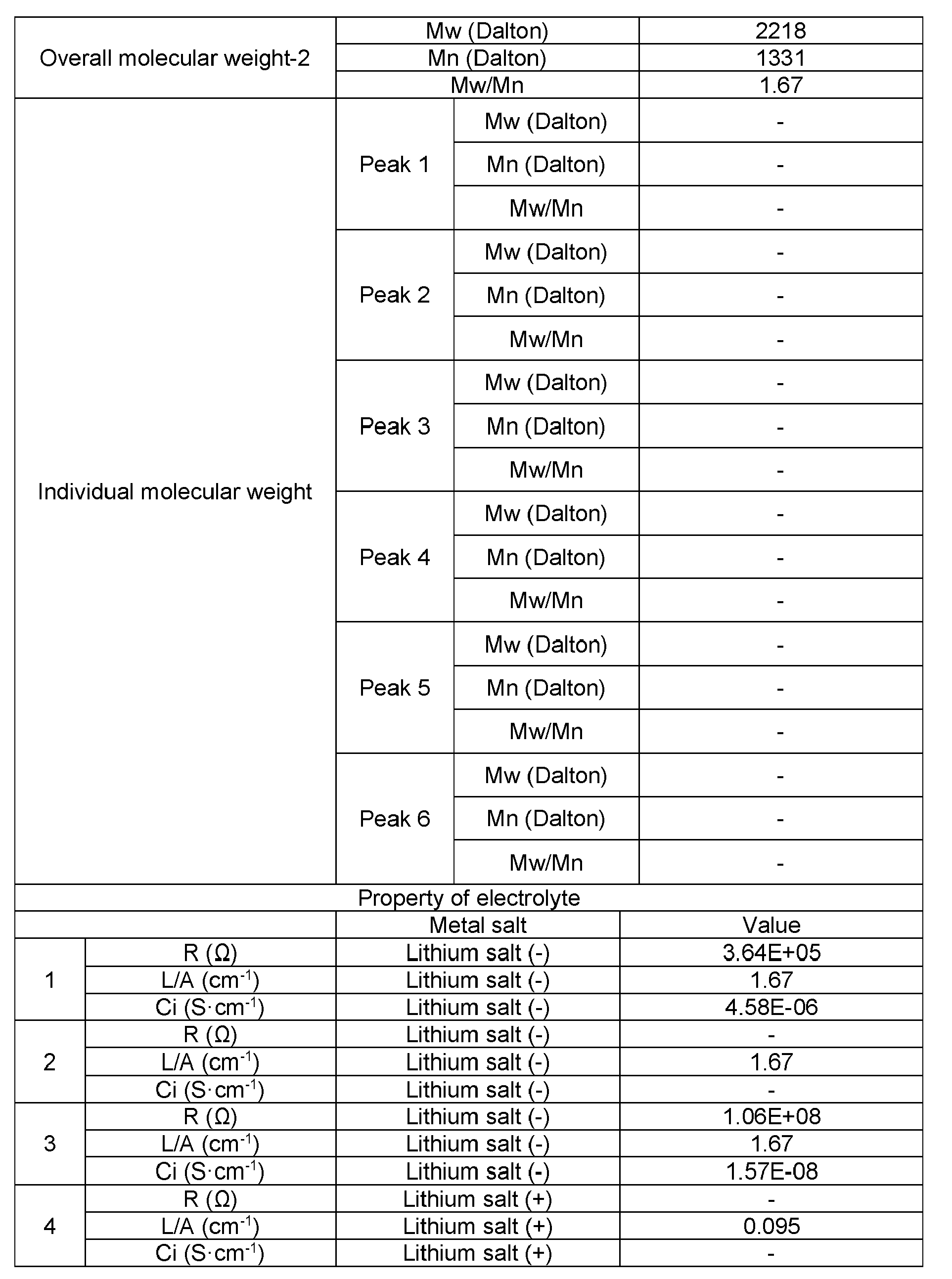

### <Example 23>

Table 27 shows the properties and the detailed data of the molecular weight of the polymer of Example 23 and the properties of the electrolyte including the polymer of Example 23.

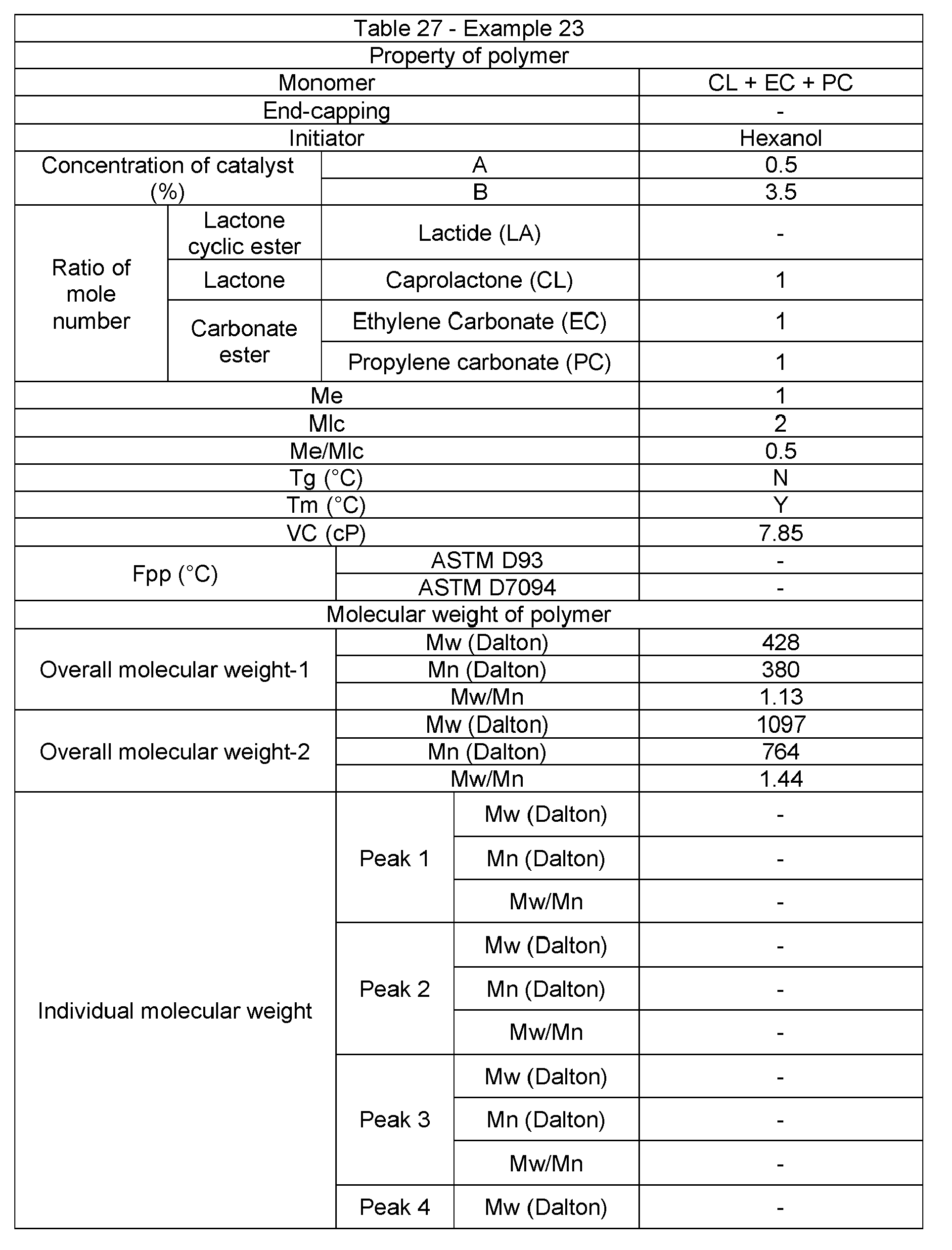

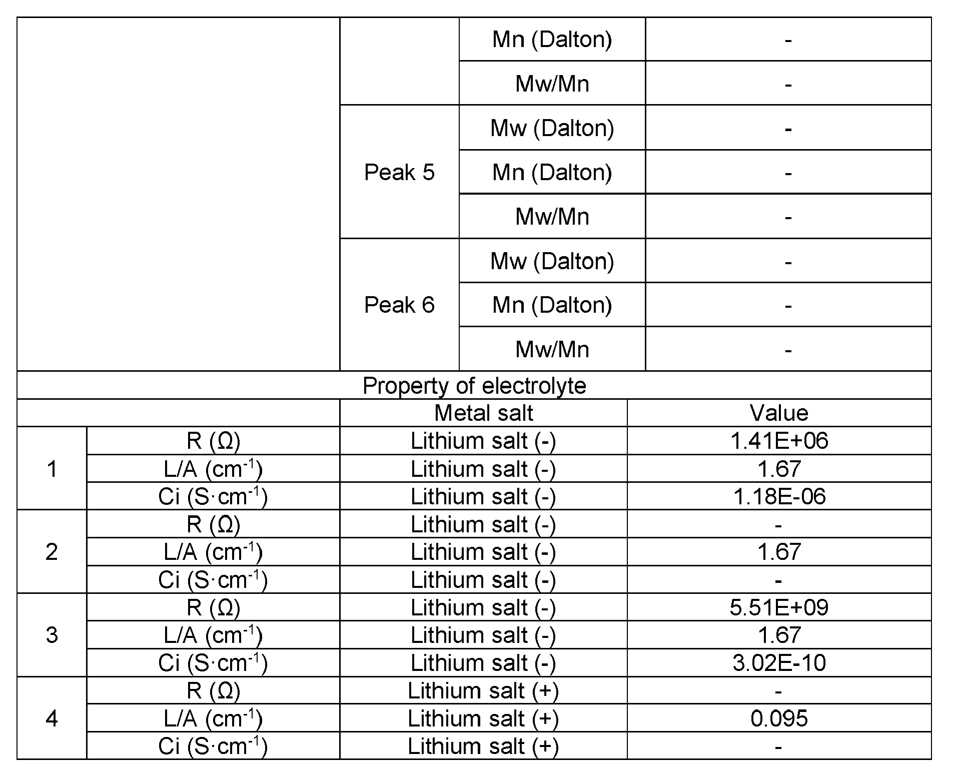

### <Example 24>

Table 28 shows the properties and the detailed data of the molecular weight of the polymer of Example 24 and the properties of the electrolyte including the polymer of Example 24.

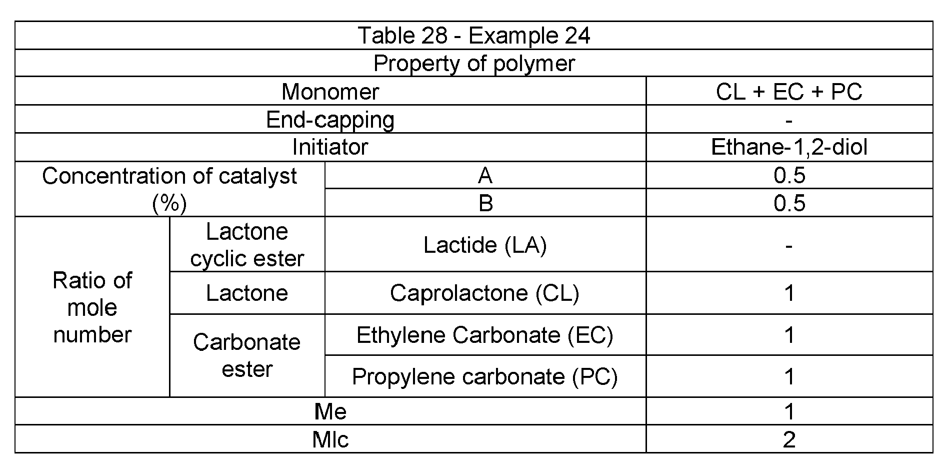

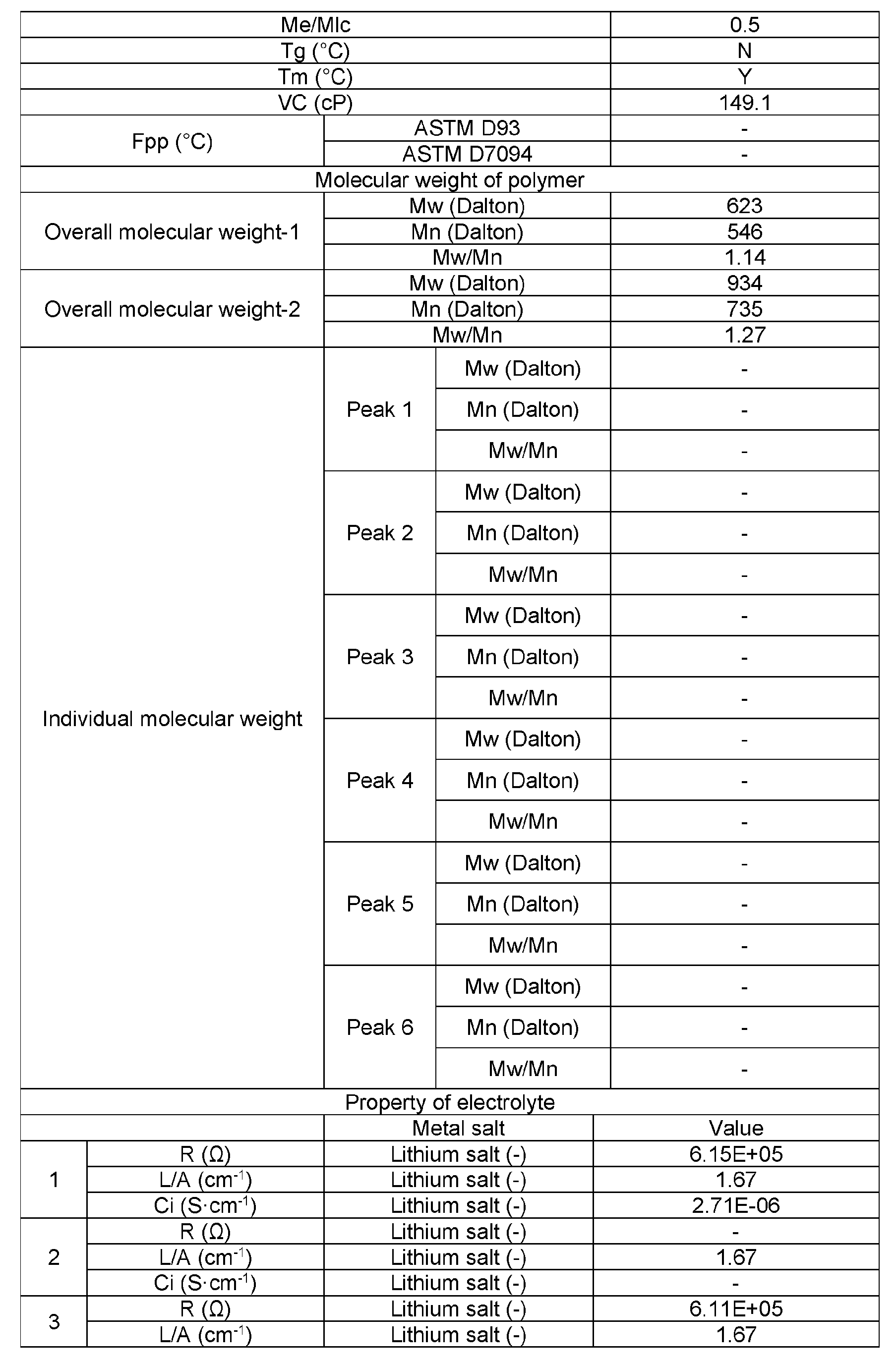

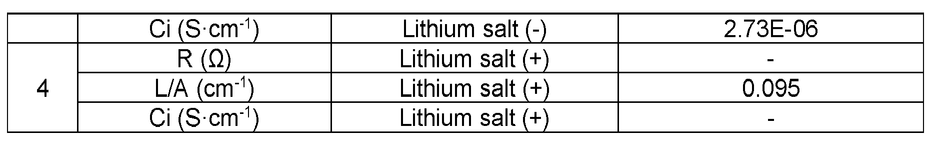

### <Example 25>

Table 29 shows the properties and the detailed data of the molecular weight of the polymer of Example 25 and the properties of the electrolyte including the polymer of Example 25.

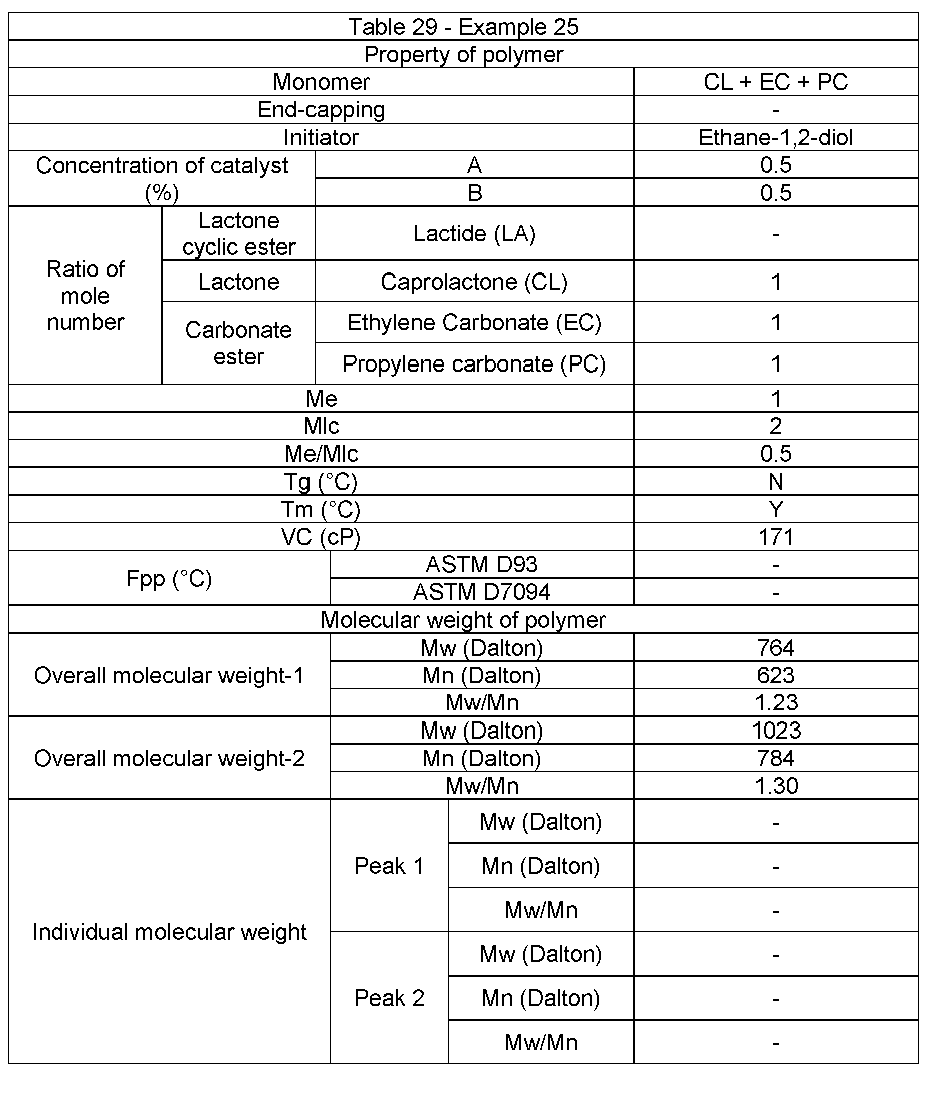

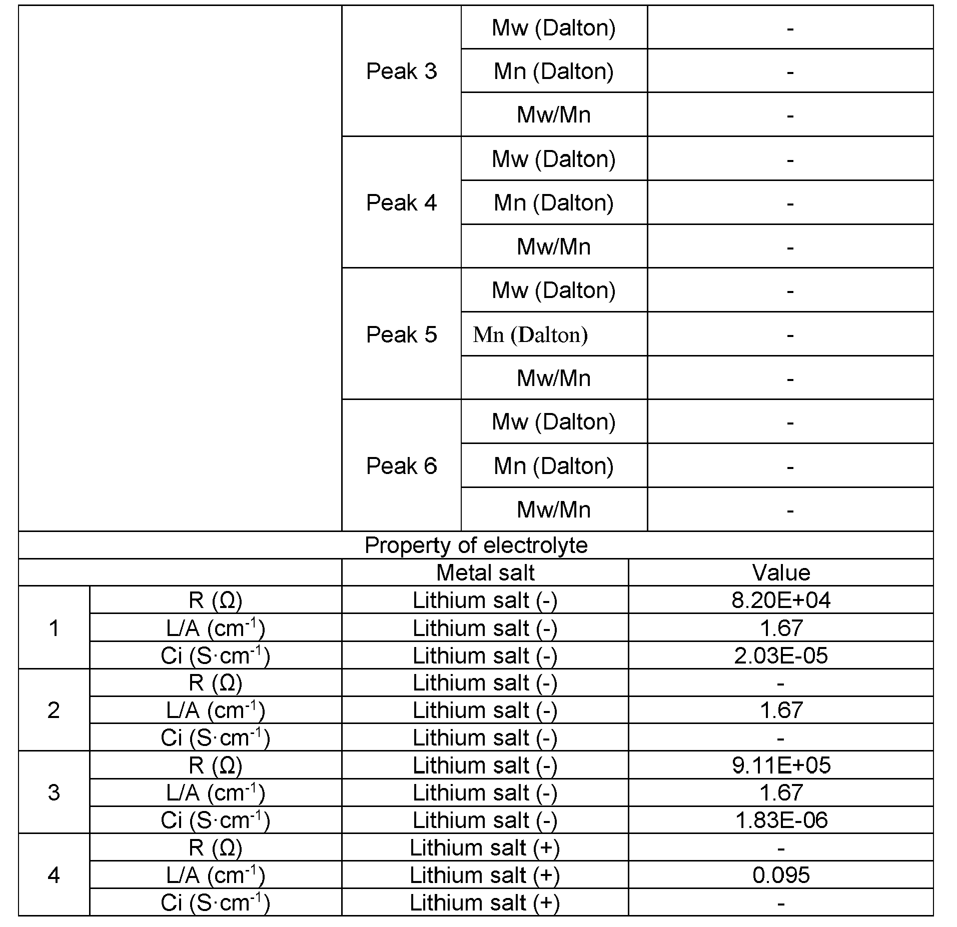

### <Example 26>

Table 30 shows the properties and the detailed data of the molecular weight of the polymer of Example 26 and the properties of the electrolyte including the polymer of Example 26.

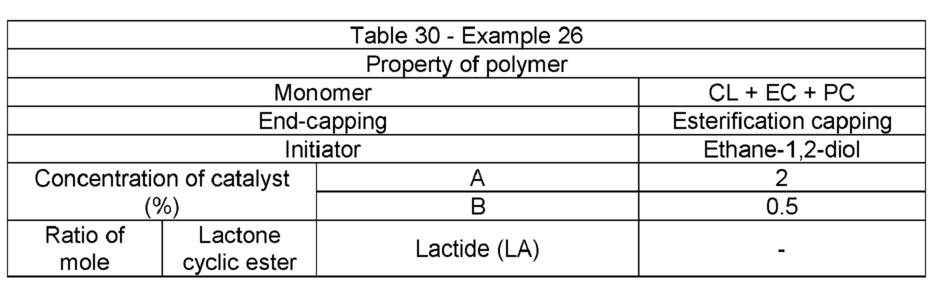

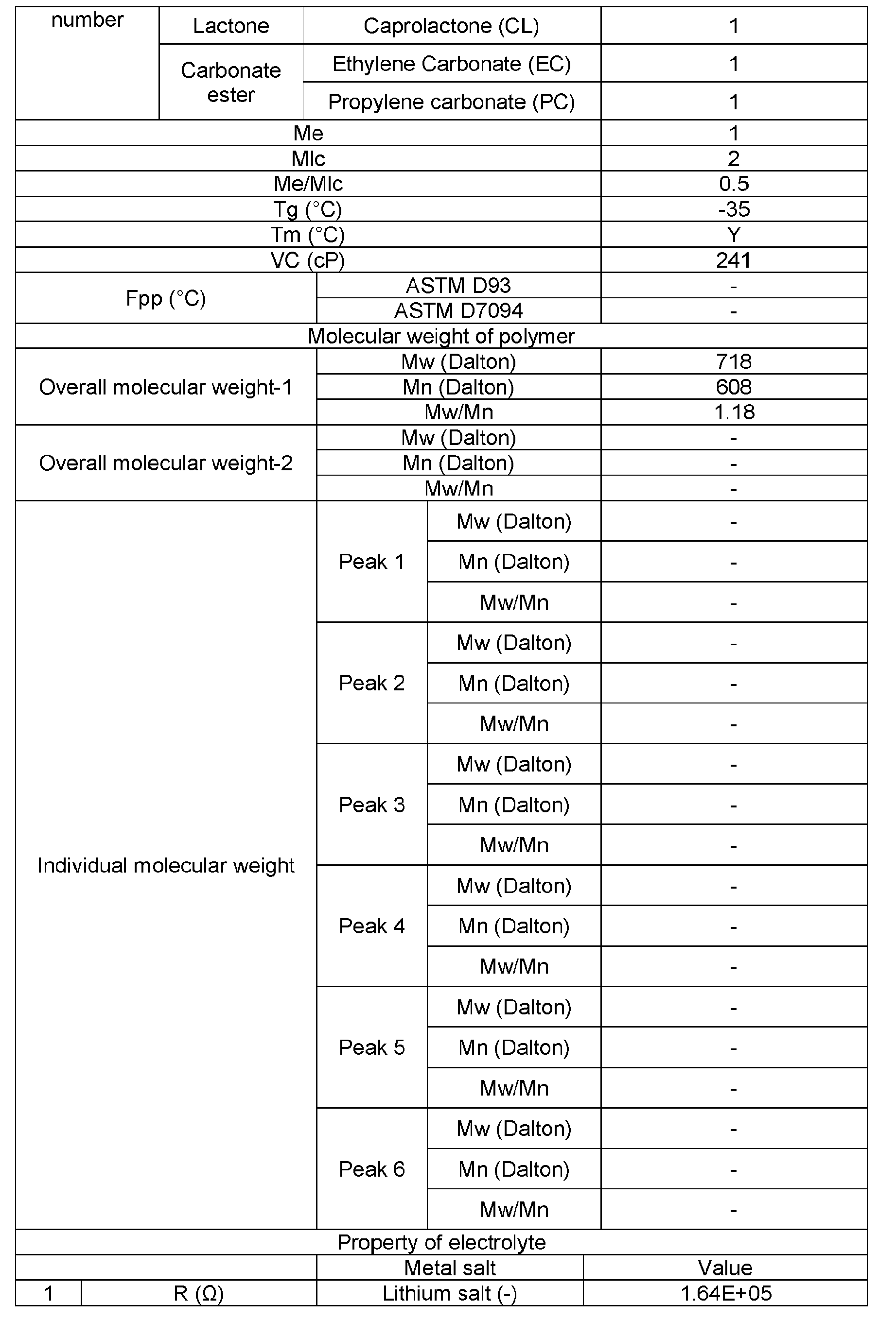

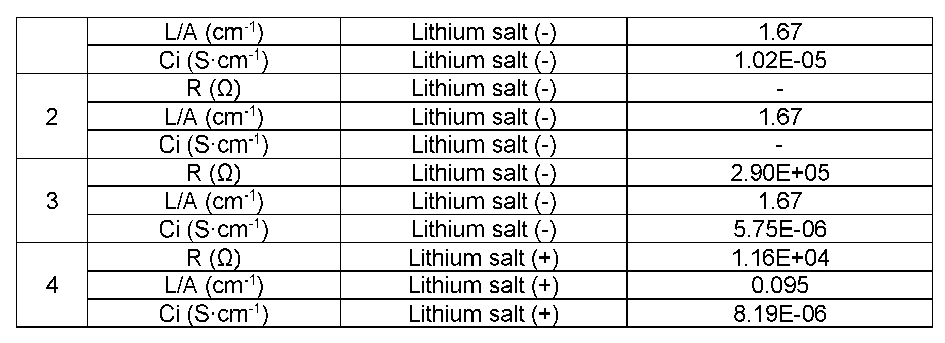

### <Example 27>

Table 31 shows the properties and the detailed data of the molecular weight of the polymer of Example 27 and the properties of the electrolyte including the polymer of Example 27.

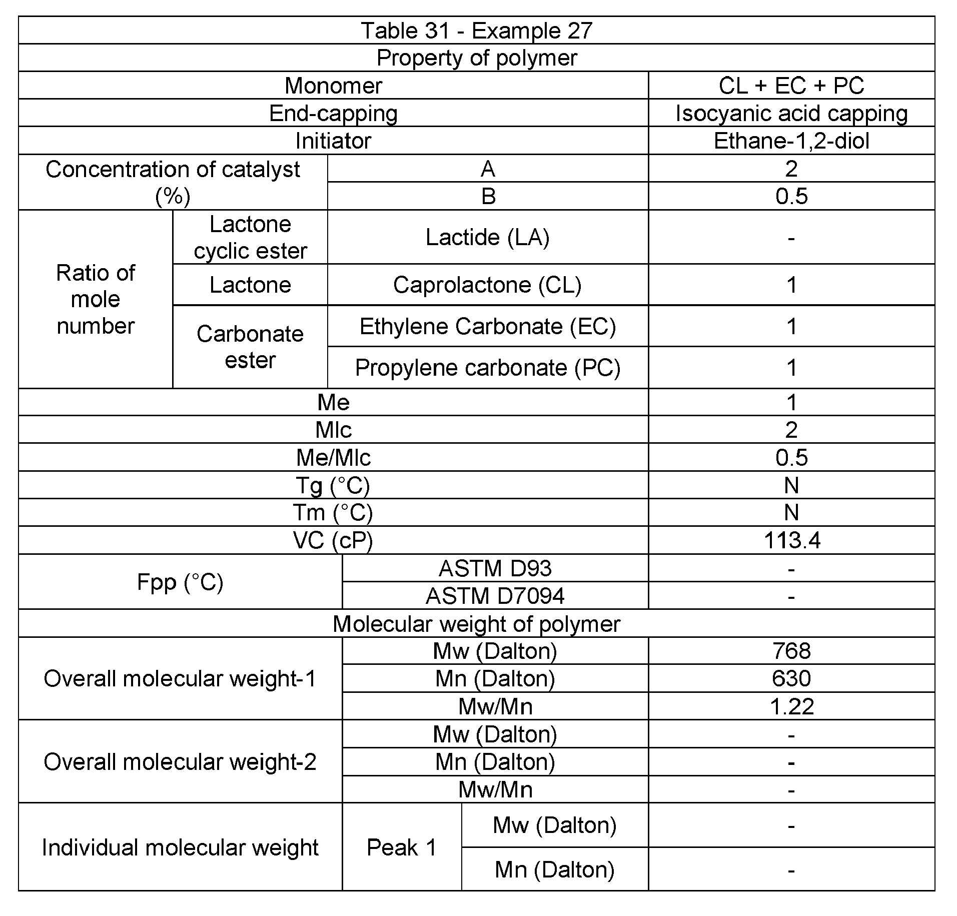

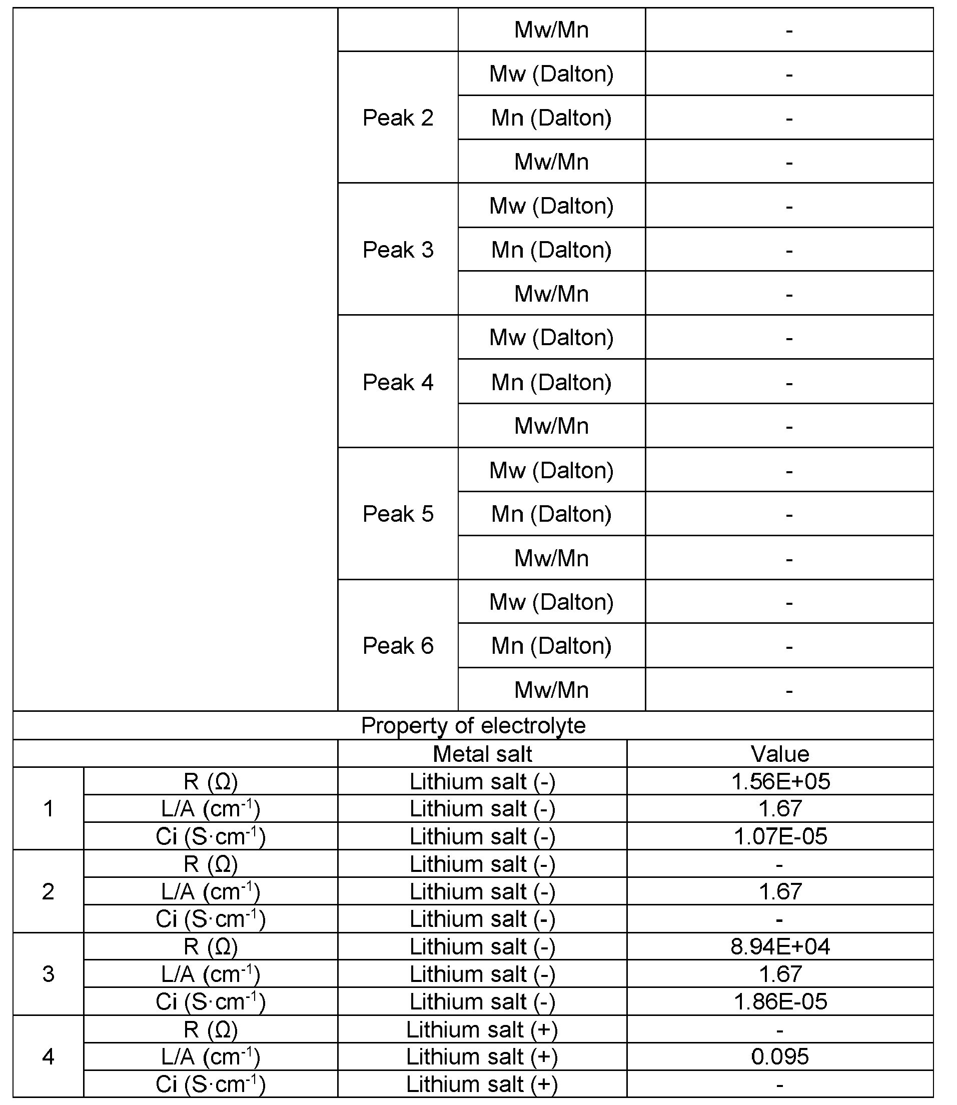

### <Example 28>

Table 32 shows the properties and the detailed data of the molecular weight of the polymer of Example 28 and the properties of the electrolyte including the polymer of Example 28.

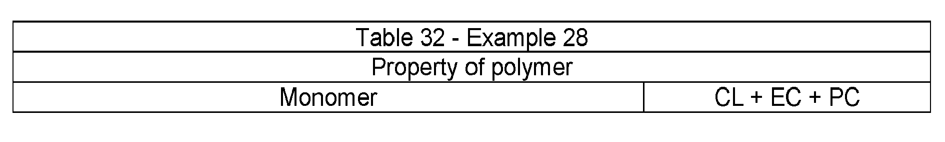

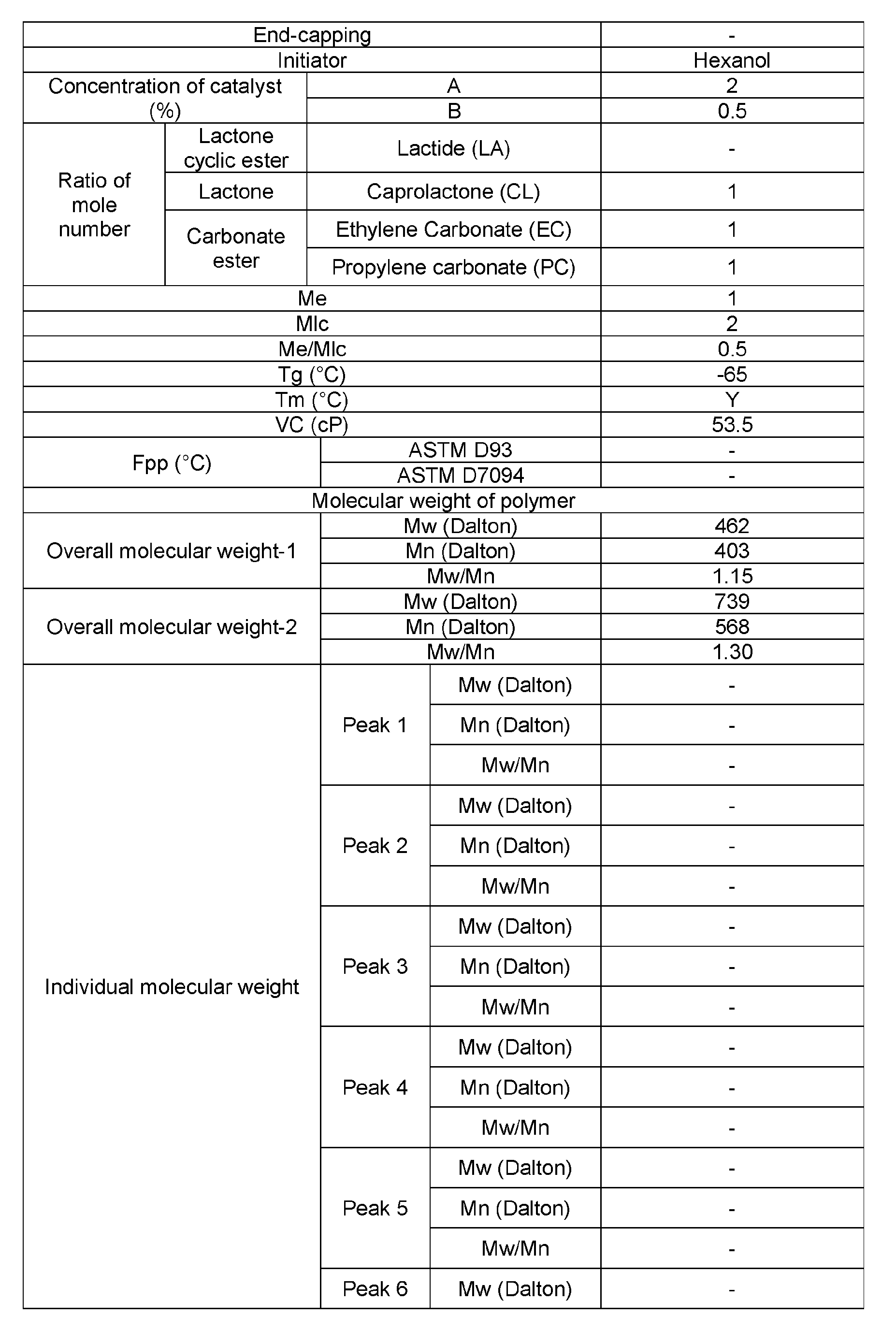

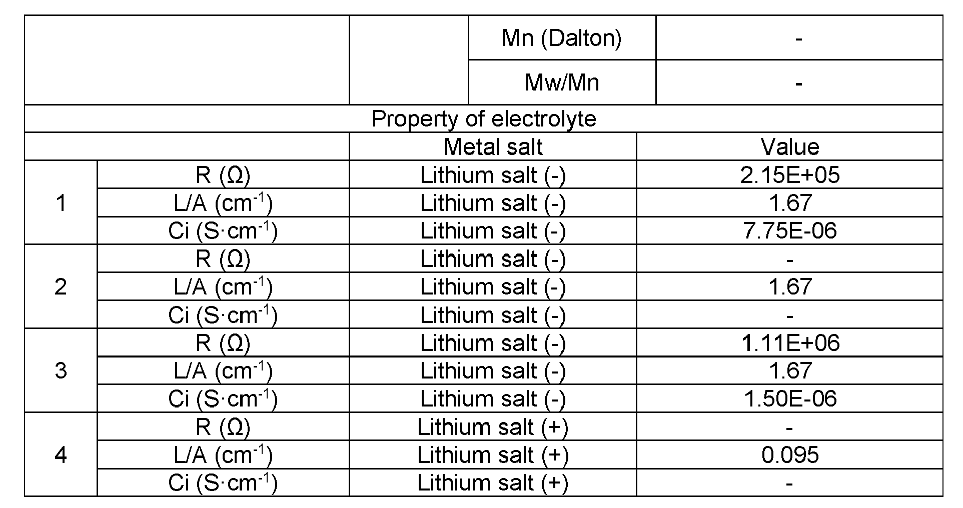

### <Example 29>

Table 33 shows the properties and the detailed data of the molecular weight of the polymer of Example 29 and the properties of the electrolyte including the polymer of Example 29.

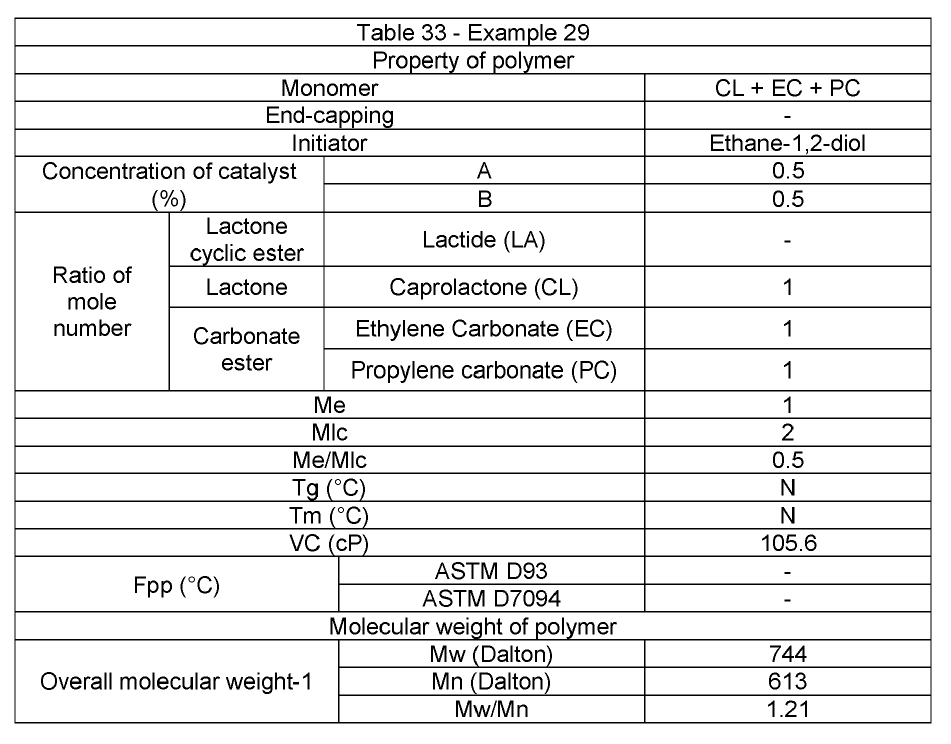

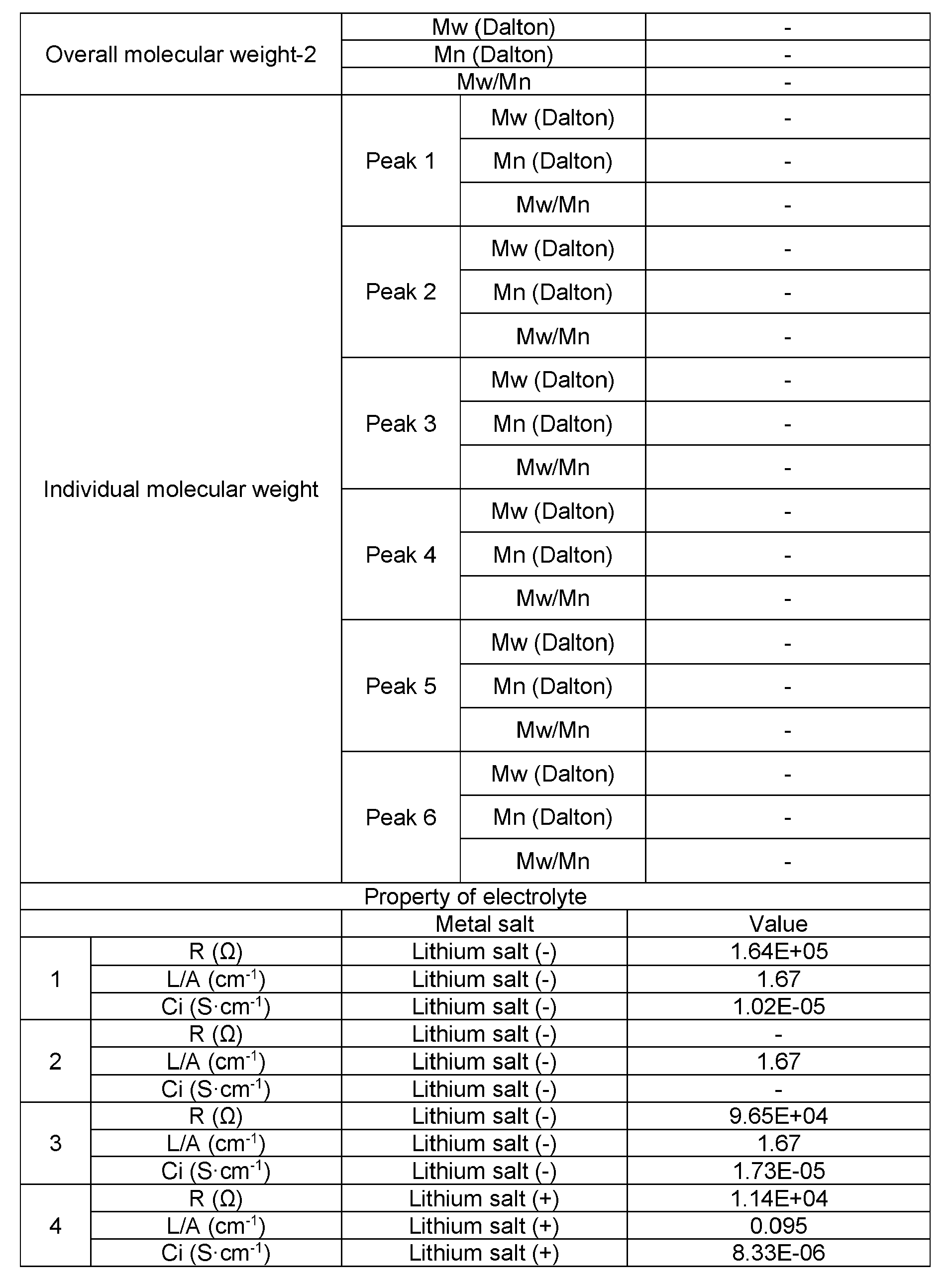

### <Example 30>

Table 34 shows the properties and the detailed data of the molecular weight of the polymer of Example 30 and the properties of the electrolyte including the polymer of Example 30.

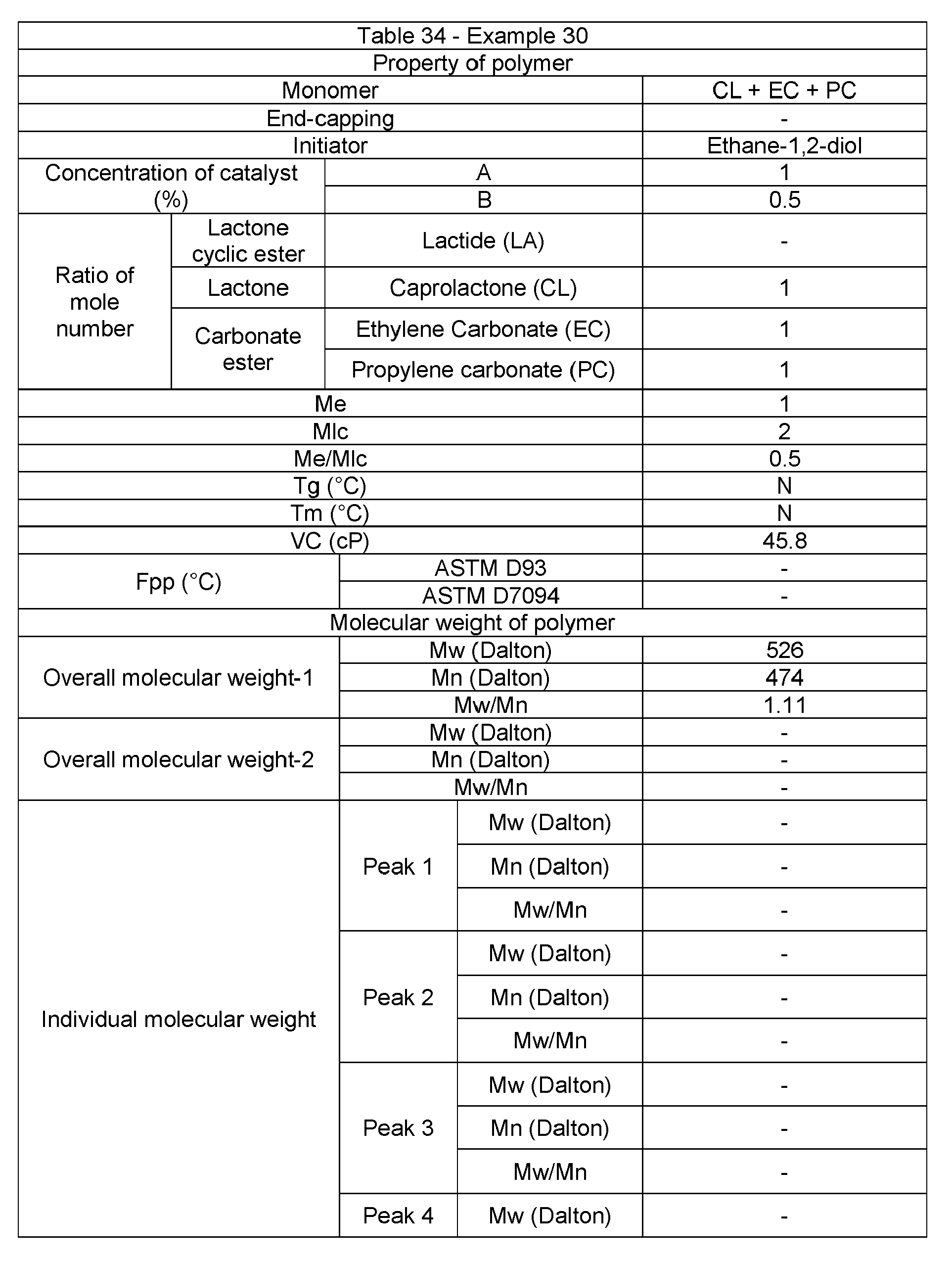

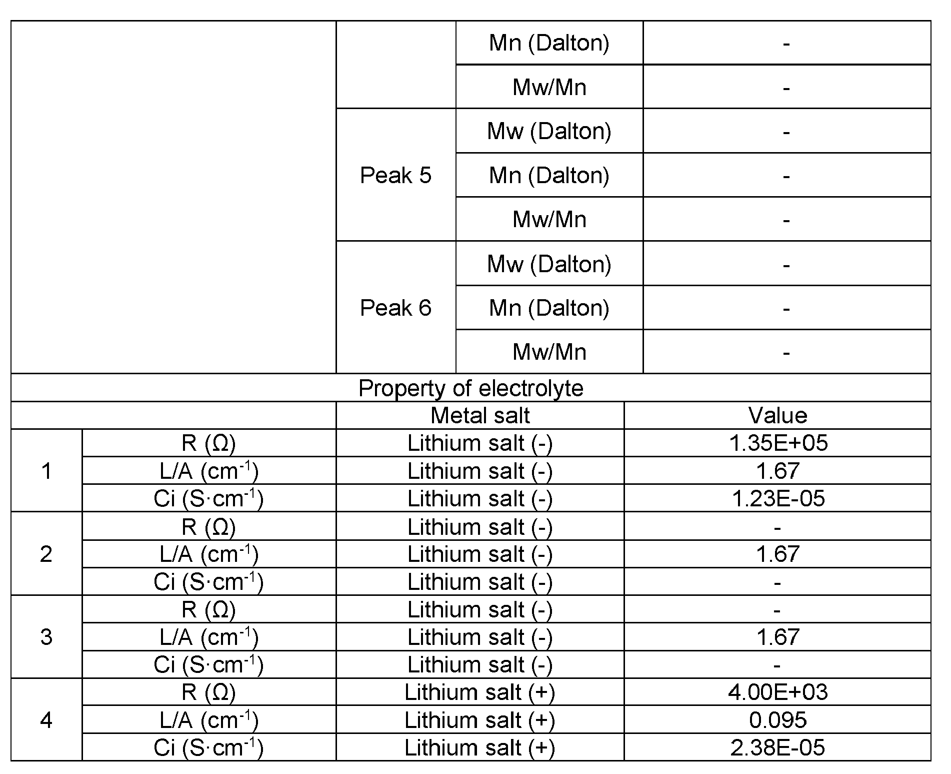

### <Example 31>

Table 35 shows the properties and the detailed data of the molecular weight of the polymer of Example 31 and the properties of the electrolyte including the polymer of Example 31.

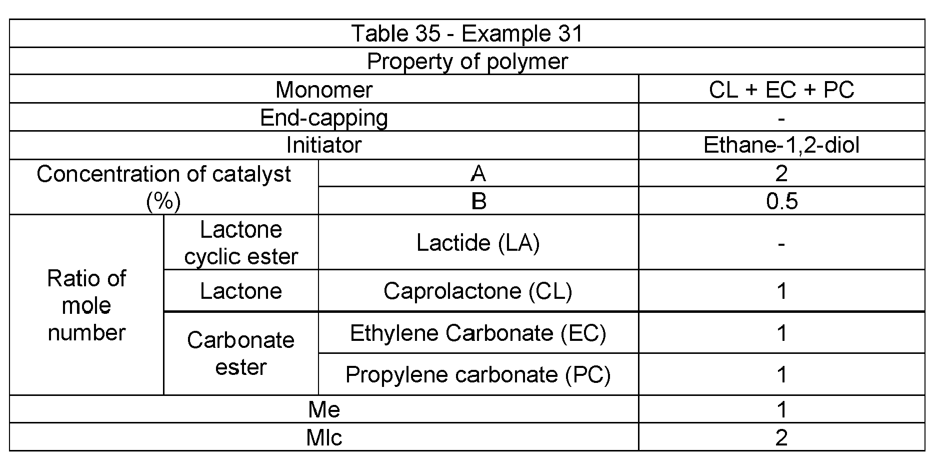

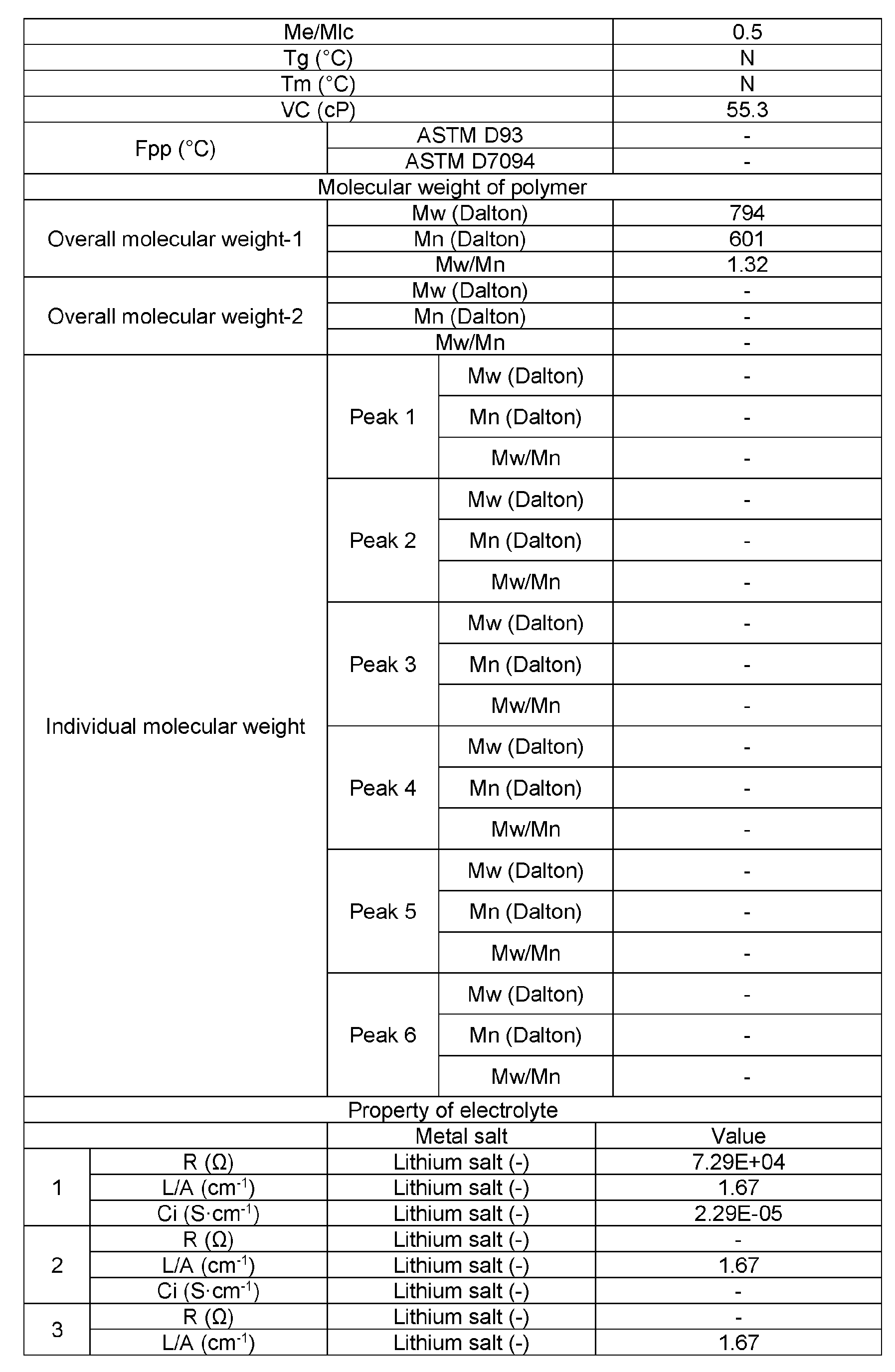

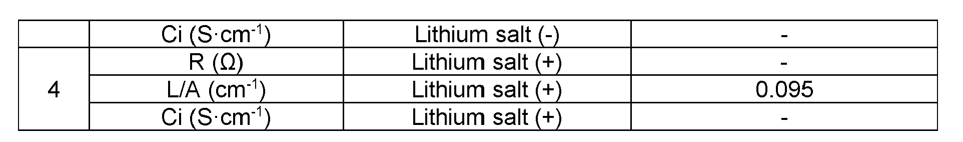

### <Example 32>

Table 36 shows the properties and the detailed data of the molecular weight of the polymer of Example 32 and the properties of the electrolyte including the polymer of Example 32.

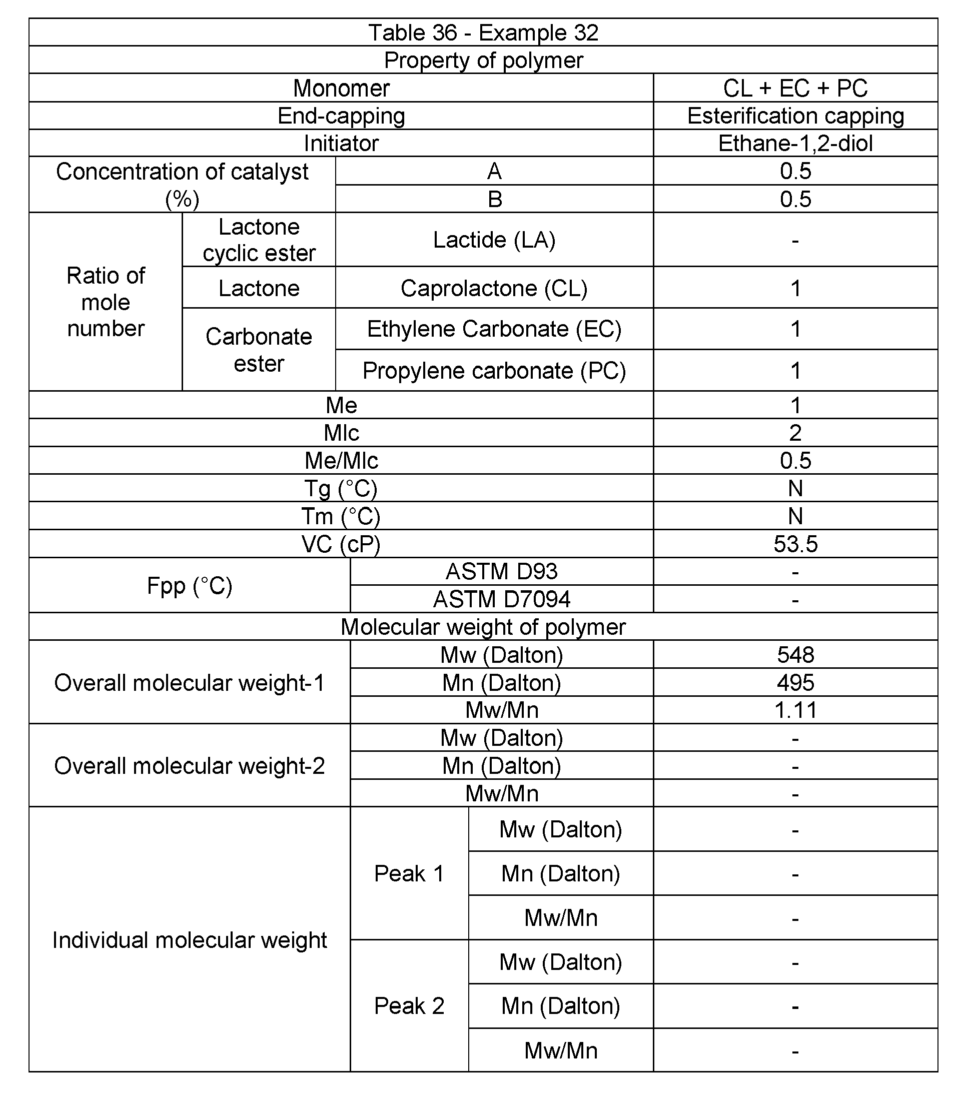

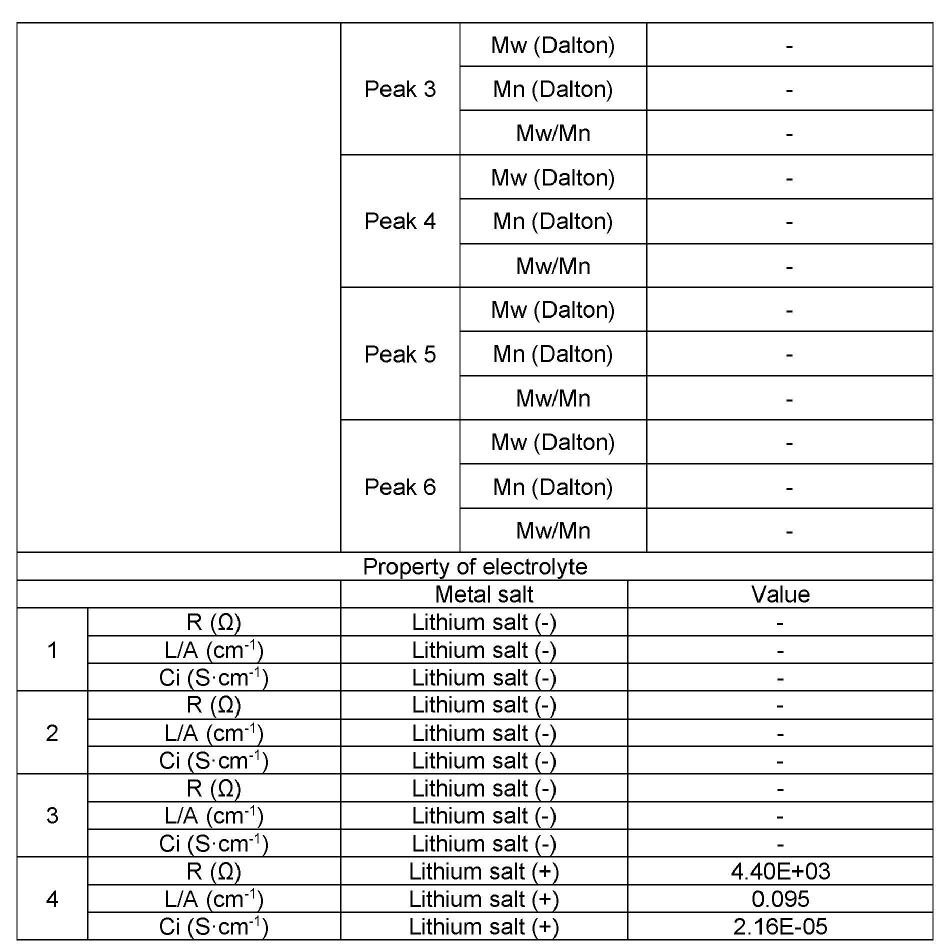

### <Example 33>

Table 37 shows the properties and the detailed data of the molecular weight of the polymer of Example 33 and the properties of the electrolyte including the polymer of Example 33.

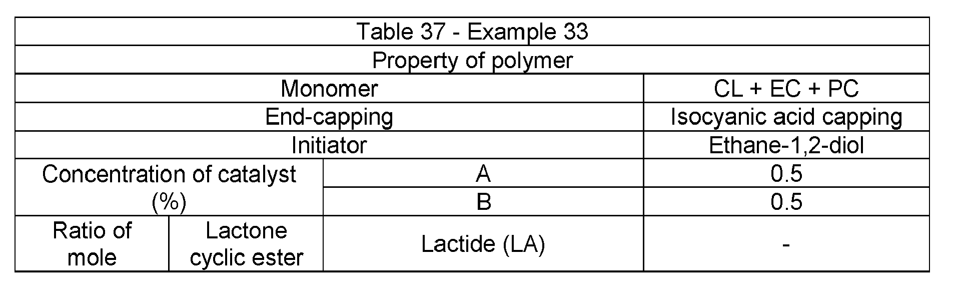

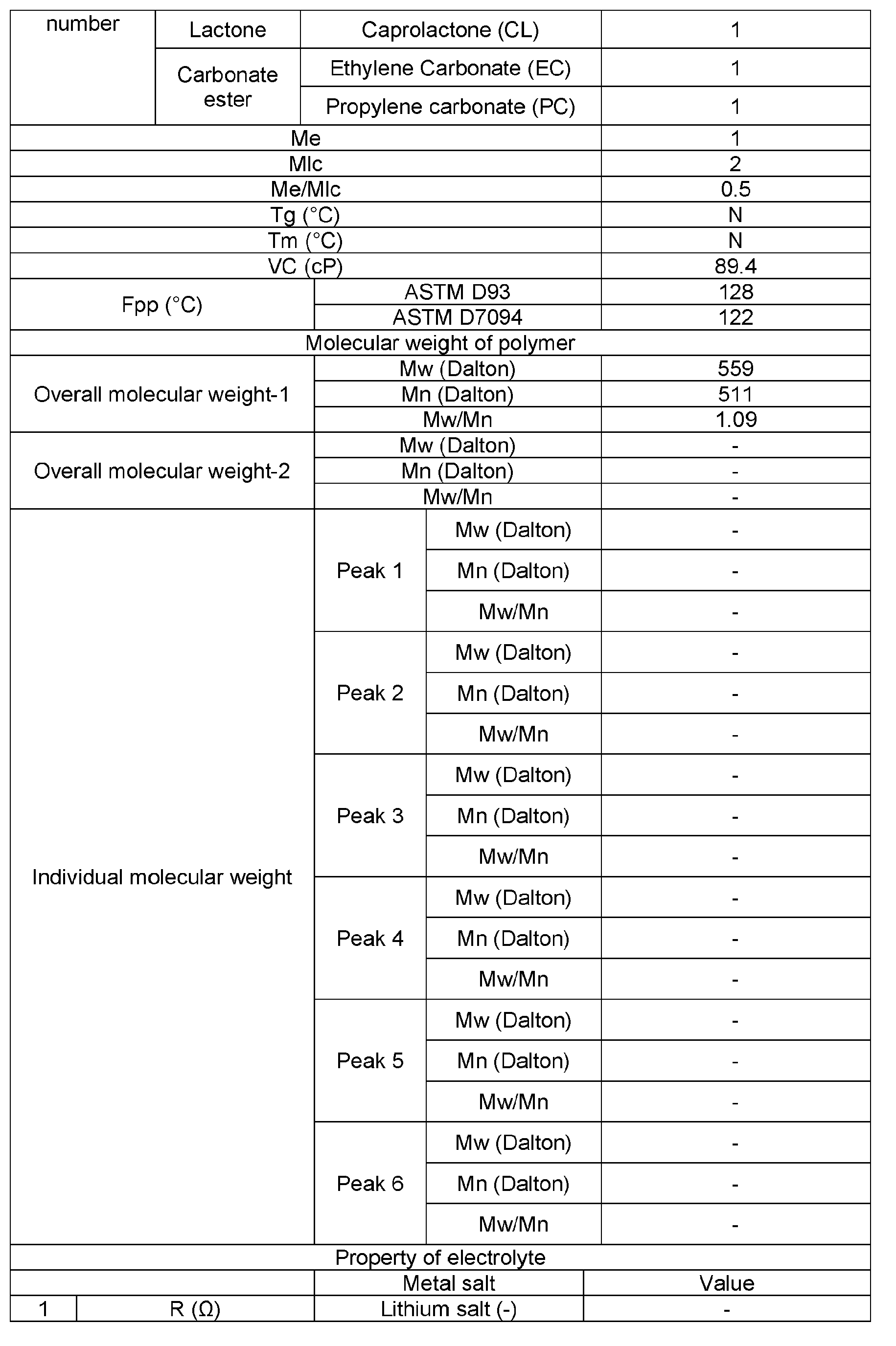

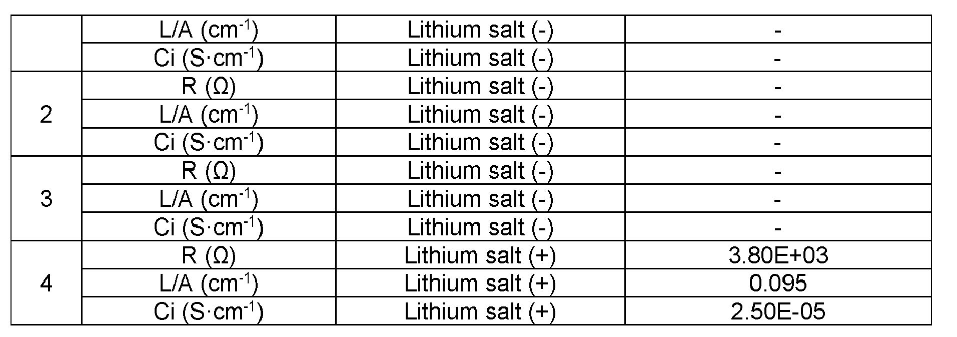

In particular, the Fpp of Example 33 measured by ASTM D93 is 128°C, and the Fpp of Example 33 measured by ASTM D7094 is 122°C.

## Claims

1. A polymer, which is a composition of a battery, wherein the polymer is polymerized by a polymeric precursor, and the polymeric precursor is **characterized in** comprising:
at least three monomers, wherein each of the monomers is a lactone, a lactone cyclic ester or a carbonate ester;
wherein the polymer comprises a polyester, the polyester is a straight chain, an end of the polymer has an inert group, and the polymer is represented by the following structure:
B-C,
wherein B is the polyester, and C is the inert group.

2. The polymer of claim 1, wherein the polymer is represented by the following structure:
A1-B-C,
wherein a polymeric precursor of A1 is a monohydric alcohol or a monobasic acid, a carbon number of the monohydric alcohol or a carbon number of the monobasic acid is at least larger than or equal to two, B is the polyester, and C is the inert group.

3. The polymer of claim 1, wherein the polymer is represented by the following structure:
C-A2-B-C,
wherein a polymeric precursor of A2 is a polyol or a polyacid, a carbon number of the polyol or a carbon number of the polyacid is at least larger than or equal to two, B is the polyester, and C is the inert group.

4. The polymer of any one of claims 1 to 3, wherein a total mole number of the lactone and the lactone cyclic ester in the polymeric precursor is Mlc, a total mole number of the carbonate ester in the polymeric precursor is Me, and the following condition is satisfied:
0 < Mlc/Me ≤ 1.

5. The polymer of any one of claims 1 to 3, wherein a total mole number of the lactone and the lactone cyclic ester in the polymeric precursor is Mlc, a total mole number of the carbonate ester in the polymeric precursor is Me, and the following condition is satisfied:
2 ≤ Mlc/Me < 50.

6. The polymer of any one of claims 1 to 5, wherein a number-average molecular weight of the polymer is Mn, and the following condition is satisfied:
100 Dalton ≤ Mn ≤ 3000 Dalton.

7. The polymer of any one of claims 1 to 6, wherein a weight-average molecular weight of the polymer is Mw, and the following condition is satisfied:
100 Dalton ≤ Mw ≤ 3000 Dalton.

8. The polymer of any one of claims 1 to 7, wherein the weight-average molecular weight of the polymer is Mw, the number-average molecular weight of the polymer is Mn, and the following condition is satisfied:
1 < Mw/Mn ≤ 2.0.

9. The polymer of any one of claims 1 to 8, wherein a viscosity of the polymer is VC, and the following condition is satisfied:
5 cP < VC < 5500 cP.

10. The polymer of any one of claims 1 to 9, wherein a glass transition temperature of the polymer is Tg, and the following condition is satisfied:
-80°C < Tg < 0°C.

11. The polymer of any one of claims 1 to 10, wherein the polymer is without a melting point in a temperature range, the temperature range is Tr, and the following condition is satisfied:
-80°C < Tr < 20°C.

12. An electrolyte, which is a composition of a battery, **characterized in** comprising:
a polymer polymerized by a polymeric precursor; and
a metal salt, wherein the polymer is uniformly mixed with the metal salt;
wherein the polymeric precursor comprises at least three monomers, each of the monomers is a lactone, a lactone cyclic ester or a carbonate ester, and the polymer comprises a polyester.

13. The electrolyte of claim 12, wherein an electrical conductivity of the electrolyte is Ci, and the following condition is satisfied:
1×10⁻⁶ S·cm⁻¹ ≤ Ci.

14. The electrolyte of claims 12 or 13, further comprising:
an additive, wherein the additive is a crown ether.

15. A battery, **characterized in** comprising:
the electrolyte of any one of claims 12 to 14;
a positive pole;
a negative pole; and
a separator disposed between the positive pole and the negative pole.

16. A polymer, which is a composition of a battery, wherein the polymer is polymerized by a polymeric precursor, and the polymeric precursor is **characterized in** comprising:
at least two monomers, wherein each of the monomers is a lactone, a lactone cyclic ester or a carbonate ester;
wherein the polymer comprises a polyester, the polyester is a straight chain, a number-average molecular weight of the polymer is Mn, and the following condition is satisfied:
100 Dalton ≤ Mn ≤ 3000 Dalton.

17. The polymer of claim 16, wherein an end of the polymer has an inert group.

18. The polymer of claims 16 or 17, wherein the polymer is represented by the following structure:
A1-B-C,
wherein a polymeric precursor of A1 is a monohydric alcohol or a monobasic acid, a carbon number of the monohydric alcohol or a carbon number of the monobasic acid is at least larger than or equal to two, B is the polyester, and C is the inert group.

19. The polymer of claims 16 or 17, wherein the polymer is represented by the following structure:
C-A2-B-C,
wherein a polymeric precursor of A2 is a polyol or a polyacid, a carbon number of the polyol or a carbon number of the polyacid is at least larger than or equal to two, B is the polyester, and C is the inert group.

20. The polymer of any one of claims 16 to 19, wherein a total mole number of the lactone and the lactone cyclic ester in the polymeric precursor is Mlc, a total mole number of the carbonate ester in the polymeric precursor is Me, and the following condition is satisfied:
0 < Mlc/Me ≤ 1.

21. The polymer of any one of claims 16 to 19, wherein a total mole number of the lactone and the lactone cyclic ester in the polymeric precursor is Mlc, a total mole number of the carbonate ester in the polymeric precursor is Me, and the following condition is satisfied:
2 ≤ Mlc/Me < 50.

22. The polymer of any one of claims 16 to 21, wherein a weight-average molecular weight of the polymer is Mw, and the following condition is satisfied:
100 Dalton ≤ Mw ≤ 3000 Dalton.

23. The polymer of any one of claims 16 to 22, wherein the weight-average molecular weight of the polymer is Mw, the number-average molecular weight of the polymer is Mn, and the following condition is satisfied:
1 < Mw/Mn ≤ 2.0.

24. The polymer of any one of claims 16 to 23, wherein a viscosity of the polymer is VC, and the following condition is satisfied:
5 cP < VC < 5500 cP.

25. The polymer of any one of claims 16 to 24, wherein a glass transition temperature of the polymer is Tg, and the following condition is satisfied:
-80°C < Tg < 0°C.

26. The polymer of any one of claims 16 to 25, wherein the polymer is without a melting point in a temperature range, the temperature range is Tr, and the following condition is satisfied:
-80°C < Tr < 20°C.

27. An electrolyte, which is a composition of a battery, **characterized in** comprising:
a polymer polymerized by a polymeric precursor; and
a metal salt, wherein the polymer is uniformly mixed with the metal salt;
wherein the polymeric precursor comprises at least two monomers, each of the monomers is a lactone, a lactone cyclic ester or a carbonate ester, and the polymer comprises a polyester.

28. The electrolyte of claim 27, wherein an electrical conductivity of the electrolyte is Ci, and the following condition is satisfied:
1×10⁻⁶ S·cm⁻¹ ≤ Ci.

29. The electrolyte of claims 27 or 28, further comprising:
an additive, wherein the additive is a crown ether.

30. A battery, **characterized in** comprising:
the electrolyte of any one of claims 27 to 29;
a positive pole;
a negative pole; and
a separator disposed between the positive pole and the negative pole.
